(19) Europäisches Patentamt
European Patent Office
Office européen des brevets

(11) **EP 4 428 850 A1**

(12) **EUROPEAN PATENT APPLICATION**
published in accordance with Art. 153(4) EPC

(43) Date of publication:
**11.09.2024 Bulletin 2024/37**

(21) Application number: **22890064.3**

(22) Date of filing: **07.11.2022**

(51) International Patent Classification (IPC):
**G10G 7/00** (2006.01)

(52) Cooperative Patent Classification (CPC):
**G10G 7/00**

(86) International application number:
**PCT/JP2022/041430**

(87) International publication number:
**WO 2023/080244 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.11.2021 JP 2021181031**

(71) Applicant: **Evertron Holdings Pte Ltd.
Singapore 369977 (SG)**

(72) Inventor: **TANAKA Hisao
Tokyo 106-0032 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **TONE OR QUALITY CONTROL DEVICE FOR MUSICAL INSTRUMENT OR THE LIKE, CONTROL METHOD, AND PROGRAM**

(57) Causing at least one of an electric field, a magnetic field, an electromagnetic field, electromagnetic waves, sound waves or ultrasonic waves generated by an electrode that has liquid inside or on a surface to act can freely control the sound quality or quality of an object. A sound quality or quality control apparatus in an embodiment of the present invention includes: at least one electrode; and a controller configured to control at least one of a voltage value, a current value, a frequency, or a phase of voltage or current applied to the electrode, in which while an object is disposed to face the electrode, the object having liquid inside or on a surface and containing at least one of wood, leather, metal, an inorganic material, an organic material, an animal- or plant-derived material, or a composite material, at least one of an electric field, a magnetic field, an electromagnetic field, electromagnetic waves, sound waves or ultrasonic waves generated by the electrode, is controlled to control a state of the liquid present inside or around the object that is disposed to face the electrode, so that a sound quality or quality of the object is controlled.

FIG.1

## Description

Technical Field

The preset invention relates to a sound quality or quality control apparatus, a control method, and a program for a musical instrument or the like.

Background Art

In an attempt to improve the sound quality of a musical instrument, Patent Literature 1 describes a piano technique in which a soundboard is made of wood and a frame is made of metal to generate a natural and rich sound by superimposing sounds of different tones.

Patent Literature 2 discloses a structure for noise processing in a double coil pickup in electric guitars.

Patent Literature 3 reports an attempt to examine the influence of electromagnetic waves on liquids regarding the quality of objects.

Patent Literature 4 discloses a technique for a golf club, in which a score line having a specific angle with respect to a horizontal virtual line is disposed in each of an upper region and a lower region of a face surface. The score line in the lower region allows the face surface to easily bite a ball, thereby enhancing the effect of increasing the magnitude of spin, while the score line in the upper region facilitates removal of moisture or the like to enhance the effect of maintaining the magnitude of spin.

Patent Literature 5 discloses that fully aromatic polyester with a moisture absorption rate of 0.6% is used for a tennis gut to suppress a reduction of repulsion force and improve wear resistance caused by moisture absorption, and also to maintain creep performance that reduces the looseness of the gut.

Non-patent Literature 1 discloses how the sound wave conduction characteristics of wood depend on the moisture content.

Citation List

Patent Literature

[0008]

　　　Patent Literature 1: JP-A-2014-142409
　　　Patent Literature 2: JP-A-2005-208659
　　　Patent Literature 3: WO2019/132046
　　　Patent Literature 4: JP-A-2002-291949
　　　Patent Literature 5: JU-A-S64-042069

Non Patent Literature

Non-patent Literature 1: Velocity and Damping of Ultrasonic Waves in Wood with Various Moisture Contents by Yasuyoshi Kodama, in Materials (J. Soc. Mat. Sci., Japan), Vol.41, No. 461, P144-147, February 1992

Summary of Invention

Technical Problem

Patent Literature 1 states that the tone of a piano is adjusted according to the material of the piano. However, it is difficult to apply this technique to existing pianos because a drastic change in the structure of the piano is required for the tone adjustment.

Patent Literature 2 states that the sound quality of an electric guitar is adjusted by changing a noise processing structure. However, therein lies a problem that a major modification in the structure of a double coil pickup is required for adjusting the sound quality.

Patent Literature 3 states that electromagnetic waves influences the state of moisture in food products, though the control of the food product quality, such as those related to a sugar content and an acidity, is not covered.

Patent Literature 4 states that the magnitude of spin is adjusted by improving the shape of the score line of a golf club. However, the magnitude of spin depends on the amount of humidity and moisture when the golf club is used, and Patent Literature 4 does not cover how to control the quality, such as that related to the magnitude of spin and a flying distance, without changing the structure of the golf club such as the shape of the score line.

Patent Literature 5 states that fully aromatic polyester with a moisture absorption rate of 0.6% is used for a tennis gut to suppress repulsion force reduction due to moisture absorption and to improve wear resistance. However, Patent Literature 5 does not cover the measures for controlling the product quality, such as that related to the gut repulsion force, abrasion resistance, and creep performance, without changing the structure of the gut or a tennis racket.

Non Patent Literature 1 covers the sound wave conduction characteristics of wood, and it does not cover the topic of controlling the sound quality or the quality of wood.

An object of the present invention is to provide a sound quality or quality control apparatus, a sound quality or quality control method, or a sound quality or quality control program, in which at least one of an electric field, a magnetic field, an electromagnetic field, or electromagnetic waves generated by an electrode is caused to act on an object having liquid inside or on a surface to freely control the sound quality or quality of the object.

Solution To Problem

The object of each embodiment of the present invention can be achieved by the following configuration. Specifically, a sound quality or quality control apparatus in one aspect of the present invention includes: at least one electrode; and a controller configured to control at least one of a voltage value, a current value, a frequency, or a phase of voltage or current applied to the electrode, in which while an object is disposed to face the electrode, the object having liquid inside or on a surface and containing at least one of wood, leather, metal, an inorganic material, an organic material, an animal- or plant-derived material, or a composite material, at least one of a voltage value, a current value, a frequency, or a phase of the voltage or the current, having a DC component and/or an AC component to be applied to the electrode, is adjusted, and at least one of an electric field, a magnetic field, an electromagnetic field, or electromagnetic waves, generated by the electrode, is controlled to control a state of the liquid present inside or around the object that is disposed to face the electrode, so that a sound quality or quality of the object is controlled. Advantageous Effects of Invention

The embodiments of the present invention can freely control the quality of the object by causing at least one of an electric field, a magnetic field, an electromagnetic field, or electromagnetic waves generated by an electrode to act on an object containing, for example, wood, leather or the like.

Brief Description of Drawings

FIG. 1 is a conceptual view of an electrode according to a first embodiment.

FIG. 2 is a schematic view of water molecules, FIG. 2A illustrates water molecules in a freely moving state, and FIG. 2B illustrates water molecules in a pearl-chain structure.

FIG. 3 is a photomicrograph of free water, FIG. 3A showing a state of the free water before application of an electric field and FIG. 3B showing a state of the free water after the application of the electric field.

FIG. 4 illustrates potential simulation results of water particles, FIG. 4A being a diagram illustrating a simulation model and FIG. 4B illustrating a potential simulation result.

FIG. 5 is a graph of interfacial tension between cooking oil and water as a result of changing the frequency and voltage value (0 to 75 V) of the voltage applied.

FIG. 6 is a graph of interfacial tension between cooking oil and water as a result of changing the frequency and voltage value (0 to 150 V) of the voltage applied to the electrode.

FIG. 7 includes photographs showing dropping of droplets in oil.

FIG. 8 includes photographs showing fine particles around droplets in oil.

FIG. 9 is a conceptual view of electrodes according to a first modification of the first embodiment.

FIG. 10 is a conceptual view of a different electrode according to the first modification of the first embodiment, FIG. 10A illustrates an example where a single electrode is used, and FIG. 10B illustrates an example where a single electrode and two electrodes facing the electrode are used.

FIG. 11 is a diagram illustrating waveforms according to a second modification of the first embodiment in cases where voltage with different frequencies are used.

FIG. 12 is a diagram illustrating waveforms according to the second modification of the first embodiment in cases where voltage with different phases are used.

FIG. 13 is a block diagram illustrating a moisture control apparatus according to a third modification of the first embodiment.

FIG. 14 is a graph showing sweeping of a voltage value, a current value, and a frequency according to a fourth modification of the first embodiment.

FIG. 15 illustrates application to a guitar or a guitar case.

FIG. 16 illustrates the result of a sensory test on acoustic guitars.

FIG. 17 illustrates the result of a sensory test about tones obtained when electric guitars are connected to an amplifier.

FIG. 18 illustrates the result of a sensory test on wood basses.

FIG. 19 illustrates the result of a sensory test on ukuleles.

FIG. 20 illustrates a bat case.

FIG. 21 illustrates a table tennis racket case.

FIG. 22 illustrates quality control processing of strawberries using a quality control apparatus according to a third embodiment.

FIG. 23 illustrates quality control processing of tobacco leaves using a quality control apparatus according to a fourth embodiment.

FIG. 24A illustrates control data for sugar concentration and cell concentration in the quality control apparatus in the fourth embodiment.

FIG. 24B illustrates control data for growth promotion and inhibition for each exposure time in the quality control apparatus in the fourth embodiment.

FIG. 24C illustrates control data for growth promotion and inhibition over a culture period in the quality control apparatus in the fourth embodiment.

FIG. 24D illustrates control data for a specific consumption rate in the quality control apparatus in the fourth embodiment.

FIG. 24E illustrates control data for variation suppression in the quality control apparatus in the fourth embodiment.

FIG. 25 is a perspective view of a food thawing apparatus according to a seventh embodiment.

FIG. 26 illustrates a comparison result in the food thawing apparatus according to the seventh embodiment.

FIG. 27 includes comparative photographs of tuna thawed by the food thawing apparatus according to the seventh embodiment.

FIG. 28 is a perspective view of a wagon according to an eighth embodiment.

FIG. 29 shows the comparison of the effects of the wagon according to the eighth embodiment.

FIG. 30 illustrates conservation of cherry blossoms according to a ninth embodiment.

FIG. 31 illustrates a cultivation experiment of perilla according to a tenth embodiment.

FIG. 32 illustrates a rust prevention experiment according to an eleventh embodiment.

FIG. 33 illustrates an example where electrodes according to a twelfth embodiment are provided to an existing refrigerator.

FIG. 34 illustrates an example where the electrodes according to the twelfth embodiment are provided to an existing container.

FIG. 35 illustrates an example where the electrodes according to the twelfth embodiment are provided to an existing fryer.

FIG. 36 illustrates another embodiment relating to an arrangement of electrodes.

FIG. 37 illustrates still another embodiment relating to an arrangement of electrodes.

FIG. 38 illustrates another embodiment relating to the shape of electrodes.

FIG. 39 illustrates another embodiment of the electrodes for a fryer.

FIG. 40 illustrates another embodiment of a cylindrical electrode.

FIG. 41 illustrates another embodiment of a comb-shaped electrode.

Description of Embodiments

The following describes an acoustic quality or quality control apparatus, a control method, and a program for musical instrument or the like according to some embodiments of the present invention with reference to the accompanying drawings. The following embodiments are intended to illustrate an acoustic quality or quality control apparatus, a control method, and a program for musical instrument or the like for embodying the technical concept of the present invention, and are not intended to limit the present invention to these embodiments. The present invention is equally applicable to any other embodiments within the scope of the appended claims. While the respective embodiments illustrate "moisture" such as free water and the like as liquid contained inside or on the surface of an object, examples of the moisture contained inside or on the surface of an object according to the present invention are not limited to water, but can be applied to any liquids such as an aqueous solution, an emulsion, an oil, an electrolyte solution, an organic solvent, an ionic fluid, a viscous fluid, a non-viscous fluid, a compressive fluid, a non-compressive fluid, and any other liquids. The expression "moisture" may sometimes be used in the respective embodiments, but this is not intended to limit the liquid to water alone, and is widely applicable to any liquid.

[First embodiment]

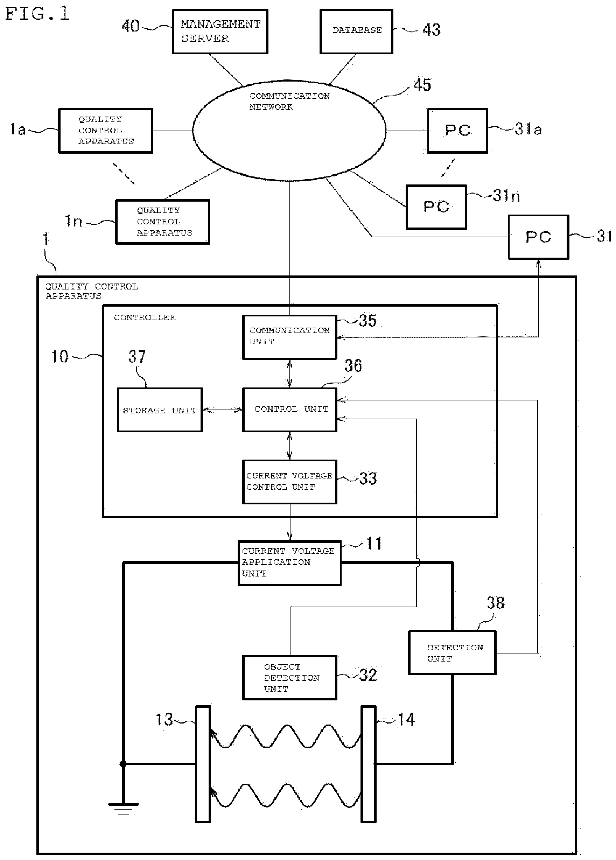

A control apparatus, a control method, a program, and a storage medium according to a first embodiment will be described with reference to FIG. 1 to FIG. 19.

FIG. 1 is a conceptual diagram of a quality control apparatus 1. The quality control apparatus 1 includes a controller 10 and a pair of electrodes 13 and 14. The controller 10 includes a current voltage control unit 33, a control unit 36, a communication unit 35, and a storage unit 37. The electrodes 13 and 14 are supplied with at least one of DC voltage or AC voltage from a current voltage application unit 11 controlled by the current voltage control unit 33. The current and/or voltage applied to the electrodes 13 and 14 is detected by a detection unit 38 and fed back to the control unit 36. An object detection unit 32 (e.g., a camera) is also provided to detect the type and/or size of an object disposed in a space between the electrodes 13 and 14. In an actual circuit configuration of the controller 10, the current voltage application unit 11 and the detection unit 38 may be integrated with the controller 10. For example, the controller 10 and the current voltage application unit 11 may be integrated with each other and accommodated in a single housing.

The detection unit 38 may also be provided in the electrodes 13 and 14 so as to detect the state of generated electromagnetic waves. In this case, the detection unit 38 configured to detect the state of electromagnetic waves may be integrated with the electrodes 13 and 14. It is also possible to integrate a cable for the detection unit 38 with a cable for the electrodes 13 and 14, and in such a case, routing the cable would become easier. The electrodes 13 and 14 may also be used as a unit configured to detect the generation status of an electromagnetic field. In this case, although the detection unit 38 includes a current and/or voltage detection unit, the current voltage application unit 11 can also detect current and/or voltage. Therefore, the current and/or voltage detection unit of the detection unit 38 can be integrated with the current voltage application unit 11, and can further be integrally incorporated into the housing of a controller or the like. Moreover, when the current and/or voltage detection unit of the detection unit 38 detects data, values relating to generation of electromagnetic waves are superimposed on the data. Accordingly, the electromagnetic waves generated in the electrodes 13 and 14 can be detected from the detection data.

Although the object detection unit 32 can be integrated with the controller, the object detection unit 32 may alternatively be configured separately from the controller 10 in order to prevent enlargement due to addition of a camera or the like, and also for the convenience of the arrangement of the camera or the like. FIG. 1 illustrates an example where a pair of electrodes 13 and 14 are provided. However, the present embodiment is not limited to this, and the number of the electrodes may be any number as long as the number is one or more, and various shapes can be adopted as will be described later. For example, when the whole of electrodes 13 and 14 is a single electrode, an object may be disposed so as to face the electrode. When the object detection unit 32 detects the type, the state, the size or the like of an object disposed to face the electrodes 13 and 14, the control unit 36 calculates a control command value in response to the detection of the object. According to the control command value, the current voltage control unit 33 controls the current voltage application unit 11 to control current and voltage applied to the electrodes 13 and 14, so that at least one of an electric field, a magnetic field, an electromagnetic field or electromagnetic waves is applied to the object disposed to face the electrodes (hereafter, expressions such as "an electromagnetic field is applied", "irradiated with electromagnetic waves", or "an electric field is applied" are used in certain parts, but these expressions are not intended to limit the electromagnetic field, the electromagnetic waves, and the electric field. Rather, the expressions include the magnetic field, the electromagnetic field or the electromagnetic waves.). At this time, the electromagnetic field applied to an object is controlled, by the control unit 36, to be in a desired state, which depends on the control command that has been calculated by the feedback control based on the detection value from the detection unit 38.

The communication unit 35 communicates with a management server 40, a database 43, other PCs 31a to 31n, and other quality control apparatuses 1a to In to receive control parameters and/or control values from the management server 40. The storage unit 37 stores programs, and the control unit 36 including CPU and the like can operate using the programs stored in the storage unit 37. The control unit 36 controls the current voltage application unit 11, based on the control parameters and/or the control values received from the management server 40, via a current voltage control unit 33 built in the controller 10, to control current and/or voltage applied to the electrodes 13 and 14. The programs can be rewritten from the management server 40 via the communication unit 35. The programs may be stored in a removable memory such as a flash memory, so that the programs for the controller 10 can be rewritten by using the removable memory. Furthermore the programs can be set or rewritten by using a man-machine interface 31 connected to the communication unit 35.

The management server 40 includes the functions, such as updating or performing maintenance of the program of the controller 10, surveying or monitoring the use status of the controller 10, collecting or analyzing position information or environmental information on the controller 10, collecting or analyzing improvement request information from the controller 10, performing maintenance of the controller 10, collecting control information from the controller 10 and/or information from the database 43, generating and providing learning model information for the controller 10, providing control information based on the learning model information, or providing control parameters of the controller 10.

For surveying or monitoring the use status of the controller 10, the management server 40 can constantly collect the control information on the controller 10, and therefore the management server 40 has the functions of constantly discerning the use status of the controller 10 to perform surveillance or monitoring. Here, the monitoring function includes discerning the state of a user using the quality control apparatus 1 corresponding to the controller 10 by analyzing how and how much the user uses the quality control apparatus 1 in which time band. For example, when a certain restaurant uses the quality control apparatus, the management server 40 can discern a business status, a visitor status, a cooking status, a preparation status, or other statuses, of the restaurant. In the case of an individual user, the management server 40 can discern a life status, a safety status or the like of the individual as a user, based on the use status of the quality control apparatus. Therefore, when the management server 40 determines that there is an abnormality in the quality control apparatus 1, it is possible to notify the abnormality to the pertinent user and to also notify the abnormality to registered contacts and emergency contacts such as police and fire departments.

For collecting or analyzing position information or environmental information on the controller 10, the management server 40 can collect, from the controller 10, position information, climate information, regional information or the like about the place where the quality control apparatus 1 is disposed, and the management server 40 can discern the position information or the environmental status about the place where the quality control apparatus 1 is used. For example, management server 40 can thus transmit control information corresponding to the operating environment or the like to the controller 10.

For collecting or analyzing improvement request information from the controller 10, the management server 40 can collect, from the controller 10, the improvement request information that is input into the controller 10 from the PC 31, or can collect the improvement request information, which is input from the PC 31 that communicates with the controller 10, directly from the PC 31. The improvement request information includes information such as requests for improvement of the quality control apparatus 1 from users, evaluations of the control results, and request items. These pieces of improvement request information are analyzed in the management server 40 and used to set control parameters of each quality control apparatus 1.

For the maintenance of the controller 10, the management server 40 can collect and survey information such as an operating status of the controller 10, the status of programs, the status of apparatus control parameters, the information stored in the storage unit 37, the statue of devices, and the environmental status of the quality control apparatus, to perform maintenance of the programs of the controller 10, the control parameters, detection information, control result information, various setting parameters, and the content of stored data in the storage unit. The content of maintenance includes, but is not particularly limited to, setting or update of programs, setting or update of control parameters and setting parameters, and setting or update of the learning model described later. Various operating status information, control information or the like, collected from the controller 10 and/or the information collected from the database 43 are used for deep learning in the management server 40 as described later. Learning model information trained by deep learning and/or control parameters or the like calculated by the learning model are provided to the controller 10 of each of the quality control apparatuses 1.

The controller 10 is connected to an object detection unit 32 configured to detect the type and/or the state of an object disposed between the electrodes. Thus, the controller 10 recognizes the type and/or the state of the object and controls the current voltage application unit 11 incorporated therein, to achieve output voltage and/or output current suitable for the type, state, size and the like of the object. The current voltage application unit 11 has a function that is at least one of DC-DC conversion, DC-AC conversion, AC-DC conversion, and AC-AC conversion as described later. For example, the current voltage application unit 11 can be a variable voltage variable frequency (VVVF) inverter. The current voltage application unit 11 can apply, to the electrodes 13 and 14, voltage/current that is DC voltage/current superimposed on AC voltage/current.

The man-machine interface 31 communicates with the controller 10, and thus a user can set and operate the controller by inputs from the man-machine interface 31.

Examples of the man-machine interface 31 include a display, a touch panel, a keyboard, and a mouse. When the controller 10 is operated by a smartphone, a mobile phone, a tablet terminal, a mobile terminal, or a personal computer such as a laptop computer (hereinafter, the man-machine interface 31 may be simply referred to as "PC"), the smartphone or the like can also have the functions of the man-machine interface 31, the communication unit 35, and the like.

By communicating with the controller 10, the PC 31 can perform setting of the control parameters, update of the control program or the like, and can also survey the status, such as an operational status and a control status of the controller 10. When the PC 31 and the controller 10 are connected via a communication network, the PC 31 can perform setting, operation, surveillance and the like of the controller 10 from a remote location.

The quality control apparatus 10 is connected to an external power supply (not illustrated). The external power supply may be an AC power supply or a DC power supply. The DC power supply may be a battery including a primary cell, a secondary cell, and the like. If the quality control apparatus 1 can be moved, conveyed, or carried around, it is convenient to use a battery as the external power supply 39 in terms of securing power supply.

The controller 10 performs feedback control on at least one of values of current and/or voltage applied to the electrode, their frequencies, and their phases on the basis of a detection signal from a detection unit 38, which will be described later.

A processing target object is disposed between the electrodes 13 and 14. The processing target object is not particularly limited as long as the object is at least one of solid, liquid, and gas. Various objects can be the processing target as will be described later.

The controller 10 is connected to a communication network 45 via the communication unit 35 or via the PC 31, and the communication network 45 is connected to the management server 40, the database 43, quality control apparatuses 1a to 1n, and PCs 31a to 31n. The management server 40 can collect, from the controller 10, the control information including detection data from the object detection unit 32 and/or the detection unit 38 via the communication unit 35 or the PC 31. The management server 40 uses data from the database 43, information from each of the quality control apparatuses 1 and 1a to 1n, and information from each of the PCs 31 and 31a to 31n, to calculate a learning model for obtaining control parameters of the controller by machine learning such as deep learning, for example. The management server 40 transmits the trained learning model or calculation parameters obtained by the trained model, to the controller 10 of each of the quality control apparatuses 1 and 1a to 1n. The controller 10 uses the learning model in the control unit 36 to calculate parameters adaptive to an object disposed to face the electrodes 13 and 14, based on the detection data from the object detection unit 32 and/or the detection unit 38, or uses adaptive parameters transmitted from the management server 40 in the control unit 36 to perform arithmetic calculation for the current voltage control unit 33 to control the current and/or voltage to be applied from the current voltage application unit 11 to the electrodes 13 and 14. The storage unit 37 stores a control program. The controller 10 is controlled based on the control program. Since the control program is rewritable from the management server 40, it is possible to update and upgrade the program in a timely manner. It is also possible to set, change, and update the control program from the PC 31. In addition, various control parameters of the controller 10 can be set and changed by the PC 31. Although an example where the controller 10 is controlled based on the control program has been described here, the present embodiment is not limited to this. For example, the controller 10 without a microcomputer can perform quality control by applying to an object an electromagnetic field corresponding to the object. The control by the controller 10 is not limited to the feedback control, but may be open-loop control that can provide a constant output, for example. It is also possible to use the controller 10 that manually inputs, sets, and changes the setting values.

[Electrode]

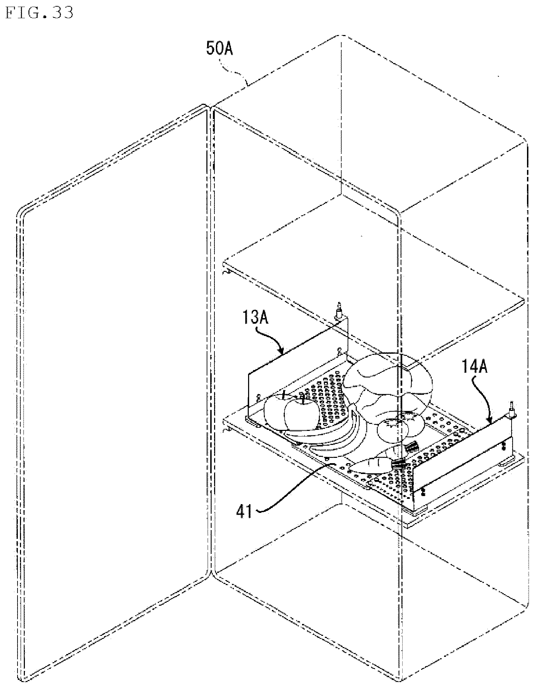

In FIG. 1, the pair of electrodes 13 and 14 are illustrated as electrodes in a form of a plate as an example. However, the electrodes 13 and 14 are not limited to the plate form, and may be in a form of a foil, a film, or a layer, and can also have various shapes such as a rod shape, a spherical shape, a semi-spherical shape, a cylindrical shape, a semi-cylindrical shape, a conical shape, a semi-conical shape, a substantially L shape, a substantially rectangular U shape, a polygonal shape, a polygonal columnar shape, a polygonal pyramid shape, a curved shape, or a bent shape (see FIG. 33 to FIG. 41 and the like referenced later). The electrodes 13 and 14 in a form of a foil and a film can have an extremely small thickness, and thus are space saving. Furthermore, such electrodes 13 and 14 can have a shape freely designed and are light weight. Thus, such electrodes 13 and 14 can be easily installed. The electrode of a layer form includes a thin-film electrode provided to be stacked on a predetermined substrate, for example.

The shape of the electrodes 13 and 14 is not limited to a flat plate shape, and may be any shape. When the electrodes 13 and 14 in a form of a foil are used, the electrodes can be shaped as desired to conform to the shape of their installed locations. For example, the electrodes can be in a form of a curved shape.

The electrodes 13 and 14 may be provided with a plurality of through holes. With the plurality of through holes provided, the electrodes can have improved characteristics for generating electromagnetic waves and air permeability, and can also ensure visibility through the electrodes. The holes can have various shapes such as a circular shape, an elliptical shape, a polygonal shape, a slit shape, a linear shape, or a combination of these. For example, hexagonal holes may be provided.

The material of the electrodes 13 and 14 is not particularly limited as long as the material has conductivity. For example, conductive metal such as copper, iron, stainless steel, aluminum, titanium, gold, silver, and platinum, an alloy of these metals, a conductive material such as a conductive oxide or a conductive glass, or the like is used. The electrodes 13 and 14 may have surfaces coated with an insulating material. For example, when the electrodes are provided to a fryer, an inner surface of the fryer and the electrodes are insulated from each other. For example, when the electrodes are provided on an inner surface of a container, the inner surface of the container and the electrodes are preferably insulated from each other. The pair of electrodes 13 and 14 may be made of different materials. For example, the material of the electrode 13 may be stainless steel and the material of the electrode 14 may be titanium. Furthermore, combinations between stainless steel and aluminum, between stainless steel and copper, and the like may be employed. By changing the materials of the electrodes 13 and 14, the characteristics of the electromagnetic waves generated from the electrodes can be adjusted. In such a case, the characteristics of the electromagnetic waves can also be adjusted by exchanging the materials of the electrode 13 and the electrode 14. As will be described later, the number of electrodes is not limited to one pair, and may be set as appropriate to be one, three or more, two pairs or more, or the like. Also in these cases, the characteristics of the electromagnetic waves generated from the electrodes can be adjusted by appropriately selecting the material of each electrode. For example, the characteristics of the electromagnetic waves generated from two pairs of electrodes can be adjusted with one pair of electrodes made of stainless steel and the other pair of electrodes made of copper. The electrodes 13 and 14 generate at least one of an electric field, a magnetic field, an electromagnetic field, electromagnetic waves, sound waves, and ultrasonic waves. When only the sound waves or the ultrasonic waves are generated, the material of the electrodes 13 and 14 is not limited to a conductive material. For example, non-conductive material such as resin may be used.

A dedicated housing may be provided for installation of the quality control apparatus 1. However, this should not be construed in a limiting sense, and the quality control apparatus 1 may be installed in an existing housing, for example. The existing housing in which the quality control apparatus 1 can be installed can be selected from various housings including: a refrigerator, a freezer, a refrigerating warehouse, a freezer warehouse, a storage house, a warehouse, a refrigerator car, a freezing car, a cooler box, a container for transport, a container for storage, a showcase, a shelf, a drawer, a fryer, a cultivation container (for hydroponics, etc.), a fuel tank, a PC, a mobile phone, a chair bed, furniture, bedding, home appliances, various manufacturing equipment in a factory, processing equipment, medical equipment, health equipment, beauty equipment, cooking equipment, polishing equipment, vehicles, semiconductor cleaning equipment, and equipment for controlling vapor resulting from cooling during a refining step, a baking step, and a drying step.

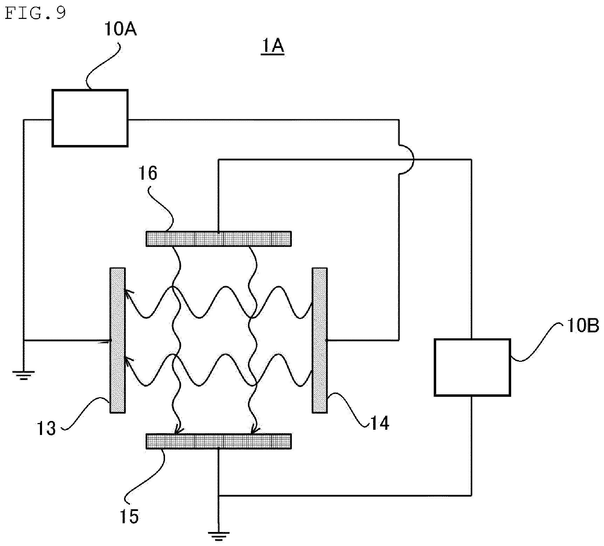

In a case of the refrigerator, for example, the pair of electrodes 13 and 14 can be arranged along a ceiling surface and a bottom surface in the refrigerator, along side wall surfaces facing each other, along the ceiling surface, a tray, and the bottom surface, along the ceiling surface, the bottom surface, and the side surface, or along an inner surface of the door and a back side surface. In a case of the fryer, for example, the electrodes are provided along both inner side surfaces of an oil container. Thus, the pair of electrodes 13 and 14 may be in any arrangement as long as they face each other. The pair of electrodes do not need to be arranged in parallel, and may be in an orthogonal positional relationship. Thus, the electrodes can be in any arrangement as long as the space to accommodate the processing target object can be provided between the electrodes. The number, arrangement, and shape of the electrodes are not particularly limited. The number of electrodes is not limited to one pair, and may be one, three or more, or two pairs or more, as can be seen in FIGS. 9, 10, and 23 to 30 described later, for example.

The quality control apparatus 1 is not limited to the installation in a housing, and can be disposed at any location as long as the pair of electrodes 13 and 14 can be disposed. For example, any location such as a shelf or a wall can be used as long as the pair of electrodes 13 and 14 can be disposed to face each other. Furthermore, a screen shaped member can be used to fix the electrodes 13 and 14, for example. For example, a chopping board may be used. The number of electrodes is not limited to one pair, and may be one, three or more, or two pairs or more, as can be seen in FIGS. 9, 10, and 23 to 30 described later, for example.

[Voltage applied to electrode]

The controller 10 can apply, to the pair of electrodes 13 and 14, at least any one of the DC component voltage and the AC component voltage. The DC component voltage is not particularly limited, and the output voltage, the electrode potential, or the interelectrode voltage of the controller 10 can be adjusted between 0 V and 5000 V, for example, can be adjusted between 0 V and 2000 V, for example, can be adjusted between 0 V and 500 V, for example, can be adjusted between 0 V and 200 V, for example, can be adjusted between 0 V and 100 V, for example, can be adjusted between 5 V and 20 V, for example, and can be adjusted between 10 V and 15 V, for example. In accordance with the target, a low voltage may be applied or a high voltage may be applied. The low voltage may be, for example, a voltage of about 1.5 V to 50 V The polarity may be positive or negative. Thus, when both positive and negative polarities are taken into consideration in the example of the adjustment between 0 V and 200 V, the voltage can be adjusted between -200 V and +200 V When both positive and negative polarities are taken into consideration, the voltage can be adjusted between -5000 V and +5000 V, for example, can be adjusted between -2000 V and +2000 V, for example, can be adjusted between -500 V and +500 V, and, for example, can be adjusted between -200 V and +200 V

A DC power supply or an AC power supply may be used for the power supply voltage. When the DC power supply is used, a battery featuring excellent portability can be used as the power supply, for example. On the other hand, when the AC power supply is used, a commercial power supply can be used, for example, meaning that the power supply can easily be ensured. The power supply voltage may be AC voltage of 100 V to 400 V, for example, DC voltage of 5 V to 20 V, for example, and DC voltage of 10 V to 15 V, for example. When expressed in terms of the spatial electric field, it can be adjusted between -2000 V/cm and +2000 V/cm, for example, can be adjusted between -500 V/cm and +500 V/cm, or, for example, can be adjusted between -200 V/cm and +200 V/cm.

At least the DC component voltage is applied to the pair of electrodes 13 and 14. Thus, only the DC component voltage may be applied with the AC component voltage set to be 0 V, for example.

The orientation of the DC component voltage may be positive (+) or negative (-). In the present embodiment, the orientation of the DC component voltage is positive when the potential of the electrode 14 is higher than the potential of the electrode 13 (ground potential), and is negative when the potential of the electrode 14 is lower than the potential of the electrode 13. The effect of improving the property of the object is obtained with the positive DC component voltage and with the negative DC component voltage.

To the pair of electrodes 13 and 14, the AC component voltage can be applied in addition to the DC component voltage. Furthermore, only the AC component voltage may be applied with the DC component voltage set to be 0 V. The frequency of the AC component voltage is not particularly limited, and can be adjusted between 0 and 1 MHz, for example, can be adjusted between 0 Hz and 500 kHz, for example, can be adjusted between 0 Hz and 200 kHz, for example, and can be adjusted between 0 Hz and 100 kHz, for example.

When the AC component voltage has 0 Hz, it is substantially the DC voltage. Depending on the target, the voltage may be used in a lower frequency band or in a higher frequency band. In the lower frequency band, the frequency band of about 1 Hz to 50 Hz may be used, for example.

The voltage of the AC component voltage is not particularly limited, and the spatial electric field/cm between peaks can be adjusted between 0 and 2000 Vpp/cm, for example, can be adjusted between 0 and 500 Vpp/cm, for example, and can be adjusted between 0 and 200 Vpp/cm, for example. In terms of the unit of voltage, the output voltage of the controller 10, the electrode potential or the interelectrode voltage can be adjusted between 0 and 5000 Vpp, for example, can be adjusted between 0 and 2000 Vpp, for example, can be adjusted between 0 and 500 Vpp, for example, and also can be adjusted between 50 and 250 Vpp, for example, relative to the electrodes. For example, as the voltage applied to the above-described electrodes, the voltage of 0 to 5000 Vpp can be supplied. The voltage can be adjusted between 0 and 2000 Vpp, for example, can be adjusted between 0 and 500 Vpp, for example, and also between 50 V and 250 Vpp, for example. Depending on the target, a low voltage may be used or a high voltage may be used. As the low voltage, the voltage of about 1.5 Vpp to 50 Vpp may be used, for example.

Note that the application of the DC component voltage results in high effect of improving the property of the object. Still, such an effect can be obtained also with the application of the AC component voltage only with the DC component voltage being 0 V Hereinafter, in principle, [Vpp] is used as a unit to represent a peak-to-peak voltage value, and [V] is used to represent the effective value of the voltage.

As escribed above, the voltage of the external power supply may be DC voltage or AC voltage, and the external power supply may be an AC power supply or a DC power supply. For example, a commercial power supply can be used as the AC power supply. For example, the DC power supply may be a battery including a primary cell and a secondary cell. Furthermore, various batteries such as 12-V battery and a dry cell can be used.

For adjusting the voltage value of the DC component voltage in the controller 10, a method of performing voltage control on the DC power supply by a DC-DC converter, a method of performing the voltage control by the DC-DC converter when the AC power supply is rectified by an AC-DC converter or after the AC power supply has been rectified, and the like can be employed. The voltage value and the frequency of the AC component voltage can be controlled in the controller 10 with methods including: a method of controlling the DC power supply with a DC-AC converter (inverter); a method of rectifying the AC power supply with an AC-DC converter and then controlling the resultant power supply with a DC-AC converter (inverter); and a method of controlling the AC power supply with an AC-AC converter.

When the target voltage value of the DC component voltage is equal to the power supply voltage of the DC power supply, the power supply voltage of the DC power supply may be directly used as the DC component voltage. Similarly, when the target voltage and the target frequency of the AC component voltage are equal to the power supply voltage of the AC power supply, the power supply voltage of the AC power supply may be directly used as the AC component voltage.

The DC component voltage and the AC component voltage are added, that is, the DC component voltage is added as offset voltage to the AC component voltage, and the resultant voltage is applied between the pair of electrodes 13 and 14. For example, when the AC component voltage is controlled through power conversion using the DC-AC converter, the DC component voltage may also be controlled.

The AC component of voltage applied to an electrode includes sinusoidal voltage. However, the AC voltage component according to the present embodiment is not limited to sinusoidal voltage, and includes voltage of any waveform such as rectangular waveforms or PWM waveforms. The sinusoidal wave and the rectangular wave are not limited to the sinusoidal wave and the rectangular wave in a strict sense, and indicate waveforms taking noise, distortion, and the like into consideration. The DC component of the voltage applied to the electrode is not limited to constant voltage, and DC component voltage varying over time may also be used.

A voltage controlling unit in the controller 10 may be any of an analog circuit, a digital circuit, and a circuit obtained by combining analog and digital circuits. For example, sinusoidal voltage may be generated by the analog circuit, or equivalent sinusoidal waves can be generated with the PWM waveform. For example, as a circuit that generates voltage with a rectangular waveform, a digital circuit may be used, and an analog circuit can also be used.

The controller 10 controls voltage or current to be applied to the electrodes 13 and 14 to be at least one voltage or current selected from the group consisting of:

(1) voltage or current that reduces an interfacial tension of an object;

(2) voltage or current that prevents food and drink or a liquid from becoming rotten,

(3) voltage or current that contributes to at least one of fresh flower preservation, drinking water preservation, hydroponic cultivation promotion or environmental improvement, germination rate improvement, hatching rate improvement, aquarium antifouling or purification, water quality improvement, rock sugar growth promotion, fuel reforming, or fuel efficiency improvement;

(4) voltage or current that contributes to at least one of preservation of blood or blood components, improvement in symptoms of diabetes, improvement in symptoms of chronic kidney disease, improvement in artificial dialysis, improvement of blood flow, revascularization, improvement in symptoms of peripheral neuropathy, improvement in symptoms of arthropathy or rheumatism, organ preservation, antitumor effect, improvement in symptoms of ischemia, improvement in symptoms of lymphatic edema, improvement in symptoms of bed sores, necrosis prevention or improvement, improvement in symptoms of circulatory diseases, or infection control;

(5) voltage or current that improves efficiency of at least one of charging or discharging of a capacitor, a generator, or a power transmission facility;

(6) voltage that promotes emulsification or generation of an emulsion or voltage or current that achieves a longer emulsion state maintained period;

(7) voltage or current that increases the effect of an air purifier or an ionizer;

(8) voltage or current that separates atoms or molecules into types;

(9) voltage for controlling temperature or humidity in a space;

(10) voltage or current that separates moisture from at least one of bacteria, germs, viruses, or microorganisms; and

(11) voltage or current that facilitates chemical polishing, mechanical polishing, chemical-mechanical polishing, or magnetic polishing.

[Control by controller]

The quality control apparatus 1 is driven by the controller 10 and an electric field is generated between the pair of electrodes 13 and 14. In this case, the electrodes 13 and 14 function as an antenna, and an electromagnetic field is generated with electromagnetic waves radiated between the electrodes 13 and 14. The electrodes 13 and 14 may also be vibrated by an electric, magnetic, or mechanical unit, so that sound waves and/or ultrasonic waves can be generated between the electrodes. An example of the unit that can be used for generating the sound waves and/or ultrasonic waves between the electrodes includes a piezoelectric element. Thus, at least one of an electric field, a magnetic field, an electromagnetic field, electromagnetic waves, sound waves, and ultrasonic waves is generated between the electrodes 13 and 14. With the sound waves and/or ultrasonic waves used in addition to the electric field, magnetic field, electromagnetic field, or electromagnetic waves, a higher effect of improving the characteristics of an object can be achieved.

The controller 10 performs feedback control on at least one of the values of the current and/or the voltage applied to the electrode, the frequency of the current and/or the voltage, and the phase of the current and/or the voltage, based on a detection signal from the detection unit 38. The detection unit 38 includes at least one of a voltage sensor configured to detect the voltage applied to the electrode, a current sensor configured to detect the current applied to the electrode, a frequency sensor configured to detect the frequency of the voltage and/or current applied to the electrode, a phase sensor configured to detect the phase of the voltage and/or current applied to the electrode, a magnetic field sensor configured to detect a magnetic field between the electrodes 13 and 14, an electric field sensor configured to detect an electric field between the electrodes 13 and 14, a sound wave sensor configured to detect the magnitude and/or the frequency of the sound waves between the electrodes 13 and 14, and an ultrasonic wave sensor configured to detect the magnitude and/or the frequency of the ultrasonic waves between the electrodes 13 and 14.

The electrode may be provided with the sensor. The electrode itself can be used as the sensor. When the electrode is provided with a sensor, wires (for example, two wires) for the sensor are required in addition to the power supply line for supplying power to the electrode. The number of wires between the controller 10 and the electrode is smaller the better. In this context, the power supply line and the sensor lines may be combined into a single cord. The single cord used in such a case is at least covered with an insulating material. Furthermore, the cord preferably also has durability and heat resisting property. Furthermore, considering the application in a freezer chamber, the cord is preferably capable of withstanding cold temperatures. For example, considering the application in a fryer, the cord is required to have durability and heat resisting property in addition to insulating property, and thus may be coated using a material such as fluorine resin, for example. When a pair of electrodes are provided, only one of the electrodes may be provided with the sensor. Alternatively, both electrodes may be provided with sensors, so that the sensor provided to one of the electrodes can detect a physical quantity generated by the other electrode. When three or more electrodes are provided, the sensor may be provided to at least one of the electrodes. However, this should not be construed in a limited sense, and the sensor may be provided to a plurality of electrodes or to all of the electrodes.

At least one of the control target values in the controller 10, which are the current value, the voltage value, their frequencies, and their phases, is set in accordance with the type and/or the state of the target object. The control target value may be remotely set through an unillustrated communication device. The control parameters and/or the control amount of the controller 10 can also be remotely controlled. Thus, the controllers 10 of a plurality of the quality control apparatuses 1 can be collectively managed by the server 40 at a remote location, whereby the controllers 10 can be appropriately controlled. However, the control mode for the controller 10 is not limited to the remote control from the server 40. The controller 10 of each quality control apparatus 1 can be individually controlled with the control target value and/or the control parameter directly set to each controller 10, for example.

The controller 10 is provided with the storage unit 37 storing a control program. The controller 10 is controlled based on this control program. The control program is rewritable through communications or the storage medium, and thus a program version can be upgraded by updating the program as appropriate. The controller 10 and the server 40 can communicate with each other. Thus, the storage unit 37 stores the control parameter, the control amount, the control program, or various setting values transmitted from the server 40. The control program can be stored in any appropriate storage medium.

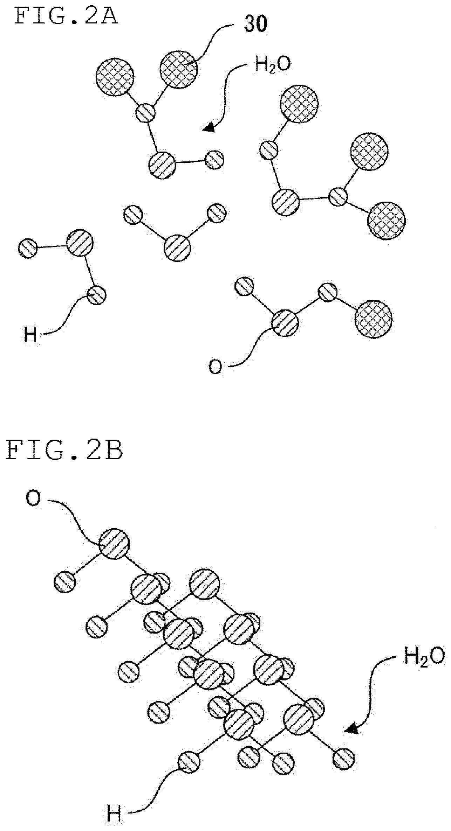

FIG. 2 is a schematic view of water molecules. FIG. 2A illustrates water molecules in a freely moving state, and FIG. 2B illustrates water molecules in a pearl-chain structure.

The target object (a food product such as meat, fish, and vegetable, beverage, animal/plant cells, oil, and the like, for example) contains water molecules as moisture such as free water.

Generally, water molecules ($H_2O$) are randomly arranged as illustrated in FIG. 2A. Thus, hydrogen atoms H may take in active oxygen 30 or cause hydrogen bond. This results in larger and thus less active water molecules. Then, oxidation of the water molecules starts.

The electric field generated between the pair of electrodes 13 and 14 causes the water molecules to be arranged in a single orientation. This is because, in the water molecules, oxygen atoms O with strong attractive force for electrons become slightly negative and hydrogen atoms H, which are likely to emit electrons, become slightly positive, and thus the atoms are oriented in the respective directions toward the electric field between the pair of electrodes 13 and 14.

When the controller 10 causes the AC component voltage to be generated, the water molecules changes their orientation in an alternating manner. Specifically, the water molecules change their orientations at a frequency that is the same as that of the AC component voltage to be in a state as if they are vibrating. As the water molecules repeatedly vibrate, as illustrated in FIG. 2B, the hydrogen bonding with the active oxygen 30 or other components is released. Thus, the water molecules are gradually finely grained and arranged.

The same applies to water particles (fine water drops) as moisture such as free water in the object. Thus, the electric field between the pair of electrodes 13 and 14 causes the water particles to be attracted to each other, whereby the pearl-chain structure is achieved.

The DC component voltage applied between the pair of electrodes 13 and 14 involves a force component causing the water molecules to be arranged along the orientation of the electric field generated by the DC component voltage. Thus, the regular arrangement of the water molecules can also be achieved by applying only the DC component voltage between the pair of electrodes 13 and 14. Application of the AC component voltage to the DC component voltage results in the water molecules changing their orientation at a frequency that is the same as that of the AC component voltage, and involves the force component causing the water molecules to be arranged in a single direction. Thus, the movement of the water molecules to be regularly arranged is facilitated. The same applies to the state of water particles. Specifically, the electric field between the pair of electrodes 13 and 14 causes the water particles as the moisture such as free water to be attracted to each other, whereby the pearl-chain structure is achieved.

When the voltage applied between the pair of electrodes 13 and 14 includes no DC component voltage, the water molecules change their orientation at a frequency that is the same as that of the AC component voltage to be in the vibrating state. As the water molecules repeatedly vibrate, the hydrogen bonding with the active oxygen 30 or other components is released. Thus, the water molecules are gradually finely grained and arranged. This effect of the AC component voltage in the case where the voltage applied between the pair of electrodes 13 and 14 includes no DC component voltage similarly applies to the state of the water particles. Specifically, the electric field between the pair of electrodes 13 and 14 causes the water particles as the moisture such as free water to be attracted to each other, whereby the pearl-chain structure is achieved.

The sound waves or the ultrasonic waves have an effect of vibrating the water molecules. Thus, application of DC component voltage and/or AC component voltage between the pair of electrodes 13 and 14 with the sound waves and/or ultrasonic waves at a predetermined frequency and with a predetermined intensity generated between the electrodes increases the effect of facilitating the movement of the water molecules to be arranged. When the water molecules are vibrated by the predetermined sound waves and/or ultrasonic waves, the water molecules can be aligned even if no voltage is applied between the electrodes. The quality control apparatus 1 of the present embodiment can generate cavitation by controlling an electric field, a magnetic field, an electromagnetic field, electromagnetic waves, sound waves or ultrasonic waves generated from the electrode, and the cavitation generates a large number of fine bubbles in the liquid.

Since an arrangement direction of water molecules or water particles is along the direction of application of the electromagnetic field, it is possible to control the arrangement direction of water molecules or water particles by controlling the electromagnetic field to be applied. For example, the electromagnetic field applied by a pair of electrodes 13 and 14 is in a constant direction. However, an electromagnetic field is applied from each of two orthogonal pairs of electrodes (the electrodes 13 and 14, and electrodes 15 and 16) in FIG. 9 described later, so that controlling the current or voltage applied to each electrode can adjust the direction of the electromagnetic field generated between each electrodes, in addition to the strength of the electromagnetic field. This makes it possible to control the arrangement direction of water molecules or water particles.

Water can be classified into "bonded water" and "free water". The bonded water is in a stable state due to hydrogen bonding with other components. On the other hand, the free water is in a freely movable state corresponding to a fresh and moist state when the object is a food product. However, molecules of the free water are likely to bond with other components, meaning that the food containing free water is perishable. Specifically, the food product is perishable as a result of free water bonding with germs, viruses, microorganisms, or active enzyme. Also in the bonded water state, the food product could be perishable, because bonded water turns into free water due to elapse of time, temperature rise, and dry environment and cell components that has been hydrogen-bonded may partly be picked up by the food product. In view of this, a bonded state where free water is in the pearl-chain structure (this is distinguished from the "bonded water state" described above) or a state of bonding to other cell and the like is achieved to enable the freshness to be maintained.

The quality control apparatus 1 according to the present embodiment is expected to enable the water molecules to be in the pearl-chain structure so that free water bonding is achieved to establish a structure as stable as that of the bonded water. Specifically, the water molecules regularly arranged by the quality control apparatus 1 according to the present embodiment do not bond with other components while being held in the object, whereby a food product can be maintained to be in a fresh and moist state.

Thus, with the quality control apparatus 1 according to the present embodiment installed in a container, the arrangement of free water in an object in the container can be controlled. Thus, when the object is a food product, a medicine, or a cell, the freshness of the food product, the medicine, or the cell can be maintained. For example, the quality control apparatus 1 may be used as a transportation container, so that a food product can be transported for a longer distance with the freshness maintained compared with conventional cases. The container may be a styrofoam container or the like, and a transportation container can be formed by attaching the quality control apparatus 1 according to the present embodiment to an existing styrofoam container.

Once the water molecules are regularly arranged by the quality control apparatus 1 according to the present embodiment, the water molecules are maintained to be in the regularly arranged state for few days. Thus, when the object is a food product, a medicine, or a cell, the freshness of the food product, the medicine, or the cell can be maintained even when the object is relocated and stored in a different container after the pearl-chain structure state of free water has been achieved by the quality control apparatus 1 according to the present embodiment. While the quality control apparatus 1 of the present embodiment can micronize the moisture in an object as described above, the quality control apparatus 1 can also control the cells containing moisture so that the cells themselves are arranged in a pearl-chain structure or the cells themselves are micronized.

When predetermined voltage is applied to the electrodes 13 and 14, the water molecules in moisture of an object are electrically aligned, to be oriented in substantially the same direction (orientation of the electric field). With the water molecules aligned, the conductivity of the object increases. The water molecules can be aligned also when the object is liquid. Thus, the conductivity can be increased even when the object is pure water, for example. The water molecules slightly vibrate at a predetermined frequency in an electric field, and thus do not crystallize at a temperature close to 0°C.

When predetermined voltage is applied to the electrodes 13 and 14, the hydrogen bonding between water molecules in the object is suppressed (reduced), and thus physiological water can be obtained, for example. Fine bubbles such as microbubbles, micro-nano bubbles, nanobubbles, or the like may be added to this water, so that more functional water can be obtained. Such improvement of the function of liquid achieved by an electric field and fine bubbles is not limited to water, and can be achieved for a solution, emulsion, oil, and the like, for example.

When predetermined voltage is applied to the electrodes 13 and 14, hydration of water molecules in the moisture in the object is promoted. For example, deterioration of the object can be suppressed with proteins and the like included in the object hydrated to result in a state where the proteins and the like bond with the water molecules to be surrounded by the water molecules.

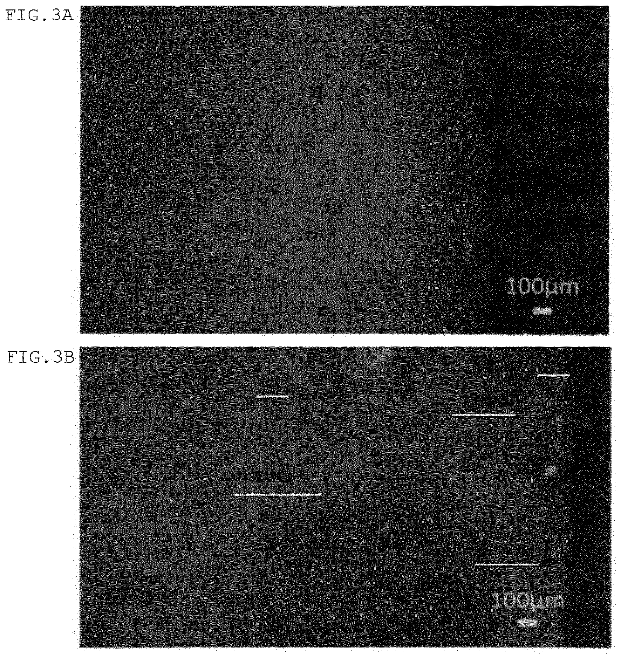

FIG. 3 is a photomicrograph of free water. FIG. 3A shows a state of the free water before application of an electric field. FIG. 3B shows a state of the free water after the application of the electric field. As illustrated in FIG. 3B, with free electrons after the application of the electric field, the pearl-chain structure of the water particles can be seen in portions marked with white underlines. On the other hand, as illustrated in FIG. 3A, in the free water before the application of the electric field, no pearl-chain structure of the water particles can be found. Thus, it is confirmed in FIG. 3 that the quality control apparatus 1 according to the present embodiment can achieve the pearl-chain structure state of the free water. While FIG. 3 shows the pearl-chain structure of aqueous phase in oil phase, it is also possible to perform the similar control of liquid pearl-chain structure through control of the electric field to be applied, even between other types of liquids.

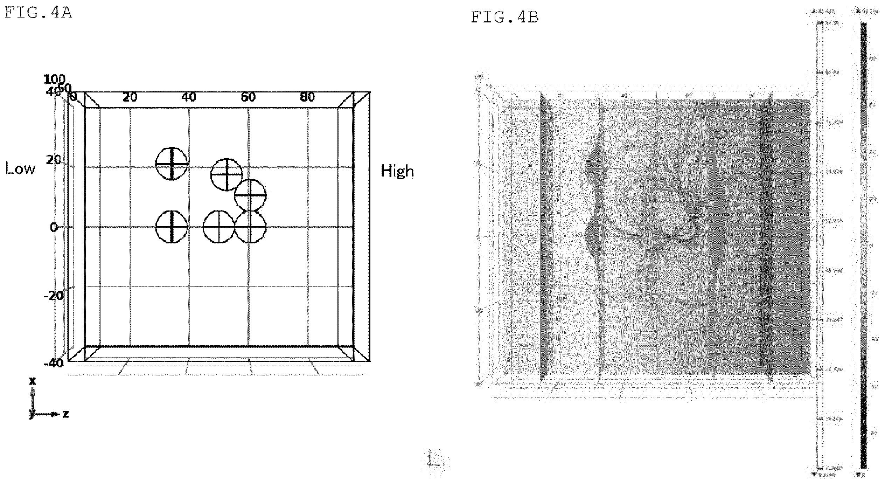

FIG. 4 illustrates potential simulation results of water particles. FIG. 4A is a diagram illustrating a simulation model. FIG. 4B illustrates a potential simulation result. As illustrated in FIG. 4A, free water in the simulation model includes four water particles in the pearl-chain structure in a center portion, and two independent water particles on the left side thereof.

FIG. 4B illustrates three portions of equipotential regions in a cross section in a vertical direction along a longitudinal direction of the water particles. In the rightmost cross section, it is indicated that in a portion where the water particles are in the pearl-chain structure, equipotential water particles are in the pearl-chain structure. The region with the four water particles in the pearl-chain structure, in the center portion in the figure, is substantially uniformly colored. Thus, it can be seen that the potential is substantially uniform in the region with the four water particles in the pearl-chain structure.

Electric field lines running among the four water particles in the pearl-chain structure indicate that these four water particles are attracted to each other. Electric field lines can also be found between the four water particles in the pearl-chain structure and the two independent water particles separated from and on the left side of the four water particles in the pearl-chain structure. Thus, it is expected that force in a direction to be attracted to the four water particles in the pearl-chain structure is also acting on the two independent water particles. Thus, the two independent water particles may join the pearl-chain structure of the four particles.

[Reduction of interfacial tension]

In W/O emulsion (micro-water droplets in cooking oil, for example), interfacial tension can be reduced by applying the electromagnetic field with the quality control apparatus 1 according to the present embodiment. In such a case, the interfacial tension can be reduced by 10% or more, or by 20% or more depending on the condition of the electromagnetic field. Furthermore, the interfacial tension can be reduced by 60% or more, by appropriately controlling the DC component voltage and the AC component voltage, for example. This effect is expected to be attributable to the increase in interfacial polarization as a result of the electromagnetic field application.

When food is cooked in cooking oil, for example, water droplets separated from the food to be in the cooking oil as a result of the moisture in the food turning into water vapor in the cooking oil are micro water droplets. If the interfacial polarization in the micro water droplets is sufficient for reducing the interfacial tension, the pearl-chain structure of the micro water droplets is achieved with attraction between dipoles.

When the food is fried with cooking oil by using a fryer, the interfacial tension of the oil/water interface can be reduced with the pair of electrodes 13 and 14 of the quality control apparatus 1 according to the present embodiment installed in the fryer. Generally, when food is cooked by heating, the moisture in the food turns into water vapor in the cooking oil, resulting in bumping. With the quality control apparatus 1 according to the present embodiment, a predetermined electromagnetic field is generated, so that surface tension between the oil/water interface can be reduced. Thus, when moisture contained in the food is separated, the moisture turns into dispersible micro water droplets with a small particle diameter in the cooking oil. Thus, vaporization of the micro water droplets into water vapor in the heating cooking oil involves only small bumping. Application of the electromagnetic field results in the free water, contained in food, being in a pearl-chain structure to be less likely to be separated from the food. With the moisture contained in food thus controlled to suppress the bumping, an effect of suppressing penetration of oil into the food can be obtained. With this effect, the cooked food can have superb mouthfeel and taste.

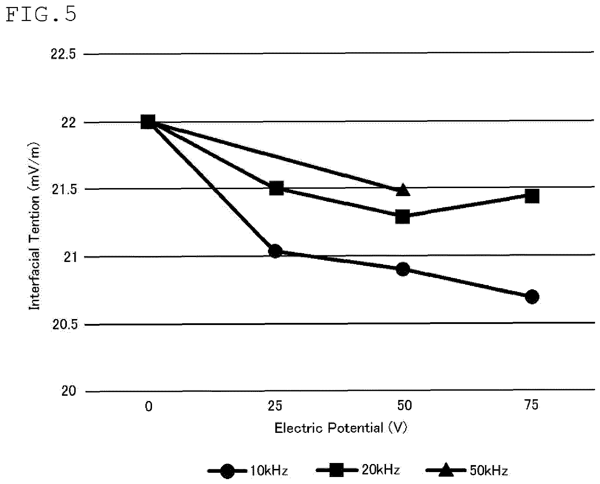

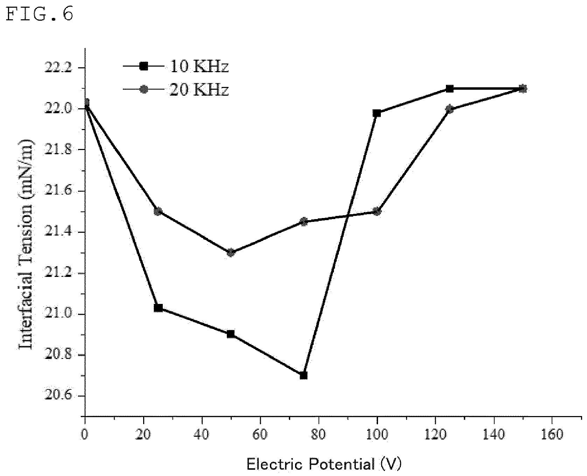

FIG. 5 and FIG. 6 are graphs showing reduction of interfacial tension between cooking oil and water achieved by the quality control apparatus 1 according to the present embodiment. FIG. 5 is a graph of interfacial tension between cooking oil and water as a result of changing the frequency and the voltage value (0 to 75 V) of the applied voltage. FIG. 6 is a graph of interfacial tension between cooking oil and water as a result of changing the frequency and the voltage value (0 to 150 V) of the applied voltage. For FIG. 5 and FIG. 6, measurement different from that using the measurement apparatus described in the section [Reduction of interfacial tension] described above was conducted. Specifically, a pair of stainless electrodes were inserted into a container including water (lower layer) and cooking oil (upper layer) in a state of having their interfaces in contact with each other, and the interfacial tension between the cooking oil and the water was measured while applying AC voltage with various frequencies and voltage values. Face Automatic Surface Tensiometer (Kyowa Interface Science, Inc.) was used for measuring the interfacial tension. Here, a pair of flat plate electrodes were used as the electrode. However, this should not be construed in a limiting sense. For example, a curved electrode conforming to an inner wall of a cylindrical container may be used, or a flexible electrode such as stainless foil may be arranged along an inner surface of a container.

FIG. 5 is a graph showing the interfacial tension of the cooking oil and water, as a result of changing the frequency of the AC voltage applied to the electrode from 10 kHz to 50 kHz and changing the voltage from 0 V to 75 V It can be seen in FIG. 5 that the interfacial tension between the cooking oil and water is associated with the frequency and voltage value of the AC voltage applied to the electrode. More specifically, the interfacial tension decreased with the frequency drop from 50 kHz to 20 kHz and then to 10 kHz, and increased with the increase in the voltage value from 0 V to 75 V Thus, based on such association between the interfacial tension and the frequency and voltage value of the AC voltage applied to the electrode, the quality control apparatus 1 can control the interfacial tension by adjusting the applied voltage. For example, when the quality control apparatus 1 is applied to a fryer, reduction of the interfacial tension results in the moisture contained in food turning into dispersible micro water droplets with a small particle diameter in the cooking oil upon being separated from the food as described above. Thus, even when the water droplets evaporate in the heated cooking oil to be vaporized, resulting bumping is small. In such a situation, the magnitude of the bumping can be adjusted with the quality control apparatus 1 controlling the interfacial tension. Thus, the voltage applied to the electrode can be set in accordance with various conditions of cooking using the fryer as well as various types, states, and amounts of food ingredients. Thus, even when the condition of the cooking using the fryer varies, the interfacial tension can be appropriately controlled by applying appropriate voltage to the electrode, whereby food cooked can have excellent mouthfeel and taste. This is also effective in a case where the feedback control is performed on the voltage applied to the electrode. The interfacial tension can be measured or estimated, and thus can be used as one of the control parameters.

FIG. 6 is a graph showing the interfacial tension between the cooking oil and water, as a result of changing the frequency of the AC voltage applied to the electrode from 10 kHz to 20 kHz and changing the voltage from 0 V to 160 V. FIG. 6 illustrates an example of measurement performed by a certain experiment apparatus. Of course, it is impossible to expand the measurement result to cover any kinds of measurement system. Still, the results at least indicate that the interfacial tension is associated with the frequency and the voltage value of the AC voltage applied to the electrode. Utilizing such association, the interfacial tension can be optimized by adjusting the frequency and the voltage value of the AC voltage applied to the electrode. As described above, the association between the effect of the quality control apparatus 1 according to the present and the interfacial tension has been understood. Thus, the effect can be optimized based on the association with the interfacial tension, not only in the case of fryers, but also in cases where the present invention is applied to other targets, that is, used for cold storage, storage, and the like. The measurement of the interfacial tension described above is relatively easy. Thus, the voltage applied to the electrode can be more appropriately and more easily controlled with optimization of the quality control apparatus 1 according to the present embodiment being analyzable based on the association with the interfacial tension.

While FIGS. 5 and 6 illustrate the reduction in interfacial tension between the aqueous phase and the oil phase, the interfacial tension between the liquid phase and phases other than the liquid phase can also be controlled by controlling the electromagnetic field to be applied in a similar manner. The control of the interfacial tension of the liquid can be applied not only to the interfacial tension between the liquid phase and another liquid phase, but also to the interfacial tension between the liquid phase and gas phase and to the interfacial tension between the liquid and solid phase. For example, the quality control apparatus of the present embodiment can also control the interfacial tension, a contact angle and the like by application of an electromagnetic field.

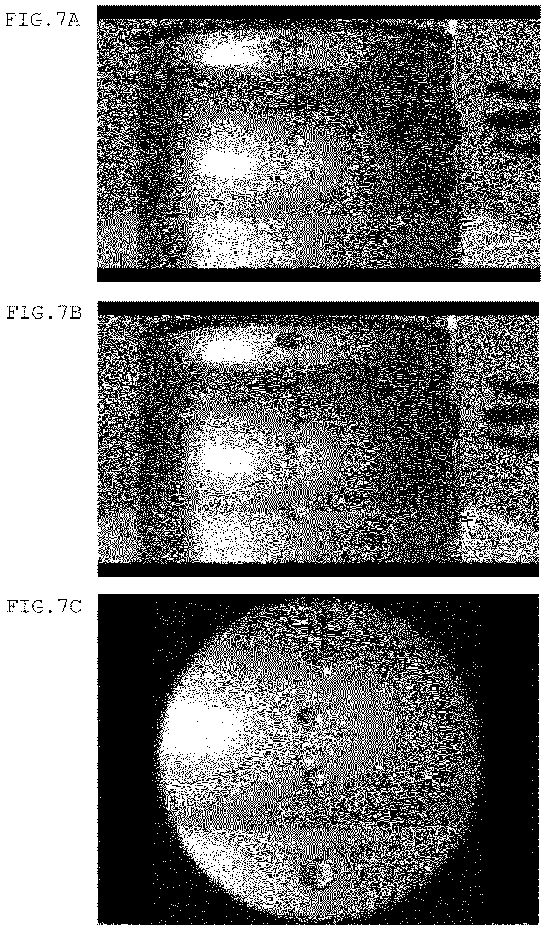

FIG. 7 includes photographs showing water droplets dropping into oil. The photograph shows a state where saline is dropped into cooking oil from a thin tube (a metal straw with a diameter of 1.0 mm) with an annular electrode provided to surround an area around a tip of the thin tube, and with voltage of 100 V applied between the thin tube and the annular electrode. Without the voltage application, no water droplet drops into the oil. The voltage application leads to reduction of interfacial tension between the cooking oil and saline, resulting in water droplets dropping into the oil. It can be seen in FIG. 7 that fine bubbles are dispersed around the dropping water droplets. The voltage application leads to the reduction of the interfacial tension, resulting in a smaller particle diameter of the water droplets as well as generation of fine bubbles when the water droplets drop.

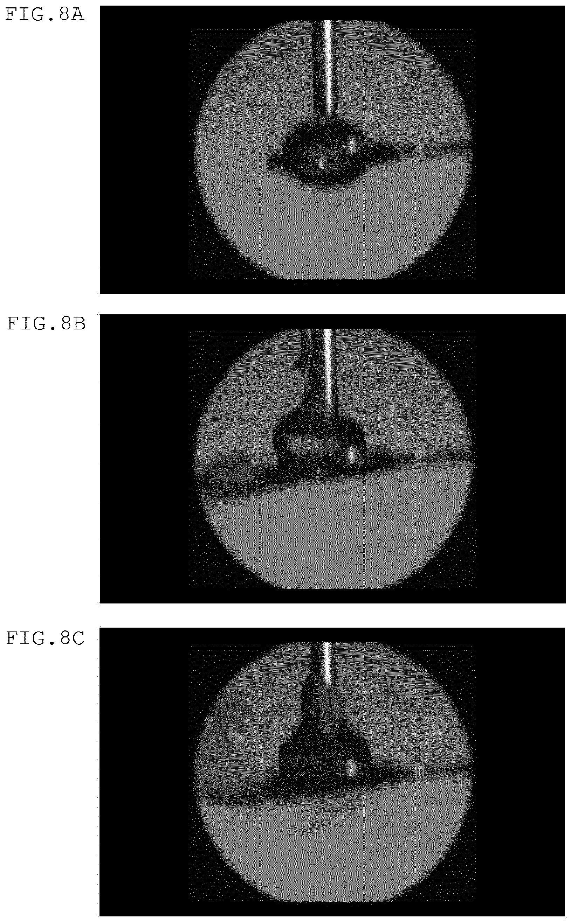

Water droplets of saline dropping into the cooking oil in response to the voltage application. The figure is a result of monitoring, with a high-speed camera, moment of the dropping of the water droplet. FIG. 8A illustrates a state before the voltage application, FIG. 8B illustrates a state where the voltage application has started, FIG. 8C illustrates a state after the voltage application. FIG. 8A, FIG. 8B, and FIG. 8C are in a chronological order. Fine bubbles can be found as illustrated in FIG. 8B and FIG. 8C as a result of voltage application. In some parts, they cannot be clearly distinguished from gas generated from the electrode due to electrolysis.

When the quality control apparatus of the present embodiment controls the electromagnetic field applied to an object, the electromagnetic field acts on the moisture present inside or on the surface of the object, which makes it possible to prevent, suppress, or control moisture being rotten, moisture being turbid, color being turbid, algae growth, sliminess, rusting, molding or the like.

[First modification]

A quality control apparatus, a quality control method, a program, and a storage medium according to a first modification will be described with reference to FIG. 9. FIG. 9 is a conceptual view of electrodes according to the first modification. For configurations that are the same as those in FIG. 1 to FIG. 8, the same reference numerals are used, and the descriptions thereof are omitted. The quality control apparatus according to the first modification is different from the quality control apparatus according to the first embodiment in that two pairs of electrodes are provided.

A quality control apparatus 1A includes controllers 10A and 10B as well as first electrodes 13 and 14 and second electrodes 15 and 16 as two pairs of electrodes. The controllers 10A and 10B each include an AC component voltage generation unit and a DC component voltage generation unit. In the actual circuit configuration of the controller 10, the AC component voltage generation unit and the DC component voltage generation unit may not be separately provided, and thus the circuit configuration having the functions of both units may be employed. The two controllers 10A and 10B may be configured as a single controller. The single controller may apply voltage to both of the first electrodes 13 and 14 and the second electrodes 15 and 16, as long as the first electrodes 13 and 14 and the second electrodes 15 and 16 generate similar electromagnetic waves.

The quality control apparatus 1A is driven by the controllers 10A and 10B and an electric field is generated between the pair of first electrodes 13 and 14 and between the pair of second electrodes 15 and 16. In this case, the electrodes 13 to 16 each function as an antenna, and an electromagnetic field is generated with electromagnetic waves radiated between the first electrodes 13 and 14 and between the second electrodes 15 and 16. Thus, at least one of an electric field, a magnetic field, an electromagnetic field, and electromagnetic waves is generated between the electrodes 13 and 14 and the electrodes 15 and 16. As in the first embodiment, the electrodes 13 and 14 may also be vibrated by an electric, magnetic, or mechanical unit, so that sound waves and/or ultrasonic waves can be generated between the electrodes. With the water molecules vibrated by predetermined sound waves and/or ultrasonic waves, the water molecules can be aligned without applying voltage between the electrodes.

A processing target object is disposed between the first electrodes 13 and 14 and between the second electrodes 15 and 16. The processing target object is not particularly limited as long as the object is at least one of solid, liquid, and gas, as in the first embodiment. When the quality control apparatus 1A according to the present embodiment is provided to a refrigerator, for example, the first electrodes 13 and 14 may be provided on side surfaces in the refrigerator, and the second electrodes 15 and 16 may be provided on the ceiling surface, the bottom surface, or the tray. FIG. 9 illustrates an example where the first electrodes 13 and 14 and the second electrodes 15 and 16 are orthogonally arranged. However, the present invention is not limited to this, and the first electrodes 13 and 14 and the second electrodes 15 and 16 may be in any arrangement as long as at least part of the electromagnetic field generated by the first electrodes 13 and 14 and the electromagnetic field generated by the second electrodes 15 and 16 acts on the processing target object.

The controllers 10A and 10B perform feedback control on at least one of the value of the current and the voltage applied to the electrode, the frequency of the current and/or the voltage, and the phase of the current and/or the voltage, based on a detection signal from an unillustrated detector. The detector includes at least one of a voltage sensor configured to detect the voltage applied to the electrode, a current sensor configured to detect the current applied to the electrode, a frequency sensor configured to detect the frequency of the voltage and/or current applied to the electrode, a magnetic field sensor configured to detect a magnetic field between the electrodes 13 and 14 and between the electrodes 15 and 16, an electric field sensor configured to detect an electric field between the electrodes 13 and 14 and between the electrodes 15 and 16, a phase detection sensor for voltage, a phase detection sensor for current, and a phase detection sensor for voltage and current.

At least one of the control target values in the controllers 10A and 10B, which are the current value, the voltage value, their frequencies, and their phases, is set in accordance with the type and/or the state of the target object. For example, the current and/or voltage applied from the controller 10A to the first electrodes 13 and 14 as well as the frequency and the phase of the current and/or voltage may be respectively the same as, or different from, the current and/or voltage applied from the controller 10B to the second electrodes 15 and 16 as well as the frequency and the phase of the current and/or voltage. For example, various combinations may be employed including a combination with voltage and frequency being different therebetween, a combination with only the frequency being different, and a combination with frequency and the phase being different therebetween.

The control target value may be remotely set through an unillustrated communication device. The control parameters and/or the control amount of the controllers 10A and 10B can also be remotely controlled. Thus, the controllers 10A and 10B of a plurality of the quality control apparatuses 1A can be collectively managed by the server 40 at a remote location, whereby the controllers 10A and 10B can be appropriately controlled. However, the control mode for the controllers 10A and 10B is not limited to the remote control from the server 40. The controllers 10A and 10B of each quality control apparatus 1A can be individually controlled with the control target value and/or the control parameter directly set to each of the controllers 10A and 10B, for example.

In FIG. 9, an electromagnetic field is applied from each of two orthogonal pairs of electrodes (X-direction electrodes 13 and 14 and Y-direction electrodes 15 and 16), so that controlling the current or voltage applied to each electrode can adjust the direction of the electromagnetic field generated between each electrode as well as the strength of the electromagnetic field. This makes it possible to control the arrangement direction of water molecules or water particles. In the case where a controller 10A controls the current or voltage applied to the X-direction electrodes 13 and 14, and a controller 10B controls the current or voltage applied to the Y-direction electrodes 15 and 16, the strength and direction of the electromagnetic field generated by each electrode can be adjusted by adjusting, for example, a ratio between the voltage value applied to the X-direction electrodes 13 and 14 and the voltage applied to the Y-direction electrodes 15 and 16. This makes it possible to atomize the moisture inside or on the surface of an object, which is disposed in the electromagnetic field, into fine particles and to also control the arrangement state of the moisture, which is atomized into fine particles, to be in a desired direction. Since DC voltage as well as AC voltage can be applied to each electrode, adjusting the DC voltage component can control the arrangement of the moisture inside or on the surface of the object, which is disposed in the electromagnetic field generated by each electrode, in any direction with respect to two-dimensional X-Y coordinates. When an additional pair of Z-direction electrodes (not shown) and a controller 10C are added to the two pairs of electrodes, the X-direction electrodes 13 and 14 and the Y-direction electrodes 15 and 16 in FIG. 9, electromagnetic waves of a desired direction and strength can be generated in three-dimensional space. Hence, the arrangement of the moisture inside or on the surface of the object, which is disposed in the electromagnetic field generated by each electrode, can be controlled in any direction with respect to three-dimension. As described later, the quality control apparatus of the present embodiment can improve properties of an object by atomizing water molecules inside or on the surface of the object into fine particles and by controlling the state of the pearl-chain structure in a specific direction and controlling the arrangement direction.

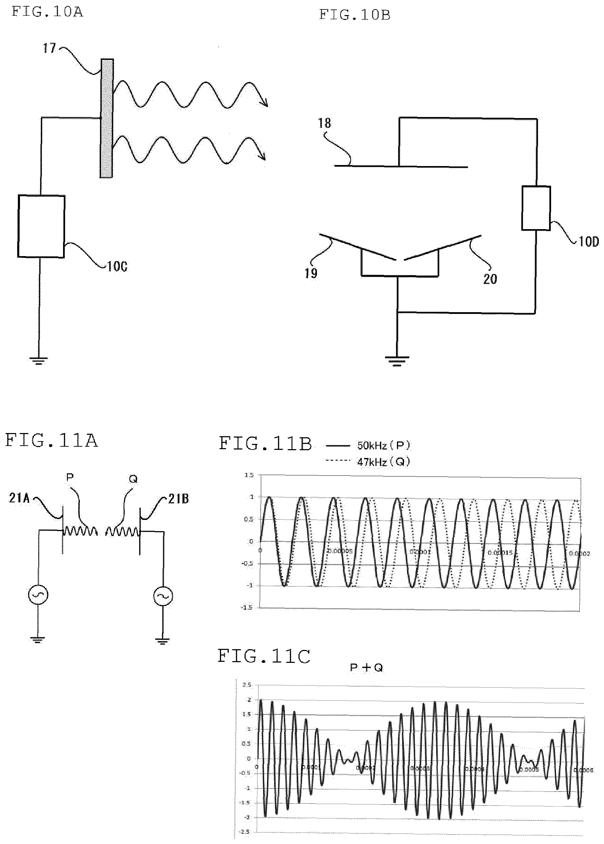

FIG. 10 is a conceptual view of different electrodes according to the first modification. FIG. 10A illustrates an example where a single electrode is used. FIG. 10B illustrates an example where a single electrode and two electrodes facing this electrode are used. In the example described in the first embodiment, a pair of electrodes are used. In the example described in the second embodiment, two pairs of electrodes are used. However, the present invention is not limited to this, and a single electrode may be used, and an odd number of electrodes such as three electrodes may be used. For example, as illustrated in FIG. 10A, the electromagnetic waves can be generated with a single electrode 17. For example, as illustrated in FIG. 10B, when three electrodes are used, two electrodes 19 and 20 may face a single electrode 18, or three electrodes may generate different types of electromagnetic waves. Thus, the number and arrangement of electrodes can be set as appropriate and are not limited.

[Second modification]

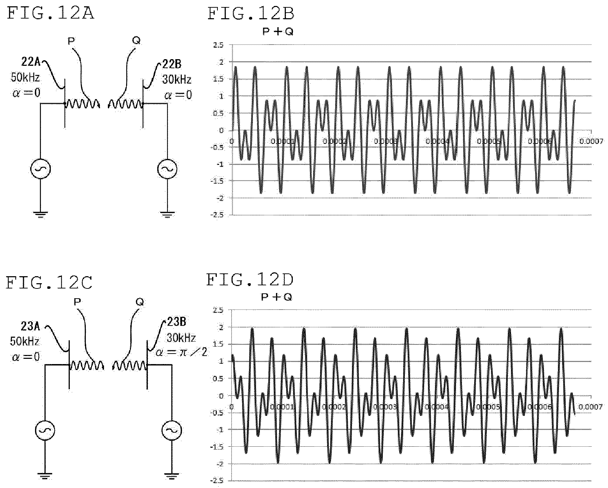

A quality control apparatus, a quality control method, a program, a storage medium, a produced object, a product, an apparatus, and a facility according to a second modification of the present invention will be described with reference to FIG. 11 and FIG. 12. FIG. 11 is a diagram illustrating waveforms obtained by using voltage at different frequencies according to the second modification. FIG. 12 is a diagram illustrating waveforms obtained by using voltage in different phases according to the second modification. For configurations that are the same as those in FIG. 11 to FIG. 12, the same reference numerals are used and the descriptions thereof are omitted. A quality control apparatus according to the second modification is different from that according to the first embodiment and the first modification in that a pair of electrodes are different from each other in the electromagnetic waves they generate.

In FIG. 11, an electrode 21A that is one of a pair of electrodes 21A and 21B generates electromagnetic waves (P wave) at a frequency of 50 kHz and the other electrode 21B generates electromagnetic waves (Q wave) at a frequency of 47 kHz. The P wave and the Q wave are represented by the following formulae corresponding to a position where both waves are V(t) = 0 at time t = 0 (the position just in the middle of the electrodes 21A and 21B, for example). In the formulae, A represents the amplitude of the electromagnetic waves.

$$\text{P wave: } V(t) = A\sin(2\pi f_1 t),\ f_1 = 50\,\text{kHz}$$

$$\text{Q wave: } V(t) = A\sin(2\pi f_2 t),\ f_2 = 47\,\text{kHz}$$

Thus, the electromagnetic wave that is the sum of the P and Q waves are applied between the pair of electrodes 21A and 21B as illustrated in FIG. 11C.

In FIG. 12, an electrode 22A that is one of a pair of electrodes 22A and 22B generates electromagnetic waves (P wave) at a frequency of 50 kHz and the other electrode 22B generates electromagnetic waves (Q wave) at a frequency of 30 kHz. Phases α of the waveforms match (α = 0). The P wave and the Q wave are represented by the following formulae corresponding to a position where both waves are V(t) = 0 at time t = 0 (the position just in the middle of the electrodes 21A and 21B, for example). In the formulae, A represents the amplitude of the electromagnetic waves.

$$\text{P wave: } V(t) = A\sin(2\pi f_1 t),\ f_1 = 50\,\text{kHz}$$

$$\text{Q wave: } V(t) = A\sin(2\pi f_2 t),\ f_2 = 30\,\text{kHz}$$

Thus, the electromagnetic wave that is the sum of the P and Q waves are applied between the pair of electrodes 22A and 22B as in FIG. 12B.

In FIG. 12C, an electrode 23A that is one of a pair of electrodes 23A and 23B generates electromagnetic waves (P wave) at a frequency of 50 kHz and with a phase α = 0 and the other electrode 23B generates electromagnetic waves (Q wave) at a frequency of 30 kHz and with a phase α = π/2. Thus, the phases of the waveforms are set to π/2. The P wave and the Q wave are represented by the following formulae corresponding to a position where P wave is V(t) = 0 and Q wave is V(T) = A at time t = 0 (the position just in the middle of the electrodes 21A and 21B, for example). In the formulae, A represents the amplitude of the electromagnetic waves.

$$\text{P wave: } V(t) = A\sin(2\pi f_1 t),\ f_1 = 50\,\text{kHz}$$

$$\text{Q wave: } V(t) = A\sin(2\pi f_2 t + \pi/2),\ f_2 = 30\,\text{kHz}$$

Thus, the electromagnetic wave that is the sum of the P and Q waves are applied between the pair of electrodes 23A and 23B as in FIG. 12D.

In FIGS. 11 to 12, the electrodes generate electromagnetic waves at different frequencies and/or with different phases. However, the present invention is not limited to these. For example, peak-to-peak voltage of the electromagnetic waves can be adjusted by adjusting the AC component voltage applied to the electrodes. The DC component voltage as offset voltage for the AC component voltage may be applied by adjusting the DC component voltage applied to the electrodes. The DC component voltage applied may be different between the electrodes. Furthermore, the AC component voltages applied to the electrodes may be different from each other in the peak-to-peak voltage value, frequency, and phase.

[Third modification]

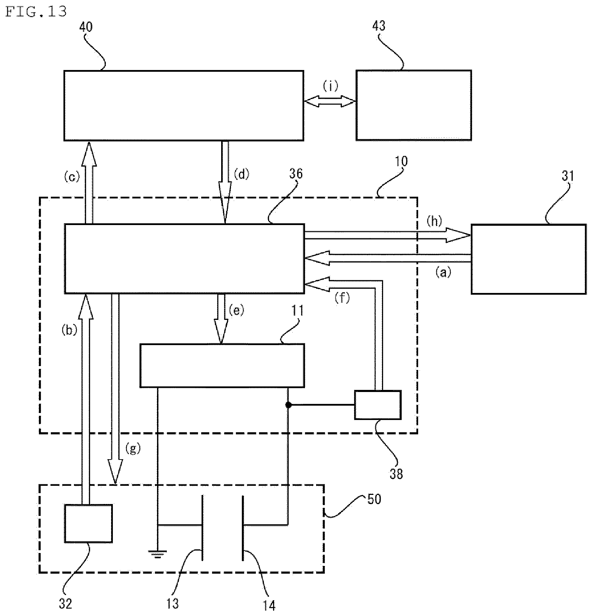

A moisture control apparatus, a moisture control method, a program, a storage medium, a produced object, a product, an apparatus, and a facility according to a third modification of the first embodiment of the present invention will be described with reference to FIG. 13. FIG. 13 is a block diagram of a moisture control apparatus 1. For configurations that are the same as those in FIG. 1 to FIG. 12, the same reference numerals are used, and the descriptions thereof are omitted.

FIG. 13 is a block diagram corresponding to FIG. 1. Note that the communication unit 35, the storage unit 37, the external power supply 39, and the like are omitted. Specifically, although the control unit 36 actually communicates with the management server 40 and the like via the communication unit 35, inputs and outputs data to and from the storage unit 37, receives power from the external power supply 39, and controls the current voltage application unit 11 via the current voltage control unit 33, these operations are omitted in FIG. 13. In FIG. 13, the controller 10 is illustrated to be outside the housing 50 (for example, a refrigerator or the like). However, this should not be construed in a limiting sense, and the controller 10 may be provided inside the housing 50.

Flows (a) to (h) in FIG. 13 will be described in this order. In the flow (a), settings of the controller 10 are input through an input on the man-machine interface 31. The settings include a setting on ON/OFF and an operation mode of the controller 10, a type and/or a state of an object, output voltage and/or output current of the current voltage application unit 11, and the like. Examples of the operation mode include an automatic mode, an object input mode, a manual setting mode, and the like. For example, in the automatic mode, the controller 10 is automatically controlled so that an appropriate state of the object is achieved based on a detection signal from the object detection unit 32, a detection signal from the detection unit 38, and a control parameter and/or a control value from the management server 40, as described later. In the object input mode, for example, the controller 10 is appropriately controlled based on the object, with the type and/or the state of the object input through the man-machine interface 31. In the manual setting mode, for example, the output voltage and/or output current of the current voltage application unit 11 is manually set. The following description is given assuming that the automatic mode is set, for example, unless stated otherwise. In the flow (a), when the housing 50 further has an automatic adjustment function, a housing setting value for the housing 50 may be able to be input through the man-machine interface 31.

In the flow (b), information about an object is collected from the object detection unit 32 in response to an instruction from the control unit 36. In the example where the housing 50 is a refrigerator, the information about an object collected by the object detection unit 32 includes an image from a camera in the refrigerator, a detection signal related to moisture in a food product from a moisture amount sensor, a detection signal from a temperature sensor and/or a humidity sensor (including a detection signal from a sensor built in the refrigerator), and the like. In the example where the housing 50 is a container, the information about an object collected by the object detection unit 32 includes an image from a camera in the container, a detection signal from a temperature sensor and/or a humidity sensor in the container, a signal from a GPS provided to the container (the GPS may be provided to the controller 10), and the like. In the example where the housing 50 is a fryer, the information about an object collected by the object detection unit 32 includes an image from a camera capturing an image of a food product cooked, a detection signal related to the moisture of the food product from a moisture amount sensor, a detection signal related to the temperature of the food product, a detection signal related to the temperature of the oil of the fryer, information about the type of the oil of the fryer, information indicating a replacement timing of the oil of the fryer, and the like.

In the flow (c), the information about the object collected by the object detection unit 32 in response to an instruction from the CPU 36 is transmitted to the management server 40 via the communication unit 35. When the setting input in the flow (a) is the object input mode, for example, information about the type and the state of the object input through the man-machine interface 31 is transmitted to the management server 40, for example.

When the setting input in the flow (a) is the manual setting mode, for example, the information about the output voltage and/or output current of the current voltage application unit 11 is transmitted to the management server 40. Then, after predetermined correction is performed in the management server 40, a predetermined control parameter and a control value may be transmitted from the management server 40 to the control unit 36. For example, the output voltage and/or output current of the current voltage application unit 11 manually set for the information collection in the management server 40 may be transmitted to the management server 40, and the control unit 36 may calculate the control value. For example, when the correction of the control value or the information collection are not required in the management server 40, the information about the output voltage and/or output current does not need to be transmitted to the management server 40 in the flow (c).

In the management server 40, a control parameter and/or a control value suitable for the type and the state of the object is calculated. When calculating the control parameter and/or the control value, the management server 40 may refer to information other than the type and the state of the object by communicating with a database 43 and the like. The other information includes season, weather, weather forecast, date and time, location, supply and demand forecast, warehousing and storage status of a refrigerator, a transport path of a container and traffic condition thereof, a status of a group of containers related to the container, inventory control information, store congestion, economic indicators, information on the Web, and the like.

Among information about the object collected by the object detection unit 32, the image from the camera enables the type and the state of the object to be determined by image recognition in the management server 40. For this image recognition, AI trained by, for example, deep learning can be used, for example, so that the type and the state of the object can be accurately recognized. Specifically, the type and the state of the object can be accurately recognized based on the image from the camera, by using a neural network trained by the image of a food product from the camera and data about the actual type and the state of the food product. The server can communicate with another controller 10 to accumulate a large amount of image recognition data, whereby the image recognition accuracy for various objects can be increased. When the controller 10 includes an AI program, the control unit 36 may perform the image recognition by using a learning model that has been trained by the management server 40 and transmit the result of the image recognition to the server 40 in the flow (c). When the image recognition is thus performed by the controller 10, the communication amount of data transmission in the flow (c) can be reduced.

In the flow (d), the control parameter and/or the control value calculated in the management server 40 is transmitted to the control unit 36 of the controller 10.

In the flow (e), the control unit 36 uses the control parameter and/or the control value transmitted from the management server 40 to control the output voltage and/or output current of the current voltage application unit 11.

In the flow (f), the control unit 36 performs feedback control on at least one of the values of the current and voltage applied to the electrodes 13 and 14, their frequencies, and their phases, based on the detection signal detected by the detection unit 38. The detection signal detected by the detection unit 38 includes at least one of voltage applied to the electrode, the current applied to the electrode, the frequency and/or the phase of the voltage and/or current applied to the electrode, the magnetic field between the electrodes 13 and 14, the electric field between the electrodes 13 and 14, and the sound waves and/or the ultrasonic waves between the electrodes 13 and 14. The control value fed back in this case may be a control value calculated by the control unit 36 or may be a control value calculated by the management server 40.

When the control value fed back is the control value calculated by the control unit 36, the control target value is transmitted from the management server 40 to the control unit 36 in the flow (d). When the manual mode is set, the setting value as the control target value is input in the flow (a). The control target value may be set variably over time based on the information about the object collected by the object detection unit 32. When the control value fed back is a control value calculated by the management server 40, the detection signal as a result of the detection by the detection unit 38 is transmitted to the management server 40 in the flow (c) for calculating the control value fed back by the management server 40. Then, the management server 40 calculates the control value fed back, and the control value is transmitted from the management server 40 to the control unit 36 in the flow (d).

Although the example of using the detection unit 38 is described in the present embodiment, control not using the detection unit 38 may be employed. In such a case, the flow (f) is omitted, and the output voltage and/or output current of the current voltage application unit 11 is controlled in the flow (e). For the control in this case, various control such as sensor-less control and open loop control can be applied.

In the flow (g), the control unit 36 may transmit a control command to the housing 50 when the housing 50 has the automatic adjustment function. When the housing 50 is a refrigerator, the control command is a setting value of temperature and/or humidity in the refrigerator, for example. When the housing 50 is a container having a temperature/humidity adjustment function, the control command is a setting value of the temperature/humidity for the container, for example. When the housing 50 is a container and is stored in a warehouse with adjustable temperature/humidity, as described later, in the flow (i), information about the adjustment of the temperature/humidity of the container is transmitted to a management server of the warehouse that is the external server and the database 43, for appropriately adjusting the state of the temperature/humidity of all the containers also including other containers. When the housing 50 is a fryer, the control command is a temperature setting value of oil in the oil tank, for example, and may be used for notifying the oil replacement timing if necessary. When the housing 50 has no automatic adjustment function, the flow (g) is not a necessary element. In such a case, the information about the control command from the control unit 36 is displayed on the man-machine interface 31 in the flow (h).

In the flow (h), the man-machine interface 31 displays, for example, the control status of the output voltage and/or output current of the current voltage application unit 11 as an example of the control status in the control unit 36, information about the type and the state of the current target object, the status of the housing 50 (detection information from the object detection unit 32), and information about the control command from the CPU 36 to the housing 50 if the housing 50 has no automatic adjustment function. In addition to these pieces of information, the man-machine interface 31 can display information transmitted from the management server 40 in the flow (d) in addition to the control parameter and/or the control value, when required or in response to an operation on the man-machine interface 31. Examples of such information include season, weather, weather forecast, date and time, location, supply and demand forecast, warehousing and storage status of a refrigerator, a transport path of a container and traffic condition thereof, a status of a group of containers related to the container, inventory control information, store congestion, economic indicators, information on the Web, and the like. An operator can appropriately produce and manage the object by referring to such pieces of information.

The man-machine interface 31 may be integrated with the controller 10. The man-machine interface 31 and the controller 10 may be separately provided. The man-machine interface 31 as well as some of the functions of the controller 10 may be provided separately from the controller 10. In such a case, the man-machine interface 31 may be a mobile terminal having a communication function, examples of which include a smartphone, a mobile phone, a tablet terminal, and a PC. When the man-machine interface 31 as well as some of the functions of the controller 10 are provided separately from the controller 10, the man-machine interface 31 and at least one of the functions of the communication unit 35 and the storage unit 37, and the arithmetic function of the control unit 36 or some of such functions may be provided separately from the controller 10. Furthermore, the man-machine interface 31 as well as the functions of the object detection sensor 32 or the detection unit 38 or some of their functions can be integrated. For example, the camera function built in a smartphone, a mobile phone, a tablet terminal or a PC may be used as the object detection unit 32.

In the flow (i), the management server 40 communicates with the database 43 to exchange information required for object management or to collect data. The management server 40 can communicate with a required external server through the Internet. Thus, when the housing 50 is a container, for example, a management database or a management server for a warehouse managing the container can be accessed, for example.

An operation of the present embodiment is described based on a configuration example in a case where the housing 50 is a refrigerator. In this example, a tablet terminal is used as the man-machine interface 31, and the refrigerator includes an inside camera, a temperature/humidity sensor, and an automatic temperature/humidity adjustment function. An example is described where the "automatic mode" is selected as the operation mode and "low" is selected as the refrigerator temperature using the tablet terminal, and this information is transmitted to the CPU in the flow (a).

The camera in the refrigerator serving as the object detection unit 32 captures an image in at least a range including a food product preserved between the electrodes, and this information is transmitted to the management server 40 in the flows (b) and (c). Then, in the management server 40, the type and the state of the target food product is identified by AI-based image recognition, for example. The range of image capturing by the camera in the refrigerator preferably covers the entirety of the stored food product, and a plurality of cameras can be provided if necessary. Furthermore, information detected by the temperature/humidity sensor in the refrigerator serving as the object detection unit 32 is transmitted to the management server 40 in the flows (b) and (c). The management server 40 uses the type and the state of the food product identified by the image recognition and the information about the temperature and the humidity in the refrigerator transmitted thereto, to calculate the control parameter and/or the control value related to the output voltage and/or output current of the current voltage application unit 11 while taking the electromagnetic field to be generated by the electrodes 13 and 14 into consideration. The control parameter and/or the control value varies depending on the type and the state of the food product preserved, that is, varies among a case where leafy vegetable is preserved, a case where raw sea bream is stored, and a case where cooked (boiled) sea bream is preserved.

In the flow (d), the control parameter and/or the control value is transmitted to the control unit 36, and the output voltage and/or output current of the current voltage application unit 11 is appropriately controlled based on the control parameter and/or the control value. Furthermore, in the flow (f), the feedback control is performed on the output voltage and/or output current of the current voltage application unit 11, based on the detection value from the detection unit 38. In the flow (g), the temperature and humidity of the refrigerator are appropriately controlled based on the information ("low" refrigerator temperature) input in the flow (a), the information calculated by the management server 40, and the like.

In the flow (h), various pieces of information related to the food product stored can be displayed on the tablet terminal together with the information transmitted from the management server 40. An example of the information that can be displayed on the tablet terminal is at least one of the type and the state of the food product preserved, a preserved date, best before date, notification on a food product that is close to the best before date, menu of a dish prepared using the food product preserved, a recipe, a shopping list, and the like. In the flow (i), data required for the calculation in the management server 40 may be acquired. The information similar to that obtained by the management server 40 can be acquired by the communication function of the tablet terminal. Thus, a URL and the like may be transmitted in the flows (d) and (h), whereby the communication amount in the flows (d) and (h) can be reduced.

Next, an operation of the present embodiment is described based on a configuration example in a case where the housing 50 is a container. In this example, a tablet terminal is used as the man-machine interface 31, the container is provided with the GPS, and the management database and the management server are provided to the warehouse in which the container is stored. An example is described where information including the "automatic mode" as the operation mode and "apple harvested on Z (day), Y (month), X (year) (just harvested)" as the type and the state of the object is transmitted to the control unit 36 in the flow (a).

The GPS serving as the object detection unit 32 transmits information about the position of the container to the management server 40 in the flows (b) and (c) together with the information about the type and the state of the object. Thus, the management server 40 recognizes the position of the container, and stores information indicating that the container including the "apple harvested on Z (day), Y (month), X (year)" was transported by land from the harvested location and stored in a predetermined warehouse. The management server 40 can also access (the flow (i) described above) the management database of such a warehouse, and thus can recognize data about the management status of the container in the warehouse.

The management server 40 uses information (including the information indicating the position of the container, the type and the state of the object, the status in the warehouse, the location, the season, weather, weather forecast, and information acquired in the flow (i) such as a status of a group of containers related to the container) to calculate the control parameter and/or the control value related to the output voltage and/or output current of the current voltage application unit 11 while taking the electromagnetic field to be generated from the electrodes 13 and 14 into consideration. Thus, the management server 40 can calculate the control parameter and/or the control value appropriate for storing the "apple harvested on Z (day), Y (month), X (year)" in a predetermined warehouse.

In the flow (d), the control parameter and/or the control value is transmitted to the control unit 36, and the output voltage and/or output current of the AC component voltage generation unit 11 and the DC component voltage generation unit 12 is appropriately controlled based on the control parameter and/or the control value. Furthermore, in the flow (f), feedback control is performed on the output voltage and/or output current of the AC component voltage generation unit 11 and the DC component voltage generation unit 12 based on the detection value from the detection unit 38. In the example described herein, the container has no temperature control function, and thus the flow (g) is omitted.

In the flow (h), the tablet terminal can display various types of information about the object stored in the container, together with the information transmitted from the management server 40. An example of the information that can be displayed on the tablet terminal is at least one of the type and the state of the food product stored in the container, a route and history of transportation, a future distribution schedule, the warehouse currently storing the object, the management status in the warehouse, when the object is ripe, best before date, and other information related to the container. In the flow (i), information required for managing the container is directly transmitted from the management server 40 to the management server of the management database for the warehouse currently storing the container, to be used for managing the warehouse.

Next, an operation of the present embodiment is described based on a configuration example in a case where the housing 50 is a fryer. In this example, a tablet terminal is used as the man-machine interface 31, a camera of the tablet terminal is used instead of a camera of the object detection sensor, and an automatic adjustment function for the temperature of the oil of the fryer is provided. An example is described where the "automatic mode" is selected as the operation mode and "automatic" is selected as the oil temperature using the tablet terminal, and information indicating these is transmitted to the CPU in the flow (a).

An image of a food product cooked with the fryer is captured using the camera of the tablet terminal instead of the camera of the object detection unit 32, and information of the image is transmitted to the management server 40 in the flow (c). A camera built in the fryer may be used as the object detection unit 32, instead of the camera of the tablet terminal. The image of the food product may only be captured at an initial timing when the cooked food is changed. The information about the oil temperature from the fryer serving as the object detection unit 32 is also transmitted to the management server 40 in the flows (b) and (c). Furthermore, a sensor that measures the amount of moisture in the food product, a sensor that measures the temperature of the food product, and the like may be provided, and information from these sensors may be transmitted to the management server 40 in the flows (b) and (c) if necessary.

The management server 40 determines the type and the state of the target food product through the image recognition using AI, for example. The management server 40 sets the temperature of the oil of the fryer and calculates the control parameter and/or the control value related to the output voltage and/or output current of the current voltage application unit 11 based on the electromagnetic field to be generated from the electrodes 13 and 14, by using the type and the state of the food product determined by the image recognition, various pieces of information transmitted in the flow (c), and information acquired in the flow (i) such as the season, weather, weather forecast, date and time, location, and store congestion. The control parameter and/or the control value as well as the temperature of the oil of the fryer varies in accordance with the type and the state of the cooked food product, that is, among a case where fried shrimps are cooked, a case where fried potatoes are cooked, and a case where deep-fried chicken is cooked.

In the flow (d), the control parameter and/or the control value is transmitted to the CPU 36, and the output voltage and/or output current of the current voltage application unit 11 is appropriately controlled based on these. In the flow (f), feedback control is performed on the output voltage and/or output current of the current voltage application unit 11 based on the detection value from the detection unit 38. In the flow (g), the temperature of the oil of the fryer is appropriately controlled based on the information calculated by the management server 40.

In the flow (h), the tablet terminal can display various types of information related to the food product to be cooked together with the information transmitted from the management server 40. An example of the information that can be displayed on the tablet terminal is at least one of the type and the state of the food product cooked, the temperature of the oil of the fryer, the number of cooked dishes, a history of the cooked food products, and a food product scheduled to be cooked next. In the flow (i), data required for the calculation in the management server 40 is acquired. Information similar to that acquired by the management server 40 can be acquired by a communication function of the tablet terminal. Thus, a URL and the like may be transmitted in the flows (d) and (h), whereby the communication amount in the flows (d) and (h) can be reduced.

[Fourth modification]

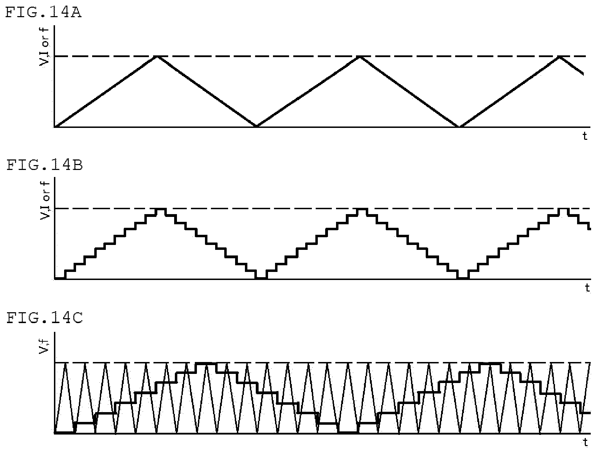

A quality control apparatus, a quality control method, a program, and a storage medium according to a fourth modification of the present invention will be described with reference to FIG. 14. For configurations that are the same as those in FIG. 1 to FIG. 13, the same reference numerals are used, and the descriptions thereof are omitted. In the quality control apparatuses 1 according to the first embodiment and the first to third modifications, the current value or voltage value and the frequency of the current or voltage are set to be predetermined values. In the fourth modification, the current value or voltage value and/or the frequency are changed within a predetermined range with a predetermined pattern, and thus are swept. FIG. 14A illustrates an example where the voltage value, current value, or frequency is linearly and continuously swept. FIG. 14B illustrates an example where the voltage value, current value, or frequency is changed linearly and stepwise. In FIG. 14C, for example, the voltage value is changed stepwise, and the frequency is swept linearly and continuously, or the frequency is changed stepwise and the voltage value is swept linearly and continuously, whereby electromagnetic waves with an appropriate current value or a voltage value and/or an appropriate frequency can be automatically generated for any target. Thus, an appropriate current value, voltage value, or frequency is generated at a predetermined timing within a sweeping range. Note that FIG. 14C is merely an example, and thus should not be construed in a limiting sense. In FIG. 14C, while one value is fixed, the other value changes from 0 to the peak and then from the peak to 0. However, this should not be construed in a limited sense. For example, a change may be repeated in which one value increases from 0 to the peak while the other value is fixed, and then decreases from the peak to 0 when the other value changes stepwise and is fixed at a certain value. In FIG. 14C, while one value changes stepwise, the other value changes from 0 to the peak continuously and frequently. However, this should not be construed in a limiting sense. For example, while one value changes gently and continuously, the other value may change from 0 to the peak continuously and frequently.

The sweeping pattern is not limited to those illustrated in FIG. 14. For example, in addition to the linear or stepwise change, a curved change, sinusoidal change, smooth analog change, discrete change, random change, and the like may be employed, for example. An AC voltage value, a DC voltage value, an AC current value, a DC current value, a frequency, and the like may be changed. In such a case, the values may be changed one by one, a plurality of the values may be changed in an interlocked manner (see, for example, the example of FIG. 14C), or a plurality of the values may be simultaneously changed. The sweep range may be within a range defined in the first to the third modifications, for example, or may be expanded to be even wider than such a range.

For any target, an appropriate current value, voltage value, or frequency is generated at a predetermined timing within a sweeping range. Furthermore, through feedback by the object detection sensor 32 and the like, the controller 10 may recognize the state of the target and analyze the state in association with the pattern of the sweep change or the analysis may be performed on the server side, so that an appropriate (or optimum) current value, voltage value, or frequency can be automatically detected. The detected appropriate value may be shared with another controller 10 through a server, in addition to being used by the controller 10 for the control thereafter.

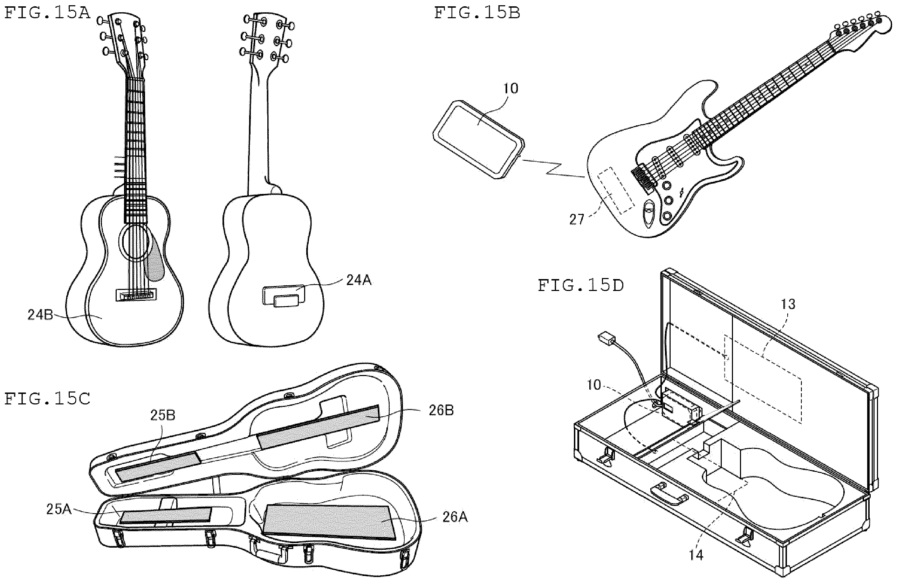

The following describes a sound quality control apparatus 1 according to a first embodiment by taking stringed musical instruments as an example. There are a case where an electrode or electrodes are directly attached to the musical instruments and a case where an electrode or electrodes are attached to musical instrument cases. In sensory tests, electrodes were attached to musical instrument cases and irradiated with electromagnetic waves for a predetermined period of time, and then performance of musical instruments was examined. FIG. 15(A) shows an electrode 24 attached to a guitar, FIG. 15(B) shows electrodes 25 to 28 attached to a guitar case, and FIG. 15(C) shows electrodes attached to the inside of the guitar.

Depending on the position where the electrode or electrodes are attached to the guitar or the guitar case, the direction of the electromagnetic waves applied from the electrodes to the guitar is adjusted, the moisture inside or on the surface of the guitar is micronized, while the micronized moisture is arranged in a pearl-chain structure, and the arrangement direction is controlled to a desired direction in accordance with the applied electromagnetic waves, so that the quality of the guitar can be controlled. Since the state of moisture contained in wood, which is a material of the guitar, influences the sound quality of the guitar in particular, controlling the state of moisture structure of the wood in each part of the guitar helps sound quality improvement of the guitar. The arrangement and number of electrodes can be adjusted according to the structure of the guitar and the structure of the case. For example, two pairs of electrodes can be disposed in the directions orthogonal to each other so that an electromagnetic field of optional strength and direction can be generated in a two-dimensional direction. For example, three pairs of electrodes can be disposed in the directions orthogonal to each other so that an electromagnetic field of optional strength and direction can be generated in three-dimensional directions. In these cases, when an electromagnetic field of optional strength and direction is applied from the electrodes to the guitar in the two-dimensional or three-dimensional directions, the moisture inside or on the surface of the guitar is micronized in accordance with the shape of the guitar, while the micronized moisture is arranged in a pearl-chain structure, and the arrangement direction is controlled to a desired direction, so that the quality of the guitar can be controlled.

In FIG. 15(A), an electrode 24B that is a negative electrode (an earth-side electrode) is attached to a front board of the guitar, and an electrode 24A that is a positive electrode is attached to a back board of the guitar. The controller 10 (illustration omitted) is disposed away from the guitar, and the controller 10 may be attached to the guitar. While the voltage applied to the electrode when the guitar is irradiated with electromagnetic waves is not particularly limited, AC voltage of 100 V with a frequency of 50 kHz may be adopted. Effective irradiation time of the electromagnetic waves is generally 5 minutes or longer, and although the irradiation time is not particularly limited, the electromagnetic waves may be applied for about 10 minutes, for example. Therefore, when electromagnetic waves are applied from electrodes for about 10 minutes before using a guitar, then the action on the moisture present inside or on the surface of the guitar, obtained by irradiating the guitar with electromagnetic waves by the sound quality control apparatus of the present embodiment, continues even after the irradiation of electromagnetic waves is stopped, so that excellent effects as described later are sustained. Accordingly, power supply to the controller needs to be performed for only 10 minutes, for example, to irradiate the guitar with electromagnetic waves from the electrodes, and therefore how the power is supplied becomes more flexible, and therefore, the power supply can be a battery, for example, a rechargeable battery. If the power supply is a rechargeable battery, the battery may be charged when the guitar is not in use and when commercial power supply is available. Then, the guitar may be irradiated with electromagnetic waves from the electrodes for 10 minutes before the guitar needs to be played, for example. FIG. 15(A) illustrates an example where the electrodes 24A and 24B are attached to the front board and the back board of the body of the guitar. However, the present embodiment is not limited to this configuration, and the electrodes may be attached to the neck or the side boards of the guitar. The arrangement of the electrodes 24A and 24B is determined by taking into account the influence of the electrodes on vibration and resonance of the guitar.

In FIG. 15(B), an electrode 27 is built into the body of an electric guitar. Although the electrode 27 is illustrated as a single electrode, a pair of electrodes may be adopted, and in that case, for example, a negative electrode (an earth-side electrode) is attached to the front board side of the body, and a positive electrode is attached to the back board side of the body. The controller 10 (illustration omitted) is disposed away from the guitar, and the controller 10 may be attached to the guitar. While the voltage applied to the electrode when the guitar is irradiated with electromagnetic waves is not particularly limited, AC voltage of 100 V with a frequency of 50 kHz may be adopted. As in the case of FIG. 15(A), effective irradiation time of the electromagnetic waves is generally 5 minutes or longer, and although the irradiation time is not particularly limited, the electromagnetic waves may be applied for about 10 minutes, for example. Then, the action on the moisture present inside or on the surface of the guitar, obtained by irradiating the guitar with electromagnetic waves by the quality control apparatus of the present embodiment, continues even without application of electromagnetic waves, so that excellent effects as described later are sustained.

In FIG. 15(C), an electrode 25A that is a positive electrode is attached to a portion corresponding to the neck on the bottom surface of the guitar case, an electrode 25B that is a negative electrode (earth-side electrode) is attached to a portion corresponding to the neck on the inner surface of a lid of the guitar case, an electrode 26A that is a positive electrode is attached to a portion corresponding to the body on the bottom surface of the guitar case, and an electrode 26B that is a negative electrode (earth-side electrode) is attached to a portion corresponding to the body on the inner surface of the lid of the guitar case. The controller 10 (illustration omitted) is attached to the guitar case, and a battery-powered controller is preferably adopted as the controller 10, and the controller 10 is not particularly limited thereto. The controller 10 can be provided at a position away from the guitar case or can be powered by a commercial power supply. The voltage applied to the electrode to irradiate the guitar with electromagnetic waves is not particularly limited, and AC voltage of 100 V with a frequency of 50 kHz may be adopted.

FIG. 15(C) illustrates an example where the electrodes are provided on the inner surface of a guitar case, and the arrangement of the electrodes is merely an example and is not intended to limit the present embodiment thereto. The number of electrodes may be at least one, and when, for example, one pair or two or more pairs of electrodes are provided, the sound quality control apparatus of the present embodiment can irradiate the guitar with electromagnetic waves. The setting for irradiating electromagnetic waves from electrodes provided on the inner surface of the guitar case using the sound quality control apparatus of the present embodiment are not particularly limited, and the voltage applied to the electrodes is AC voltage of 100 V with a frequency of 50 kHz, and the application time is 10 minutes. For example, when the quality control apparatus of the present embodiment irradiates the guitar with electromagnetic waves for 10 minutes before use, then the action on the moisture present inside or on the surface of the guitar, obtained by irradiating the guitar with electromagnetic waves by the quality control apparatus of the present embodiment, continues even after the irradiation of electromagnetic waves is stopped and the guitar is removed from a storage case, so that excellent effects as described later are sustained. Thus, the effects persist even after the guitar is removed from the storage case, and therefore when the electrode of the sound quality control apparatus 1 is provided in the storage case, there is no need to attach the sound quality control apparatus 1 on the body of the guitar itself. Accordingly, the sound quality control apparatus 1 does not exert unnecessary influence on the original vibration or resonance characteristics possessed by the guitar.

FIG. 15(D) shows another example where the quality control apparatus of the present embodiment is attached to a guitar case. The electrode 13 is attached to the inner surface of the lid of the guitar case, the electrode 14 is attached to the bottom surface of a guitar storage part, and a controller 10 is attached to the inner side surface of the guitar case. Although FIG. 15(D) shows a power line for supplying electric power from the commercial power supply, the present embodiment is not limited thereto, and it is possible to adopt a battery-operated system, for example. The controller 10 can be provided at a position away from the guitar case. The voltage applied to the electrode to irradiate the guitar with electromagnetic waves is not particularly limited, and AC voltage of 100 V with a frequency of 50 kHz may be adopted.

FIG. 15(D) illustrates an example where a pair of electrodes are respectively provided on the inner surface and the bottom surface of the guitar case, and the arrangement of the electrodes is merely an example and is not intended to limit the present embodiment thereto. The number of electrodes may be at least one, and when, for example, one pair or two or more pairs of electrodes are provided, the sound quality control apparatus of the present embodiment can irradiate the guitar with electromagnetic waves. The settings for irradiating electromagnetic waves from electrodes provided on the inner surface of the guitar case using the sound quality control apparatus of the present embodiment are not particularly limited, and the voltage applied to the electrodes is AC voltage of 100 V with a frequency of 50 kHz, and the application time is 10 minutes. For example, when the quality control apparatus of the present embodiment irradiates the guitar with electromagnetic waves for 10 minutes before use, then the action on the moisture present inside or on the surface of the guitar, obtained by irradiating the guitar with electromagnetic waves by the quality control apparatus of the present embodiment, continues even after the irradiation of electromagnetic waves is stopped and the guitar is removed from a storage case, so that excellent effects as described later are sustained.

In the quality control apparatus shown in FIG. 15(D), the controller 10 further includes a built-in or external thermometer and hygrometer. The controller 10 measures the temperature and humidity in the guitar case and controls the current or voltage applied to the electrodes 13 and 14 so as to apply to the guitar an electromagnetic field suitable for the temperature and humidity in the guitar case. On the outer surface of the controller 10 or the guitar case, a display unit that displays information from the controller 10 is provided. The display unit can display the temperature and humidity detected by the thermometer and hygrometer, along with control information. The control information includes control parameters, such as power ON/OFF setting modes, setting values, and measurement values.

The types of musical instruments are not limited to stringed musical instruments, and the sound quality control apparatus may be applicable to all kinds of musical instruments, such as wind instruments and percussion instruments. Examples of musical instruments include: musical instruments made of wood materials such as violins, guitars, cellos, basses, ukuleles, flutes, reeds, pianos, xylophones, and Japanese harps (koto); musical instruments made of leather materials such as drums and Japanese drums; and musical instruments made of wood and leather materials such as Japanese harps (koto), and Japanese stringed musical instruments (shamisen). Acoustic devices other than the musical instruments are also the targets of the present embodiment. For example, audio equipment using wood materials such as speakers and woofers, and hearing equipment using wood or resin materials such as headphones are also included in the present embodiment.

<Sensory test>

After tuning of a guitar used by each subject is completed, first to sixth strings of each guitar are played with the same force, and then chords of open strings are played. The played sound is recorded. Next, a front surface, a back surface, a side board, a neck, and strings of each guitar are irradiated with electromagnetic waves generated by the sound quality control apparatus of the present embodiment for 10 minutes each, and then, the first to sixth strings are played with the same force and then chords of open strings are played. The played sound is recorded. The subjects evaluated the sound quality of the guitars they heard in the test, for each item including sustain, sound vibration, and attack sound, and also evaluated the slipperiness of the strings the subjects felt when playing the guitars. The electromagnetic wave control parameters by the sound quality control apparatus of the present embodiment were AC voltage of 100 V and the frequency of 50kHz.

<Result of Sensory Test>

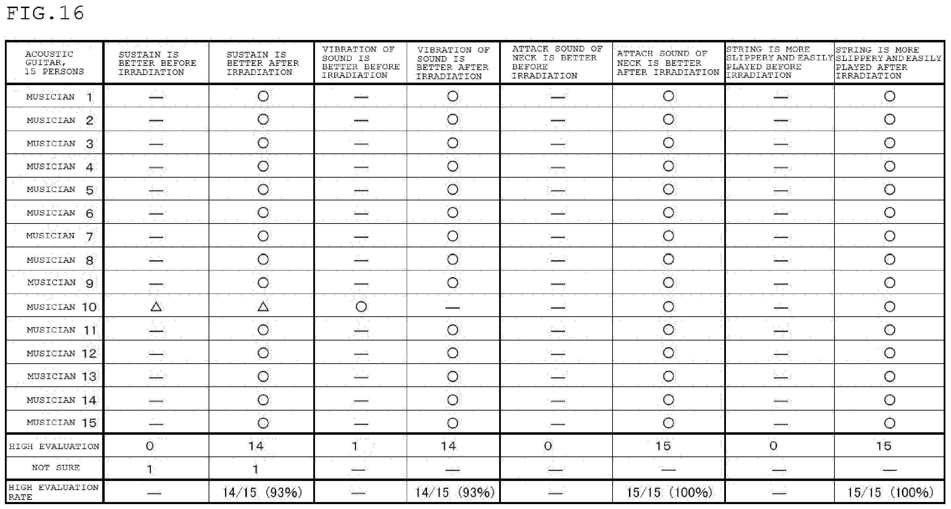

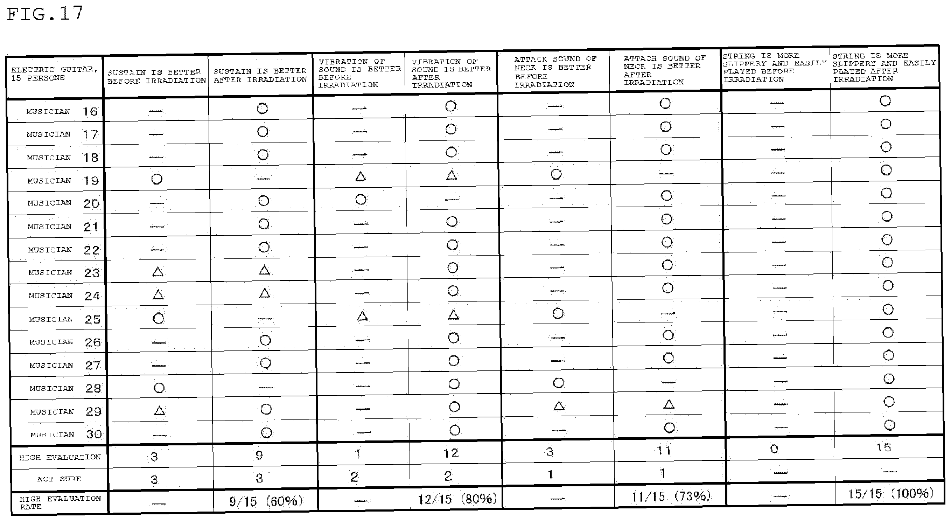

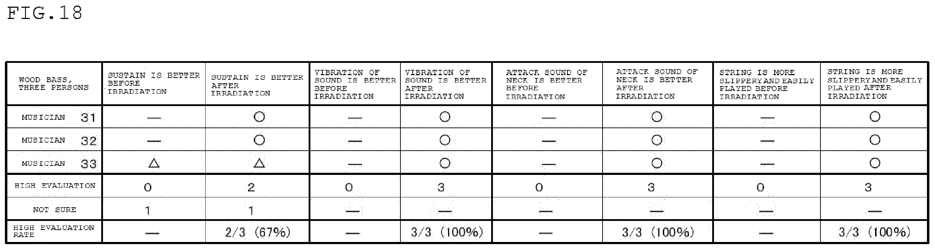

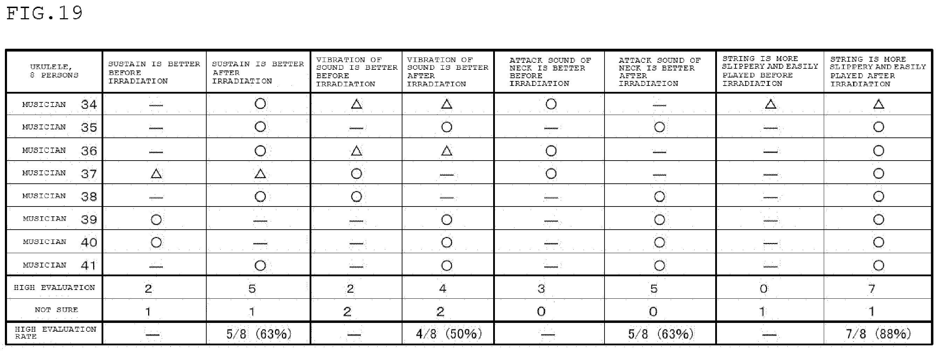

FIG. 16 illustrates the result of the sensory test on acoustic guitars. FIG. 17 illustrates the result of the sensory test about tones obtained when electric guitars are connected to an amplifier. FIG. 18 illustrates the result of the sensory test on wood basses. FIG. 19 illustrates the result of the sensory test on ukuleles.

In FIG. 16, fifteen subjects performed the sensory test on acoustic guitars. Fourteen subjects evaluated that sustain was better after irradiation, with a high evaluation rate of 93%. Fourteen subjects evaluated that the vibration of sounds was better after irradiation, with a high evaluation rate of 93%. Fifteen subjects evaluated that the attack sound of the neck was better after irradiation, with a high evaluation rate of 100%. Fifteen subjects evaluated that the strings were more slippery and easily played, with a high evaluation rate of 100%. As a result of the sensory test on the acoustic guitars, the high evaluation rate is higher after irradiation of electromagnetic waves by the sound quality control apparatus of the present embodiment in all the evaluation items.

In FIG. 17, fifteen subjects performed the sensory test on electric guitars. Nine subjects evaluated that sustain was better after irradiation, with a high evaluation rate of 60%. Twelve subjects evaluated that the vibration of sound was better after irradiation, with a high evaluation rate of 80%. Eleven subjects evaluated that the attack sound of the neck was better after irradiation, with a high evaluation rate of 73%. Fifteen subjects evaluated that the strings were more slippery and easily played, with a high evaluation rate of 100%. As a result of the sensory test on the electric guitars, the high evaluation rate is higher after irradiation of electromagnetic waves by the sound quality control apparatus of the present embodiment in all the evaluation items.

In FIG. 18, three subjects performed the sensory test on wood basses. Two subjects evaluated that sustain was better after irradiation, with a high evaluation rate of 66%. Three subjects evaluated that the vibration of sound was better after irradiation, with a high evaluation rate of 100%. Three subjects evaluated that the attack sound of the neck was better after irradiation, with a high evaluation rate of 100%. Three subjects evaluated that the strings were more slippery and easily played, with a high evaluation rate of 100%. As a result of the sensory test on the wood basses, the high evaluation rate is higher after irradiation of electromagnetic waves by the sound quality control apparatus of the present embodiment in all the evaluation items.

In FIG. 19, eight subjects performed the sensory test on ukuleles. Five subjects evaluated that sustain was better after irradiation, with a high evaluation rate of 73%. Four subjects evaluated that the vibration of sound was better after irradiation, with a high evaluation rate of 50%. Five subjects evaluated that the attack sound of the neck was better after irradiation, with a high evaluation rate of 63%. Seven subjects evaluated that the strings were more slippery and easily played, with a high evaluation rate of 85%. As a result of the sensory test on the ukuleles, the high evaluation rate is higher after irradiation of electromagnetic waves by the sound quality control apparatus of the present embodiment in all the evaluation items.

<Sensory Test Comments 1>

Comments (a) to (c) below are from three craft guitar experts in ESP Ochanomizu shop. A comment (d) is from a professional guitar player (former Fernandes guitar technician Daisuke Kondo).

(a) I tried Solund&e (an apparatus of the present embodiment) with few acoustic and electric guitars in ESP and in my own private recording studio.
(b) In conclusion, everyone felt that "the sound changers to a better quality after irradiation by Sound&e (with magnetic waves from the apparatus of the present embodiment).
(C) Regarding how everyone felt that the quality was better: "the rise of sound (body and neck resonance) itself gains an increased vintage timbre that is obtained when the water holding capacity reaches an optimally reduced state over a long period of time, and the body and neck response becomes faster when low to high strings are attacked, and we experienced phenomena such as so-called good body resonance and edgy sound (shaper tone)."
(d) An original custom guitar of 1997, which is an acoustic guitar not played in about 2 years, was used. "I hadn't played it for a while and so the sound was bad, but the sound improved. The sound no longer had spiky contour, became well balanced, and produced an acoustic warmth. Neck resonance was felt to be doubled. When chords were played, each sound was clear and harmonized. The strings were extremely smooth. The amplified sound of the electric guitar that I had not played for about one year was different from what was expected. The sound of each tone was sharper and the transparency of sound was improved . It was a change that I have never experienced before. The change was so immense that I just could not understand what happened.

<Sensory Test Comments 2>

A comment (e) below is an evaluation comment by a violinist. An electromagnetic field was applied to the front board, back board, side boards, neck, and strings for 10 minutes each, under the condition of voltage applied to the electrode being AC voltage of 100 V with 50 kHz. The violin to be evaluated was made by Pressenda, Italy in 1825 with Pernambuco wood.

(e) "The sound became smooth, very clear, and transparent. Sound became smooth, very clear, and transparent. A sound that was rusty turned bright. Sound volume increased. (Generally), it is difficult to output clear sound in mid-tone range, but it became easier to output clear sounds (after application of the electromagnetic field). As a whole, the sounds became balanced. In the high-tone range, the attack of sounds became clearer. Sound output was improved. Refreshing sound. The bow stuck better."

As described in the foregoing, the sensory tests on the acoustic guitars, electric guitars, wood basses, and ukuleles demonstrated that in each of the items of sustain, sound resolution, and attack sound of the sound quality or quality of each musical instrument, the high evaluation rate was higher and the evaluations in comments from musicians were also higher when electromagnetic waves were irradiated by the sound quality control apparatus of the present embodiment. The result indicates that irradiation of electromagnetic waves by the sound quality control apparatus of the present embodiment has the effect of improving the sound quality or quality of the musical instruments. In the sensory tests of the sound quality control apparatus of the present embodiment, the parameters of the control apparatus were AC voltage value of 100 V and the frequency of 50 kHz, and the control parameters that can be adopted in the present embodiment are not limited to this. The AC voltage value can be adjusted between 0 V and 2000 V with the frequency between 0 and 1 MH, and also the DC voltage, adjusted between 0 V and 2000 V, may be applied as a DC offset voltage, for example.

The sound quality control apparatus of the present embodiment is applicable not only to the musical instrument body and musical instrument case, but is also applicable to, for example, a manufacturing process of the guitar, and more specifically applicable to a step of drying varnish, a step of drying paint, a step of shaving wood, a drying step and the like. When musical instruments in manufacturing process are irradiated with predetermined electromagnetic waves from the electrodes of the sound quality control apparatus of the present embodiment in each manufacturing step, the sound quality or quality of the musical instruments can be improved. For example, when the following steps are included, the sound quality or quality of the musical instruments can be improved. An electromagnetic field is applied to wood while it is drying, and thereby the moisture inside the wood is minimized, aligned, and then dried. Before applying varnish, an electromagnetic field is applied to the varnish to minimize and align the moisture contained in the varnish, and then the varnish is applied to the guitar. Reduction of the effect in a shaved portion of the wood is alleviated. Instrument parts or products themselves are applied with an electromagnetic field before drying to minimize and align all the moisture in the material, and then drying is performed. After the musical instruments are completed as a product, they are applied with an electromagnetic field to minimize and align all the moisture in the material, and then drying is performed. The sound quality control apparatus is applicable not only to finished products, but also to musical instrument parts. For example, irradiating the strings of a guitar with predetermined electromagnetic waves from the electrodes of the sound quality control apparatus of the present embodiment provides the effect of smoothing the strings and reducing sound vibration when the strings are rubbed.

Many musical instruments are made of wood, and there are two types of water inside the wood: free water and bonded water. Musical instruments primarily use air-dry materials as their wood, and the moisture content of these materials is about 11 to 17%. Free water and bonded water also exist inside the air-dry materials, and bonded water is integrated with the tissues of wood through hydrogen bond. The acoustic performance of wood is greatly influenced by the drying state, that is, the moisture state inside the wood. If the wood is too dry or too humid, it is not in an appropriate state. Accordingly, a predetermined electromagnetic field is applied to the musical instrument from the electrodes of the sound quality control apparatus of the present embodiment, to micronize the moisture present in the wood and arrange the moisture in a pearl-chain structure in a specific direction. As a result, free water bodies also bind to each other and are arranged in a pearl-chain structure. In addition, since bonded water is also arranged in a specific direction, a shrink state of wood is stabilized, and vibration characteristics, transmission characteristics of sound waves in wood, strength characteristics of wood and the like are adjusted or influenced, so that the acoustic performance of wood is improved. In the case of materials other than wood, such as leather, resin, rubber, and metal, a predetermined electromagnetic field, applied to the musical instrument from the electrodes of the sound quality control apparatus of the present embodiment, acts on the moisture inside or on the surface of each material to micronize and arrange the moisture in a pearl-chain structure in a specific direction, so that the acoustic performance of the musical instrument is improved.

Applying a predetermined electromagnetic field to musical instruments from the electrodes of the sound quality control apparatus of the present embodiment provides an excellent acoustic effect also for the strings of guitars. Guitar strings are divided into plain strings and wound strings. The plain strings are mainly used for relatively thin first, second and third strings, while the wound strings are mainly used for relatively thick fourth, fifth, and sixth strings. The plain strings are strings made of a single material. For the plain strings, chemical fibers such as nylon, piano wires which are a type of steel wire or the like are used. The wound strings are made of a winding wire wound around a core wire. For example, in the case of gut strings used in classic guitars, chemical fibers such as nylon for the core wire, and silver-plated copper wires or the like for the winding wire. In the case of electric guitars and folk guitars, tin-plated piano wires are used as the plain strings, while piano wires are used as the core wire of the wound strings, and copper alloys, such as bronze, are used for the winding wires. The predetermined electromagnetic field, applied to the musical instrument from the electrodes of the sound quality control apparatus of the present embodiment, micronize the moisture present inside or on the surface of these string materials and arranges the moisture in a pearl-chain structure in a specific direction, so that the acoustic performance of the strings is improved.

Electric guitars can be affected by electromagnetic noise because they use pickups to convert vibration of guitar reduction into an electrical signal. The frequency of sound produced by the electric guitars is about 80 Hz to 2000 Hz, and the frequency of an upper limit sound that can be produced by an amplifier is about 7 kHz. As a musical instrument with a wide range of tones, an 88-key piano can play sound with a frequency of 27 to 4200 Hz. Since the audible range of the human ear is said to be between 20 Hz and 20 KHz, the electromagnetic field with a frequency of 50 kHz, generated from the electrodes of the sound quality control apparatus of the present embodiment, does not become noise for the musical instruments, nor is it perceived as noise by the human ear.

[Second embodiment]

The second embodiment describes examples of sports articles. Irradiating sports articles with electromagnetic waves by the quality control apparatus of the present embodiment provides, for example, the effect of controlling the slippage of racket guts to improve ball hitting sensation, and the effect of improving the quality of golf clubs to improve a flying distance. When electromagnetic waves are applied to a sports article using the quality control apparatus of the present embodiment, disposing an electrode or electrodes on the case or cover of the sports article facilitates application of the electromagnetic waves to a desired position of the sports article. Depending on the position of the electrodes attached to the case or cover of the sports article, the direction of the electromagnetic waves applied from the electrodes to the sports article are adjusted, the moisture inside or on the surface of the sports article is micronized while the micronized moisture is arranged in a pearl-chain structure, and the arrangement direction is controlled to a desired direction corresponding to the applied electromagnetic waves, so that the quality of the sports article can be controlled. The method of applying electromagnetic waves to the sports article is not limited to attaching electrodes to the case or cover of the sports article. For example, electrodes fixed on a workbench may apply an electromagnetic field to the sports article, or electrodes may be attached directly to the sports article. For example, two pairs of electrodes can be disposed in the directions orthogonal to each other to generate an electromagnetic field of optional strength and direction in two-dimensional directions. For example, three pairs of electrodes can be disposed in the directions orthogonal to each other to generate an electromagnetic field of optional strength and direction in three-dimensional directions. In these cases, when an electromagnetic field of optional strength and direction is applied from the electrodes to the sports article in the two-dimensional or three-dimensional directions, the moisture inside or on the surface of the sports article is micronized in accordance with the shape of the sports article while the micronized moisture is arranged in a pearl-chain structure, and the arrangement direction is controlled to a desired direction, so that the quality of the sports article can be controlled.

Although not particularly limited, the present embodiment is applicable to sports products including surfboards, body boards, skim boards, canoes, kayaks, yachts, boats, ships, vehicles, bikes, bicycles, airplanes, motor sports, bamboo swords, skateboards, snowboards, unicycles, guns, bows, arrows, cues, drivers (golf), irons (golf), putters (golf), golf balls, skis, stocks (ski), skateboards, roller skates, bats (baseball, cricket, softball, etc.), gloves (baseball, cricket, softball, etc.), balls for ball game (e.g. baseball, cricket, softball, soccer, rugby, American football, basketball, volleyball, tennis, squash, racquetball, etc.), lacrosse, badminton rackets, badminton shuttlecocks, tennis rackets, table tennis rackets, ping pong balls, shots, discs, javelins, hammers, or various goods, and storage cases such as storage cases for the above sports products. The quality of each sport article can be improved by irradiating each sport article with electromagnetic waves by the quality control apparatus of the present embodiment.

For the surfboards, body boards, and skim boards, electromagnetic waves irradiated by the quality control apparatus of the present embodiment act on the moisture inside or on the surface of board materials, and speed, flow, and maneuver are improved.

For canoes and kayaks, electromagnetic waves irradiated by the quality control apparatus of the present embodiment act on the moisture inside or on the surface of the materials of ship bodies or surface paints, so that the quality can be improved, such as the resistance of waves being reduced in a bow while maintaining an appropriate resistance when riding in a flow.

For yachts, boats, and ships, electromagnetic waves acts on the moisture inside or on the surface of the materials of ship bodies or surface paints, so that electromagnetic waves irradiated by the quality control apparatus of the present embodiment can reduce resistance with water, such as wave formation resistance, friction resistance, and viscous pressure resistance.

For vehicles, motorcycles, airplanes, and motor sport vehicles, the quality control apparatus of the present embodiment irradiates fuel with electromagnetic waves, so that the electromagnetic waves act on the moisture in the fuel, and thus fuel efficiency is improved.

For bicycles and unicycles, the quality control apparatus of the present embodiment irradiates fuel with electromagnetic waves, so that the electromagnetic waves act on oil and moisture at a joint or a contact point of each component in particular, which makes it possible to reduce the resistance of equipment such as chains, gears, pulleys, and hubs, or road resistance.

For bamboo swords (Kendo), electromagnetic waves irradiated by the quality control apparatus of the present embodiment act on the moisture inside or on the surface of bamboo, which makes it possible to improve the quality and also the durability of bamboo, and makes it harder to break.

For guns, electromagnetic waves irradiated by the quality control apparatus of the present embodiment act on the material of the guns themselves as well as component members of a cartridge, such as a warhead, a cartridge brass, gunpowder, a blasting cap, and particularly on the moisture present in each part, so that combustion speed in a chamber is properly adjusted. As a result, it is possible to improve accuracy and range, as well as to achieve quality improvement such as enhanced safety.

For bows, arrows, archeries, and crossbows, electromagnetic waves irradiated by the quality control apparatus of the present embodiment improve the performance of strings and board springs, and act also on the materials of bows and particularly on the moisture present inside or on the surface of each component, which achieves quality improvement such as improved accuracy and range.

For cues, electromagnetic waves irradiated by the quality control apparatus of the present embodiment act on the moisture in wood that is a raw material, which optimizes slipperiness of a shaft, the state of a tip and a tap, and impact transmission characteristics of wood, so that the force applied to a ball and the quality of rotation is improved.

For drivers (golf), irons (golf), and putters (golf), electromagnetic waves irradiated by the quality control apparatus of the present embodiment act on the materials of a portion where a shaft or a face is provided, also act on the moisture inside or on the surface of each part in particular by optimizing the moisture state on the surface of the face, exert influence on the transmission of force from face to the ball and on slide and spin of the ball, and improve the flight distance of the ball while optimizing the rotation given to the ball.

For golf balls, electromagnetic waves irradiated by the quality control apparatus of the present embodiment act on the moisture state in a core, inside a cover, on the surface of the cover, dimples and the like and exerts influence on the transmission of the force transmitted from a golf club, and on the slide and spin of the ball. In addition, with the relation between air resistance and the spin of the ball due to the moisture state of the dimples, the flight distance of the ball is improved, and directional stability is improved.

For skis and snowboards, electromagnetic waves irradiated by the quality control apparatus of the present embodiment act on the materials of the boards to optimize rigidity, elasticity or base states, and also act on wax applied to a base and particularly on the moisture present inside or on the surface of each component member or wax, so that lubrication friction can be reduced. For stocks (skis), electromagnetic waves act on the materials of the stocks, such as aluminum and carbon, to optimize rigidity and elasticity, and also act on the state of a ring and a ferrule and particularly on the moisture present inside or on the surface of each component member, to ensure appropriate contact with a snow surface.

For skateboards and roller skates, electromagnetic waves irradiated by the quality control apparatus of the present embodiment act on liquid such as oil or moisture present between each component member, to provide the effect of reducing device resistance, such as rotational resistance of bearings. The electromagnetic waves also act on a skateboard deck and a grip tape, and particularly on the moisture present inside or on the surface of each part, and causes effects on the rigidity and elasticity of the deck and the friction performance of the grip tape.

Bats (for baseball, cricket, softball, etc.) are made of highly rigid materials, and a node of vibration is set so that the impact on a grip area gripped by hands is reduced when hitting is performed at the center of hitting. Electromagnetic waves irradiated by the quality control apparatus of the present embodiment act on the materials of the bats, such as wood and metal, and particularly on the moisture present inside or on the surface of the bats, so that the way the vibration is transmitted inside the bats when the ball is hit with the bats is improved, while characteristics of force applied from the bats to ball or the rotation state are improved, which makes it possible to improve hitting efficiency. Hitting noise, generated when the hitting efficiency is improved by irradiation of electromagnetic waves by the quality control apparatus of the present embodiment, is clearly more transparent and clearer than the hitting noise before irradiation of electromagnetic waves. This effect is also related to the improvement of sound quality in the case of musical instruments.

Gloves (baseball, cricket, softball, etc.) are made of leather such as cowhide, and electromagnetic waves irradiated by the quality control apparatus of the present embodiment act on the moisture present inside or on the surface of leather, and improves the quality of leather, such as flexibility, hardness, cushioning characteristics, and durability.

For balls for ball game (e.g. baseball, cricket, softball, lacrosse, soccer, rugby, American football, basketball, volleyball, tennis, squash, racquetball, etc.), baseball uses a cork or low-repulsion rubber as the core of regulation balls, cricket uses a cork core. Softball uses a cork core or a kapok core, lacrosse uses hard rubber balls, soccer, rugby, American football, basketball, and volleyball use air tubes, such as butyl rubber tubes and latex rubber tubes, with the surface being made of natural leather, synthetic leather, rubber, resin or the like. Tennis uses rubber balls with a felt surface, and squash and racquetball use hollow rubber balls. When the quality control apparatus of the present embodiment irradiates these balls with electromagnetic waves, the electromagnetic waves act on the moisture of raw materials of the core materials to influence elasticity and rigidity, also act on the materials constituting surface skins and particularly on the moisture inside or on the surface of each part, and exert influence on impact transmission characteristics at the time of contact and on friction characteristics, slip characteristics, or other characteristics or provides other effects. This improves the characteristics of the balls, and improves quality in terms of ball hitting sensation, controllability, and spin characteristics.

For badminton rackets and tennis rackets, electromagnetic waves irradiated by the quality control apparatus of the present embodiment act on the materials of frames and shafts and influence the rigidity, elasticity, impact transmission characteristics or the like and further act on the strings and particularly on moisture present inside or on the surface of each part of the rackets or the strings, which improves the performance of strings, in terms of repulsion characteristics, slip characteristics, characteristics to apply spin to shuttles and balls, durability and the like and thereby improves the quality, such as hitting sensation, hitting speed, and controllability.

Since shuttlecocks of badminton are manufactured by inserting waterfowl feathers into a cork core, electromagnetic waves irradiated by the quality control apparatus of the present embodiment act on the moisture inside or on the surface of the cork and feathers, improve the characteristics of the force transmitted from the strings to the shuttlecock during a shot by the racket, and shuttlecock rotation characteristics, and thereby improve the quality, such as hitting sensation, hitting speed, and controllability.

Table tennis rackets are made of a single board of wood or made of a plywood board that is formed by attaching a plurality of sheets of wood or sheets of woven fiber such as carbon or ZL fiber, with the surface of the rackets being coated with rubber such as synthetic rubber or natural rubber, the rubber including backhand rubber, forehand rubber, and pimpled rubber. When the quality control apparatus of the present embodiment irradiates the table tennis rackets with electromagnetic waves, the electromagnetic waves act on the moisture inside and on the surface of wood, fiber, or rubber that are raw materials of the rackets, and adjust hitting force and rotational force that the rubber apples to a ping-pong ball at the time of impact, so that quality improvement, such as adjustment of ball hitting speed, improvement of hitting sensation, improvement of controllability (the trajectory of a hit ball, the amount of rotation, etc.), is achieved.

Ping-pong balls are hollow balls made of celluloid or plastic, and when the quality control apparatus of the present embodiment irradiates the ping-pong balls with electromagnetic waves, the electromagnetic waves act on the moisture inside or on the surface of celluloid or plastic that are raw material of the balls, and the hitting force and the rotational force applied by the rubber of the racket to the ping-pong balls during impact are adjusted, so that quality improvement, such as adjustment of ball hitting speed, improvement of hitting sensation, improvement of durability, and improvement of controllability (the trajectory of a hit ball, the amount of rotation, etc.), is achieved.

For shots for shot-putting, balls (ball, wire, grip) for hammer throw, and discs (wooden discs with a metal frame) for athletic sports, electromagnetic waves irradiated by the quality control apparatus of the present embodiment act on the moisture inside or on the surface, and provide the effects of improving grip performance by the thrower's hand, and improving a throw distance due to reduction of deviation from the center of gravity and reduction of air resistance.

Javelins for javelin throw for athletic sports are made up of a tip that is a distal end portion, a grip that is gripped by an athlete, and a handle that is a body portion. A javelin for men is 2.6 m to 2.7 m in length and weighs 805 g to 825 g, and a javelin for women is 2.2 m to 2.3 m in length and weighs 605 g to 625 g, the javelins being made of metal, such as duralumin and stainless steel, carbon fiber, graphite fiber or the like. When the quality control apparatus of the present embodiment irradiates the javelins with electromagnetic waves, the electromagnetic waves act on the moisture inside or on the surface of the material of the handle of the javelins, so that rotation around a long shaft, vibration characteristics, vibration damping characteristics and the like are adjusted, and also the friction characteristics or the like of the grip portion are adjusted, which makes it possible to increase a throw distance.

When at least one electrode, for example, one pair or more pairs of electrodes, are provided on the inner surface of a storage case for each of the above sports products, the quality control apparatus of the present embodiment can irradiate the stored sports products with electromagnetic waves. The setting for irradiating electromagnetic waves from electrodes provided on the inner surface of the storage case of each sport product using the quality control apparatus of the present embodiment is not particularly limited, and the voltage applied to the electrodes is AC voltage of 100 V with a frequency of 50 kHz, and the application time is one hour. For example, when the quality control apparatus of the present embodiment irradiates the sports products with electromagnetic waves for one hour before use, then the action on the moisture present inside or on the surface of each sport product, obtained by irradiating each sport product with electromagnetic waves by the quality control apparatus of the present embodiment, continues even after the irradiation of electromagnetic waves is stopped and each product is removed from the storage case, so that each effect as described above is sustained.

It is desirable to use a battery as the power supply of the quality control device provided in the storage case of each sport product. A period of time for each sport product to be irradiated with electromagnetic waves from the electrodes provided on the inner surface of the storage case is about one hour before each sport product is used as described before. Accordingly, even when the power supply is a battery, there is no need to increase the capacity of the battery, and when the battery is rechargeable, the battery can be charged while the quality control apparatus is not performing irradiation of electromagnetic waves. Although the expression that the electrodes are provided on the inner surface of the storage case of each sport product has been used here, this does not mean to limit that the electrodes are exposed to the inner surface of the storage case. In the preset embodiment, as long as the electrodes provided in the storage case can irradiate each sport product with electromagnetic waves, the electrodes can be disposed anywhere in the storage case. For example, the electrodes may be disposed so as to be embedded inside the storage case. In addition, the electrodes are not limited to plate-shaped electrodes, and thin electrodes or sheet-shaped electrodes can also be adopted, so that electrodes can be disposed so as to be adjusted to the shape of the storage case.

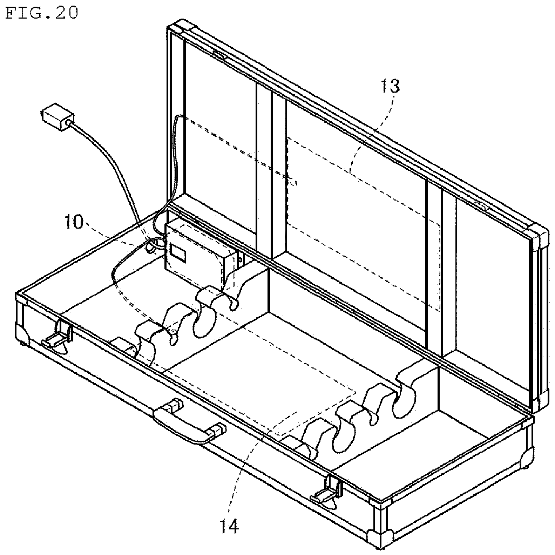

FIG. 20 shows an example of applying the quality control apparatus of the present embodiment to the case of baseball bats. The electrode 13 is attached to the inner surface of a lid of the bat case, the electrode 14 is attached to the bottom surface of a bat storage part, and the controller 10 is attached to the inner side surface of the bat case. Although FIG. 20 shows a power line for supplying electric power from a commercial power supply, the present embodiment is not limited to this, and it is possible to adopt a battery-operated system, for example. The controller 10 can also be provided at a position away from the guitar case. The voltage applied to the electrodes to irradiate the guitar with electromagnetic waves is not particularly limited, and AC voltage of 100 V with a frequency of 50 kHz may be adopted, for example.

FIG. 20 illustrates an example where a pair of electrodes are provided on the inner surface and the bottom surface of the bat case, and the arrangement of the electrodes is merely an example and is not intended to limit the present embodiment thereto. The number of electrodes may be at least one, and when, for example, one pair or more pairs of electrodes are provided, the sound quality control apparatus of the present embodiment can irradiate the bats with electromagnetic waves. The bat case in FIG. 20 can store four bats, and the present embodiment is not limited thereto. The number of bats to be stored may be, for example, three or less, or five or more. The setting for irradiating electromagnetic waves from the electrodes provided on the inner surface of the bat case using the quality control apparatus of the present embodiment is not particularly limited, and the voltage applied to the electrodes is AC voltage of 100 V with a frequency of 50 kHz, and the application time is one hour. For example, when the quality control apparatus of the present embodiment irradiates the bat with electromagnetic waves for one hour before use, then the action on the moisture present inside or on the surface of the bat, obtained by irradiating the bat with electromagnetic waves by the quality control apparatus of the present embodiment, continues even after the irradiation of electromagnetic waves is stopped and the bat is removed from a storage case, so that excellent effects as described above are sustained. Note that the application time of the electromagnetic field is not specified to one hour, and the application time of about 5 minutes also provides the effects.

In the quality control apparatus shown in FIG. 20, the controller 10 further includes a built-in or external thermometer and hygrometer. The controller 10 measures the temperature and humidity in the bat case and controls the current or voltage applied to the electrodes 13 and 14 so as to apply to the bat an electromagnetic field suitable for the temperature and humidity in the bat case. On the outer surface of the controller 10 or the bat case, there is a display unit that displays information from the controller 10, and the display unit can display the temperature and humidity detected by the thermometer and hygrometer, along with control information. The control information includes control parameters, such as power ON/OFF, setting modes, setting values, and measurement values.

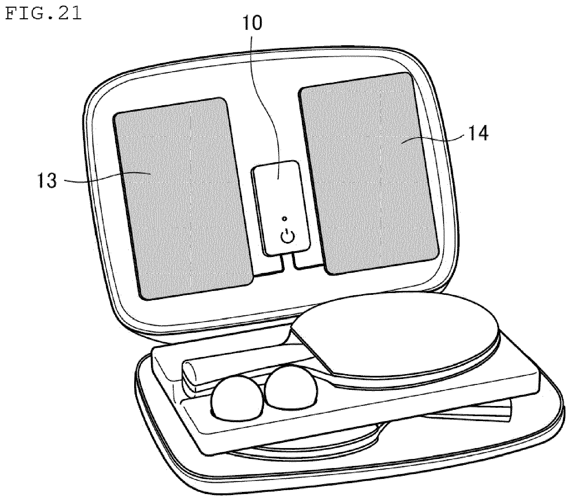

FIG. 21 shows an example of applying the quality control apparatus of the present embodiment to the case of a table tennis racket. For example, the table tennis case has a structure in which two substantially square-shaped cases, a bottom-side case and a lid-side case, are connected at one side, and both the cases are fastened by fixing parts such as fasteners, for example. In the table tennis case of the present embodiment, a pair of electrodes 13 and 14 and the controller 10 are attached to the inner top surface of the lid-side case. The arrangement of the electrodes 13 and 14 and the controller 10 is not particularly limited, and for example, the electrode 13 can be provided on the inner top surface of the lid-side case and the other electrode 14 can be provided on the inner bottom-side case, or both the electrodes 13 and 14 can be provided on the inner bottom surface of the bottom-side case. The electrodes 13 and 14 do not have to be exposed, and when, for example, the electrodes 13 and 14 are covered with a decorating fabric, cushioning material or the like, it is possible to prevent the electrodes from coming into direct contact with the table tennis racket, and to protect the rubber or the like of the table tennis racket. Although the power supply is not particularly limited, a commercial power supply can be used, for example, or a rechargeable battery can be used in consideration of portability, for example. The voltage applied to the electrodes is, for example, AC voltage of 100 V with 50kH.

In the state where the table tennis case in FIG. 21 houses two rackets and two ping-pong balls, with the bottom-side case and the lid-side case being overlapped and zipped together, the electrodes 13 and 14 are applied with voltage so as to apply an electromagnetic field to the rackets and the ping-pong balls from the electrodes. The application conditions of the electric field are, for example, AC voltage of 100 V with a frequency of 50 kHz, and application time is one hour. For example, when the quality control apparatus of the present embodiment irradiates the table tennis racket with electromagnetic waves for one hour before use, then the action on the moisture present inside or on the surface of the racket, obtained by irradiating the racket with electromagnetic waves by the quality control apparatus of the present embodiment, continues even after the irradiation of electromagnetic waves is stopped and the racket is removed from the storage case, so that excellent effects as described above are sustained. Note that the application time of the electromagnetic field is not specified to one hour, and the application time of about 5 minutes also provides the effects.

Sports products are made of various materials, and moisture is present inside or on the surface of each material. When the quality control apparatus of the present embodiment irradiates electromagnetic waves, the electromagnetic waves atomize the moisture present inside or on the surface of the materials of the sport products while arranging the moisture in a pearl-chain structure in a specific direction, so that the quality of sports products can be improved. In the case of metal materials, water molecules also present in the state of, for example, hydrogen bond or the like, and therefore electromagnetic waves irradiated by the quality control apparatus of the present embodiment act on the moisture present inside or on the surface of metal, so that the quality of sports products using metal materials can be improved.

Electromagnetic wave application conditions are set as appropriate according to the types, use states, use conditions or the like of the sports products. Although the AC voltage, the frequency, the application time or the like are illustrated in the embodiment described above, the present embodiment is not limited thereto, and these parameters are adjustable within the range of the electromagnetic field application conditions in the embodiments described before.

[Third embodiment]

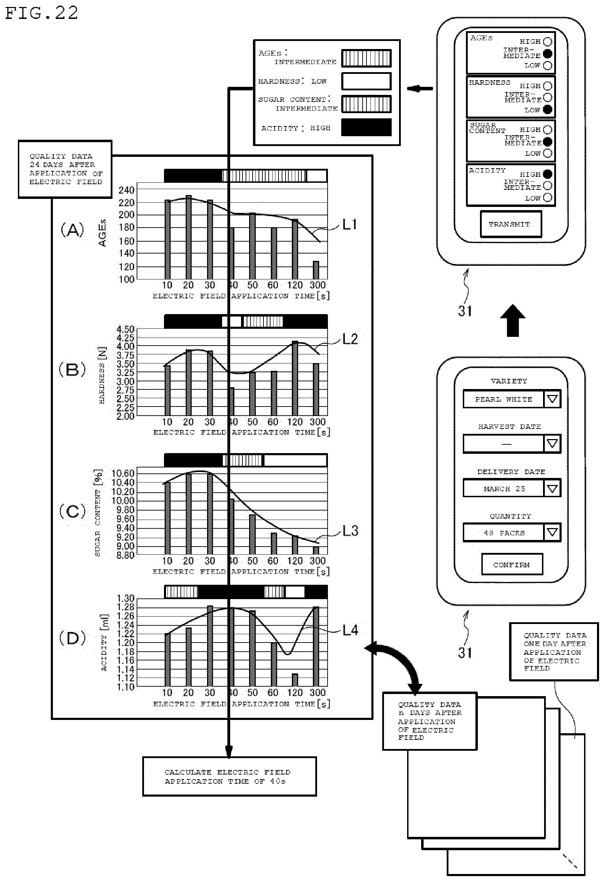

With reference to FIG. 22, an example will be described in which the quality control apparatus 1 of a third embodiment performs quality control of strawberries in distribution of the strawberries. In the present embodiment, an example where the quality control apparatus 1 is provided in a strawberry collecting place will be described, although the present invention is not particularly limited thereto. Strawberries produced by producers are inspected and graded at the collecting place, and then delivered to supermarkets and other stores by distributors. Consumers who purchase the strawberries that are sold at stores consume strawberries at home. In the collecting place where the strawberries produced by the producers (strawberry farmers) are collected in such distribution of the strawberries, the inspected and graded strawberries in a packaged state are applied with an electromagnetic field from an electrode or electrodes of the quality control apparatus 1 of the present embodiment, to control the quality of the strawberries to desired states as ordered. The management server 40 can comprehensively manage strawberry sales information at each store, strawberry production information (variety, production capacity, production status, production schedule) of a plurality of strawberry producers, strawberry collecting status in each collecting place, operation status of distributors and the like. As a result, the management server collects order information after discerning a strawberry stock status, sales information, or other information at each store, and transmits the order information to the quality control apparatus 1 at each collecting place, the producers, and the distributors via the communication network 43.

In the present embodiment, strawberries are illustrated as objects to be applied with an electromagnetic field by the quality control apparatus 1. The present embodiment is not limited thereto, and is widely applicable to fruits, such as grapes, melons, watermelons, mangoes, peaches, apples, pears, bananas, oranges, grapefruit, mandarin oranges, blueberries, cranberries, and cherries, for example. The quality control apparatus 1 of the present embodiment is also widely applicable not only to the fruits but also to vegetables, grains, beans, mushrooms and the like.

In the present embodiment, the quality control apparatus 1, which is the same apparatus as shown in FIG. 1, controls AC voltage and frequency, the AC voltage being the voltage applied to at least one electrode, for example, one pair or more pairs of electrodes 13 and 14, which generate at least one of an electric field, a magnetic field, an electromagnetic field, and electromagnetic waves to strawberries, to control the quality of strawberries, including at least one of taste, smell, mouthfeel, freshness, maturation degree, or aesthetic performance, to a predetermined state.

As for the shape of the electrode, a flat electrode can be used. The shape of the electrode in the present embodiment is not limited to the flat electrode as describe above, and electrodes of various forms can be adopted. Since various forms of electrodes can be adopted, the arrangement and size of the electrodes can freely be designed. For example, one pair of electrodes 13 and 14 can be disposed at both end edges of a conveyor in a width direction, the conveyor being used at the collecting place, the electrodes can be disposed in strawberry storage racks, and also a sheet-like electrode with a large area can be provided on the wall of warehouses so that boxed strawberries are collectively irradiated with electromagnetic waves.

By adjusting the time for applying voltage to the electrodes 13 and 14 when the quality control apparatus 1 of the present embodiment applies electromagnetic waves to strawberries, each quality indicator can be controlled to achieve the characteristics as shown by curves L1 to L4, the indicator including, for example, an aging index (AGEs score), hardness (Hardness (N)), a sugar content (Brix [%]), and an acidity (acidity [ml]) after elapse of predetermined period, for example, after 24 days, as shown in graphs of FIGS. 22(A) to 22(D). In this case, the voltage applied to the electrodes was AC voltage of 100 V with a frequency of 50 kHz. Here, data on the variety of strawberries called "Pearl White" after elapse of 24 days has been shown, and in the present embodiment, data on various strawberry varieties (hereinafter referred to as "electromagnetic wave application information") measured one day to n days (where n is a natural number) after irradiation with electromagnetic waves is stored in the storage unit 37. The electromagnetic wave application information may further include temperature conditions, and a large amount of data in which parameters such as AC voltage values and frequencies applied to the electrodes 13 and 14 are varied. When abnormal data is generated, such as when there are singularities in curves L1 to L4, the data is not used, and countermeasures, such as re-measurement, are taken. The electromagnetic wave application information stored in other quality control apparatuses 1a to In are also collected in the management server 40 and stored in the database 43, and so these pieces of information are available for controlling electromagnetic waves applied to strawberries in each quality control apparatus. When a plurality of data with the same condition are obtained, the data are analyzed after performing statistical processing such as using average values. However, in this case, quality characteristic data on strawberries may differ depending on, for example, seasonal and temperature conditions, and it is necessary, therefore, to pay attention to the data measurement conditions in the statistical processing.

On the right side of FIG. 22, an example of an input screen of the PC 31 by the quality control apparatus 1 of the present embodiment is shown. When an order of, for example, "delivery of 48 packs of Peal White on March 25" is received from a certain supermarket on March 1 at a target collecting place, order information including variety, harvest date, delivery date, and quantity, such as "Pearl White" as variety, "March 25" as delivery date, and "48 packs" as quantity, is input into the control unit 36 based on the input from the input screen of the PC 31. Alternatively, the order information may be input directly into the control unit 36 via the communication network 45. In the order information, input of variety, delivery date, and quantity is essential. Information on stocks produced by each producer or production plans (hereinafter referred to as "stock information") are collected in the management server 40 and stored in the database 43. For example, when harvest date is not specified as shown in FIG. 22, the stock information is used to automatically select strawberries that match the delivery date.

The order information includes variety, harvest date, delivery date, and quantity, and also includes information on AGEs, hardness, a sugar content, and an acidity, each consisting of three values of "high", "intermediate", and "low". For example, FIG. 22 shows an example where AGEs "intermediate", hardness "low", a sugar content "intermediate", and an acidity "high" are selected. Although the example of setting three levels has been described here, the present embodiment is not limited to this, and two levels, or four or more levels may be adopted, for example. For example, in addition to "high", "intermediate", and "low", "No selection" may be included, and when "No selection" is set, the pertinent parameter item is not considered during arithmetic calculation.

Once variety, harvest date, delivery date, quantity, AGEs, hardness, a sugar content, and an acidity are set, the control unit 36 calculates the stock of the strawberries conforming to the setting and the conditions of the electromagnetic field applied to the strawberries, using the stock information and the electromagnetic field application information stored in the database 43. Specifically, for example, the stock of Pearl White that satisfies the quantity is selected as shown in FIG. 22, and the electromagnetic field application time conforming to AGEs "intermediate", hardness "low", a sugar content "intermediate, and an acidity "high" is calculated. For example, under the condition of 24 days after electric field application, electric field application time of 40 seconds is obtained. In the collecting place, a distribution plan is made so that an electromagnetic field is applied to the selected stock of Pearl White from the electrodes 13 and 14 of the quality control apparatus 1 of the present embodiment for the calculated time of 40 seconds, and then the strawberries are delivered to the ordered supermarket on March 25 that is the delivery data 24 days after. Note that the condition of 24 days after the electric field application is merely an example, and the range of allowable days is determined based on the stock information, distribution conditions, storage conditions and the like of strawberries. In terms of storage conditions, it has been confirmed that the storage period of strawberries after application of electromagnetic waves by the quality control apparatus 1 of the present embodiment is significantly expanded, and strawberries can be stored for 30 days or more depending on, for example, the storage conditions.

Calculation of the electromagnetic field application time in the control unit 36 is particularly limited, and fuzzy inference can be used, for example. A membership function is set to assign "low," "intermediate," and "high" to AGEs, hardness, a sugar content, and an acidity, and as a consequent part of the fuzzy rule, the electromagnetic field application time is set to "short (20 seconds)", "standard (40 seconds)", "long (80 seconds)", and "very long (240 seconds)" . The management server 40 automatically generates fuzzy rules (IF-THEN rules) based on the electromagnetic field application information stored in the database 43. The conditions of AGEs, hardness, a sugar content, and an acidity may also be weighted.

In calculation of the electromagnetic field application time in the control unit 36, machine learning can be used. A learning model is calculated in the management server 40 by training using deep learning based on the information stored in the database 43 and information collected in each quality control apparatus, with order information used as input, and stocks corresponding to orders and electromagnetic field application conditions (application time, voltage value, frequency or the like of application voltage) used as output. The control unit 36 uses the learning model trained in the management server 40, to calculate the stock and the electromagnetic field application condition corresponding to an order based on the order information.

An object detection unit 32 can acquire an image signal of the strawberries that are targets of electromagnetic field application, and detect the type, condition, size or the like of the strawberries through image recognition. This makes it possible to apply an electromagnetic field suitable for the target strawberries. In order to acquire electromagnetic field application information, it is necessary to track down strawberries to which the electromagnetic field has been applied, along with the electromagnetic field application conditions, and performs data management. By attaching tracking information, such as barcodes, to strawberry packs, management of the electromagnetic field application information and traceability during distribution can be improved. AGEs, hardness, a sugar content, and an acidity are measured to acquire the electromagnetic field application information, and the measurement data are stored in the storage unit 37 together with the electromagnetic field application conditions. The electromagnetic field application information is further collected by the management server 40, stored in the database 43, and managed for use in each of the quality control apparatuses 1 and 1a to 1n.

[Fourth embodiment]

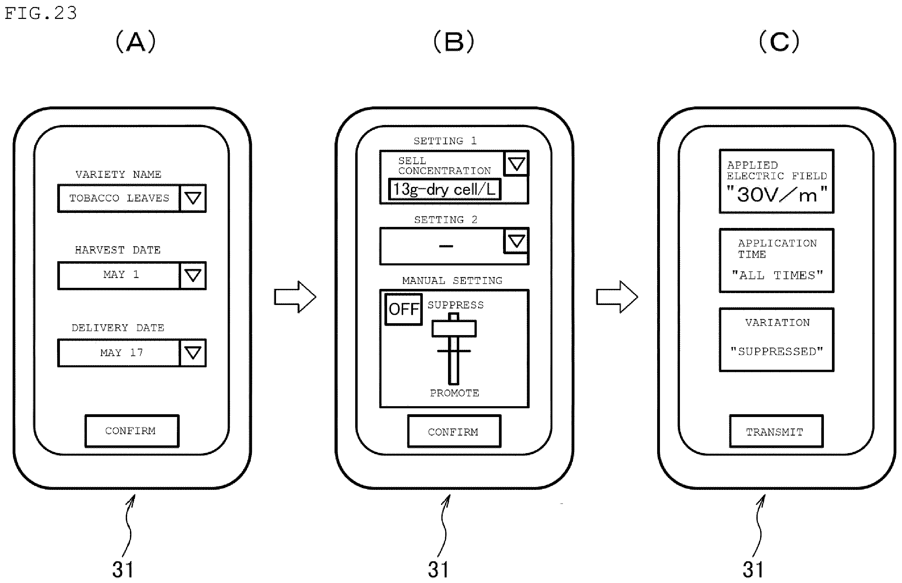

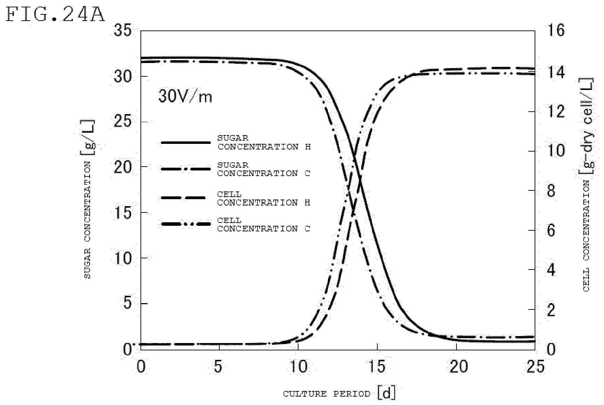

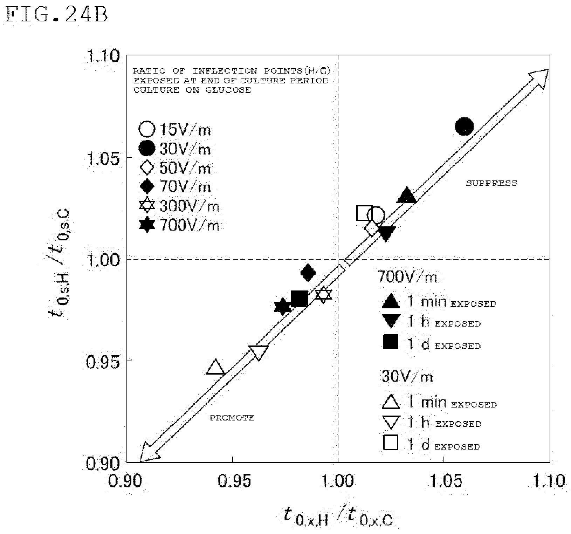

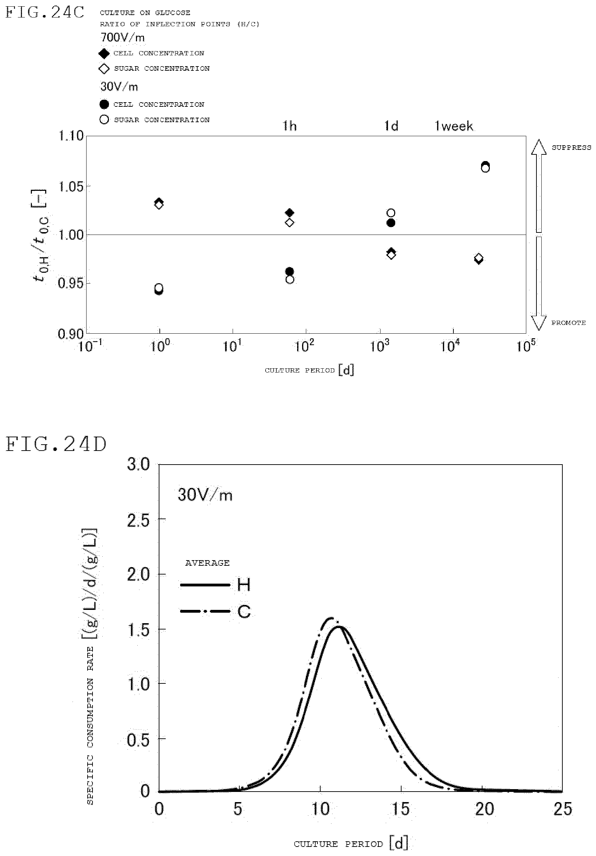

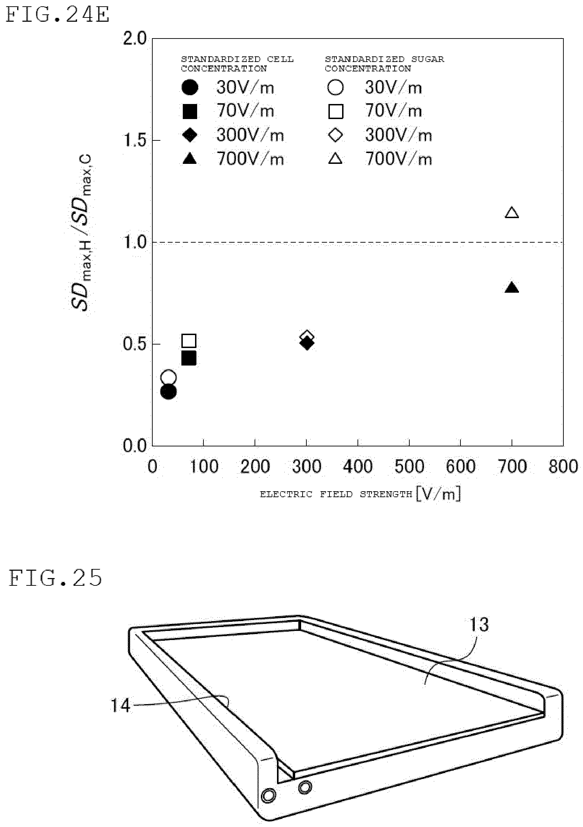

Next, the quality control apparatus 1 according to a fourth embodiment will be described with reference to FIG. 23 and FIG. 24, by taking as an example the quality control of tobacco leaves in which, for example, the degree of maturation is promoted, stopped, or delayed, and freshness is increased or maintained. For configurations that are the same as those in the first to third embodiments described above, the same reference numerals are used and the descriptions thereof are omitted.

Note that tobacco leaves are merely exemplary, and the present embodiment is not limited thereto, but is also applicable to other plants, herbs, fruits, vegetables, beans, mushrooms and the like. In the present embodiment, according to the relationship between sugar concentration and cell concentration data, promoting maturation refers to decrease in sugar concentration and increase in cell concentration, and promoting the degree of maturation is in opposite relation to increasing the freshness.

FIG. 23 illustrates quality control processing of tobacco leaves using the quality control apparatus 1 according to the present embodiment, in which examples of setting screens of a man-machine interface 31, such as a smartphone or a tablet terminal, are shown. FIG. 23(A) shows an input screen for variety name, harvest date, and delivery date of a target object. For example, variety name "tobacco leaves", harvest date "May 1", and delivery date "May 17" are input, and when the input is correct, "confirm" button is operated. Next, on the input screen of setting 1, setting 2 and manual setting shown in FIG. 23(B), for example, "13g-dry cell/L" is input in the setting 1 "cell concentration", and when the input is correct, "confirm" button is operated. The setting 2 is set to no input, and the manual setting is set to "OFF". However, to set manual setting, the manual setting is switched to "ON" and then the level of suppression and promotion is manually set. As an input item for the setting 1 and setting 2, the case of specifying cell concentration has been illustrated here, and the present embodiment is not limited to the case. For example, it is possible to specify a sugar concentration value, and to specify that the sugar concentration is lowered to a final concentration, the cell concentration is increased to a final concentration, an inhibition degree of a metabolic rate is increased, and a promotion degree of the metabolic rate is increased.

The setting information input in FIG. 23(A) and FIG. 23(B) is input to the control unit 36 of the quality control apparatus 1. When the setting information is input, the control unit 36 calculates the conditions of an electromagnetic field applied to a target object based on the control information stored in the storage unit 37, and displays, on the man-machine interface 31 as shown in FIG. 23(C), the information on the electromagnetic field applied to the object from the electrodes. In FIG. 23(C), applied electric field "30 V/m", application time "all times", and variation "suppressed" are displayed, for example. To control the quality control apparatus 1 under the conditions, transmit button is operated. When the transmit button is operated, the control unit 36 outputs a control command to the current voltage control unit 33 to apply an electromagnetic field from the electrodes 13 and 14 to an object according to the calculated conditions, and the current voltage control unit 33 controls the current voltage application unit 11 based on the control command.

The example in FIG. 23 shows an example where order information is input from the man-machine interface 31, and it is also possible for an orderer to input order information from the PCs 31a to 31n. In addition, after collecting the order information from each orderer in the management server 40, the order information may be transmitted to the control unit 36 of the corresponding quality control apparatus 1.

The electromagnetic field application information stored in the storage unit 37 is used for calculation of the electromagnetic field application conditions in the control unit 36. FIG. 24A to FIG. 24E illustrate some data from a wide variety of electromagnetic field application information. These data show data obtained by culturing tobacco BY-2 (Nicotiana tabacum cv. Bright Yellow No.2) cells as tobacco leaves. In a culture method, a subculture was first performed with sucrose as a stabilizer for about 2 weeks, and after washing, a main culture was performed with glucose or the like as a medium. The culture conditions were swirling at 130 rpm in a dark place at 27°C. FIG. 24A to FIG. 24E show data related to a main culture period, and sugar concentration and cell concentration were detected by sampling from the medium with lapse of days. Although detection of sugar concentration was not particularly limited, the sugar concentration was detected by calculation from absorbance of the infrared spectrum, and the cell concentration was calculated from turbidity at 600 nm. Sugar concentration and cell concentrations were detected for the cells applied with an electromagnetic field under predetermined electromagnetic field application conditions during a main culture and for the cells without application of the electromagnetic field.

FIG. 24A illustrates control data for sugar concentration and cell concentration in the quality control apparatus 1. FIG. 24A is a graph in the case where an electric field of 30 V/m was applied to tobacco leaves from the electrodes 13 and 14 over the entire period of the culture period, in which measured data of sugar concentration and cell concentration were approximated by a Boltzmann function. A sugar concentration H (straight line) is a graph of sugar concentration under application of an electric field, a sugar concentration C (single-dotted line) is a graph of sugar concentration when an electric field is not applied (control), a cell concentration H (broken line) is a graph of cell concentration under application of an electric field, and a cell concentration C (double-dotted line) is a graph of cell concentration when an electric field is not applied (control). FIG. 24A indicates that when an electric field of 30 V/m is applied to tobacco leaves from the electrodes 13 and 14 of the quality control apparatus of the present embodiment, decrease in sugar concentration is delayed and increase in cell concentration is delayed as compared with when the electric field is not applied. In FIG. 24A, the cell concentration is 13g-dry cell/L when the culture period is 16 days under application of an electric field of 30 V/m. Therefore, in the case of the order information in FIG. 23, applied electric field of "30 V/m" and application time of "all times" are calculated as the electromagnetic field application conditions in the control unit 36.

FIG. 24B illustrates control data for growth promotion and inhibition for each exposure time (electromagnetic field application time) in the quality control apparatus 1. Depending on the electromagnetic field application conditions when an electromagnetic field is applied to tobacco leaves from the electrodes 13 and 14 of the quality control apparatus 1 of the present embodiment, suppression and promotion of the degree of maturation of tobacco leaves can be controlled. When a culture period $t_{O,s,H}$ corresponds to an inflection point of the sugar concentration curve under the application of electromagnetic waves, a culture period $t_{O,s,C}$ corresponds to an inflection point of the sugar concentration curve without application of electromagnetic waves, a culture period $t_{O,x,H}$ corresponds to an inflection point of the cell concentration curve under the application of electromagnetic waves, and a culture period $t_{O,x,C}$ corresponds to an inflection point of the cell concentration curve without application of electromagnetic waves, a vertical axis of FIG. 24B represents a ratio $t_{O,s,H}/t_{O,s,C}$ of the inflection points of the sugar concentration curves with or without the application of voltage, while a horizontal axis represents a ratio $t_{O,x,H}/t_{O,x,C}$ of the inflection points of the cell concentration curves with or without the application of voltage. This means that as plots are more on the upper right, suppression is higher, while the plots are more on the lower left, the promotion is higher. Plots include the case where the level of an electric field applied over the entire culture period is 15 V/m, 30 V/m, 50 V/m, 70 V/m, 300 V/m, or 700 V/m, the case where the period of applying an electric field of 30 V/m is 1 min, 1 h, or 1 d, or the case where the period of applying an electric field of 700 V/m is 1 min, 1 h, or 1 d. Although the culture period is not particularly limited, the culture period was set to, for example, 25 days, and a predetermined electric field was applied for each electric field application period immediately after the start of the culture. Using this data, the application conditions of electromagnetic waves can be obtained to adjust the degree of increasing the suppression or increasing the promotion of the maturation degree of tobacco leaves.

FIG. 24C illustrates control data for growth promotion and inhibition over a culture period in the quality control apparatus 1. In FIG. 24C, a horizontal axis represents an exposure period (electric field application time, unit: min) when an electric field of 30 V/m is applied to the electrodes 13 and 14. Although the culture period is not particularly limited, the culture period was set to, for example, 25 days, and a predetermined electric field was applied for each electric field application period immediately after the start of the culture. A vertical axis represents $t_{O,H}/t_{O,C}$. Plots of a white circle each represent a ratio of inflection points of the sugar concentration curve when an electric field of 30 V/m was applied, plots of a black circle each represent a ratio of inflection points of the cell concentration curve when an electric field of 30 V/m was applied, plots of a white square each represent a ratio of inflection points of the sugar concentration curve when an electric field of 700 V/m was applied, and plots of a black square each represent a ratio of inflection points of the cell concentration curve when an electric field of 700 V/m was applied. The graph of FIG. 24C shows that when the applied electric field is 30 V/m, both the sugar concentration characteristics and the cell concentration characteristics increase with an increase in the electric field application period. On the other hand, when the applied electric field is 700 V/m, both the sugar concentration characteristics and the cell concentration characteristics decrease with the increase of the electric field application period, the characteristics being opposite to the characteristics when the applied electric field is 30 V/m. Using these sugar concentration characteristics and cell concentration characteristics, the application conditions of electromagnetic waves can be obtained to adjust the degree of increasing the suppression or increasing the promotion of the maturation degree of tobacco leaves.

FIG. 24D illustrates control data for a specific consumption rate in the quality control apparatus 1 of the present embodiment. The specific consumption rate is the consumption rate divided by the cell concentration (Cx), which is the rate of sugar consumption per cell 1 [g-dry cell]. The consumption rate is sugar concentration Cswo differentiated by culture period t, which is expressed as $dCs/dt$. Therefore, the specific consumption rate is expressed as $(dCs/dt)/Cs$. The graph of a solid line H in FIG. 24D shows the specific consumption rate when an electric field of 30 V/m is applied to tobacco leaves from the electrodes 13 and 14 over the entire culture period, and the graph of a broken line C shows the specific consumption rate when an electric field is not applied. Comparison between the graph of the solid line H and the graph of the broken line C shows that the characteristics of the curves of both the graphs are similar and there is no change in glucose metabolism behaviors, whereas the culture period is delayed with the application of an electric field, so that the electric field application can delay the metabolic rate of tobacco leaves. With use of the characteristics shown in FIG. 24D, it becomes possible to control the glucose metabolism behavior using common data, since the glucose metabolism behavior is not affected by electromagnetic waves. FIG. 24D is an example where the culture period is 25 days, although the culture period is not particularly limited thereto.

FIG. 24E illustrates control data for suppressing variation in the quality control apparatus 1 of the present embodiment. FIG. 23(C) includes a control instruction for "suppressing" variation, and the data on variation can be obtained from the graph in FIG. 24E. FIG. 24E shows data on the ratio of standard deviations of sugar concentration or cell concentration when an electric field is applied to a large number of tobacco leaves over the entire culture period (25 days). In FIG. 24E, $SD_{max,H}$ is a standard deviation of sugar concentration or cell concentration when voltage of 30 V/m is applied, and $SD_{max,C}$ is a standard deviation of sugar concentration or cell concentration when voltage is not applied. A vertical axis represents values of $SD_{max,H}/SD_{max,C}$, and a horizontal axis represents the strength of the electric field applied to the electrodes 13 and 14. FIG. 24E indicates that the variation is suppressed regardless of the electric field strength, in all the plots except for the sugar concentration data when the electric field of 700 V/m is applied.

[Fifth embodiment]

The result of a sensory test by an experiment of applying an electromagnetic field to coffee beans using the quality control apparatus 1 of a fifth embodiment is shown. It is known that coffee beans deteriorate over time after roasting and that coffee beans lose their smell over time after grinding. The following two experiments show that the quality control apparatus 1 of the present embodiment can improve the quality of coffee and increase (rejuvenates) its freshness. In this sensory test, the test result is presented by Ryota Nakagawa (IMA Cafe), who is a coffee creator and an advanced coffee Meister certified by the Japan Specialty coffee Association (SCAJ).

<Experiment 1: Sensory test of coffee beans six days after grinding>

Coffee beans roasted and grounded six days before and then applied with an electromagnetic field by the quality control apparatus of the present embodiment, and the coffee beans not applied with an electromagnetic field were tasted and compared. In order to prevent variations due to extraction of coffee, coffee was extracted using a machine that could brew in the same way every time, such as coffee being poured in the same way in the same place with the same amount of hot water.

<Comments from evaluator about control (not applied with electromagnetic field) in experiment 1>

"The smell seems to be gone."
"It tastes OK, but something is missing."

<Comments from evaluator about coffee beans applied with electromagnetic field in experiment 1>

"The smell alone has already made a difference."
"The amount of information on the smell is clearly different."
"There is a large amount of information in terms of taste, flavor, and depth."
"Taste and flavor of coffee is firm and very delicious."
"I've never heard of a product that has a long lasting flavor of coffee in a powdered state, and that was surprising."

"I was honestly surprised about a clear difference when I compared the tastes myself."

The result of the experiment 1 indicates that the quality control apparatus 1 of the present embodiment can control the quality of coffee beans and controls to increase their freshness (rejuvenate them) by applying an electromagnetic field to coffee beans which has been stored for some time after grinding.

<Experiment 2: Sensory test of coffee beans one years after roasting>

Coffee beans roasted one years or more before and then grounded and applied with an electromagnetic field for one hour by the quality control apparatus of the present embodiment, and the coffee beans not applied with an electromagnetic field were tasted and compared. In order to prevent variations due to extraction of coffee, coffee was extracted using a machine that could brew in the same way every time, such as coffee being poured in the same way in the same place with the same amount of hot water. Note that an electromagnetic field may be applied to coffee beans before grinding.

<Comments from evaluator about control (not applied with electromagnetic field) in experiment 2>

"Deterioration odor is strong while the flavor of coffee is weak."

"(As for taste) the deterioration odor is so strong that is hard to drink the coffee, and the smell of coffee is felt to be gone."

<Comments from evaluator about coffee beans applied with electromagnetic field in experiment 2>

"The smell alone is a surprise. The deterioration odor is clearly weakened."

"I can feel the original smell of coffee."

"I am surprised that there is still a difference (due to the application of an electromagnetic field) in the state of beans stored for a year."

"I was most surprised by the part that the deterioration odor in the smell is felt to be considerably weakened."

The result of the experiment 2 indicates that the quality control apparatus 1 of the present embodiment can control the quality of coffee beans and control to increase their freshness (rejuvenate them) by applying an electromagnetic field to coffee beans which has been stored for some time after roasting.

There are more than 800 coffee fragrance components, and among these fragrance components, there are about 60 fragrance components that have a strong influence on the flavor. When coffee beans are ground into powder, one coffee bean is ground into about 500 particles on average. Moreover, the porous nature of coffee beans increases the surface area of ground coffee beans. When the quality control apparatus of the present embodiment applies an electromagnetic field to the coffee beans, the moisture inside or on the surface of the coffee beans is micronized and arranged in a pearl-chain structure. When coffee is extracted, this micronized moisture acts as carriers that extract many of the fragrance components of the coffee beans from the inside of the coffee beans, so that more fragrant components can be extracted from the inside of the coffee beans, and thus, the application of electromagnetic waves can control the quality of coffee beans and control to increase the freshness.

[Sixth embodiment]

The result of a sensory test by an experiment of applying an electromagnetic field to old rice using the quality control apparatus 1 of a sixth embodiment is shown. In the present embodiment, old rice means rice that has been stored for one or more years after harvest. For example, old rice include rice stored for one year, two years, three years and the like after harvest. It is said that old rice has deterioration odor like old grains when it is cooked, and it is known that the odor is generated when the fat contained in a rice bran and the surface of the rice becomes old. A sensory test was carried out to compare the rice applied with an electromagnetic field for one hour while being immersed in water for one hour, and the rice not applied with an electromagnetic field, before the rice is cooked. The old rice cooked under the same cooking conditions, apart from whether or not an electromagnetic field was applied during immersion, was eaten and compared. As a result, when the quality control apparatus of the present embodiment applied an electromagnetic field to old rice, deterioration odor was reduced, and hardness and dryness were improved. Therefore, the quality control apparatus 1 of the present embodiment can control the quality of old rice and controls to increase its freshness by applying an electromagnetic field to old rice while the old rice is immersed in water.

When the quality control apparatus of the present embodiment applies an electromagnetic field to old rice during immersion before cooking, the moisture inside the rice is micronized and is also arranged in a pearl-chain structure, so that the moisture is spread evenly throughout the rice and puffed-up rice can be cocked. Moreover, when fine moisture in a rice bran portion or in a portion on the surface or near the surface of the rice vaporizes, it has the effect of removing the odor components which are caused by old fat.

[Seventh embodiment]

With reference to FIGS. 25 to 27, an example of applying the quality control apparatus 1 of a seventh embodiment of the present invention to thaw frozen food will be described. FIG. 25 is an external perspective view of a food thawing apparatus. The food thawing apparatus has the electrode 13 on a bottom surface and the other electrode 14 on a side surface.

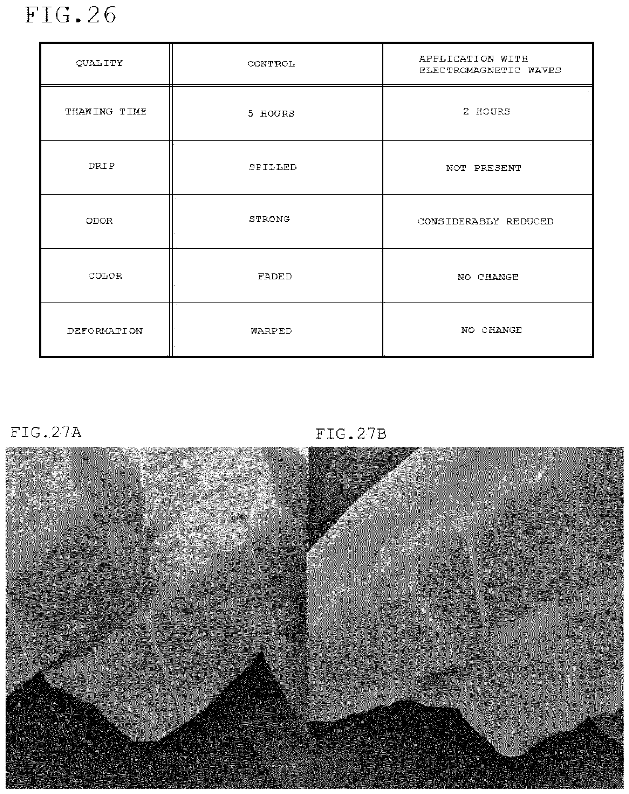

FIG. 26 shows an example of comparison between the case of applying an electromagnetic field using a food thawing apparatus of the present embodiment and the case of not applying an electromagnetic field when thawing a block of tune fillet.

FIG. 27 includes a photograph in the case of applying an electromagnetic field using the food thawing apparatus of the present embodiment on the right side and a photograph showing a comparative example on the left side. In the comparative example, the color of tuna is blackish and the meat of tuna is not firm. In contrast, when an electromagnetic field is applied using the food thawing apparatus of the present embodiment, the red color of the tuna remains clear, and the meat is firm and fresh.

[Eighth embodiment]

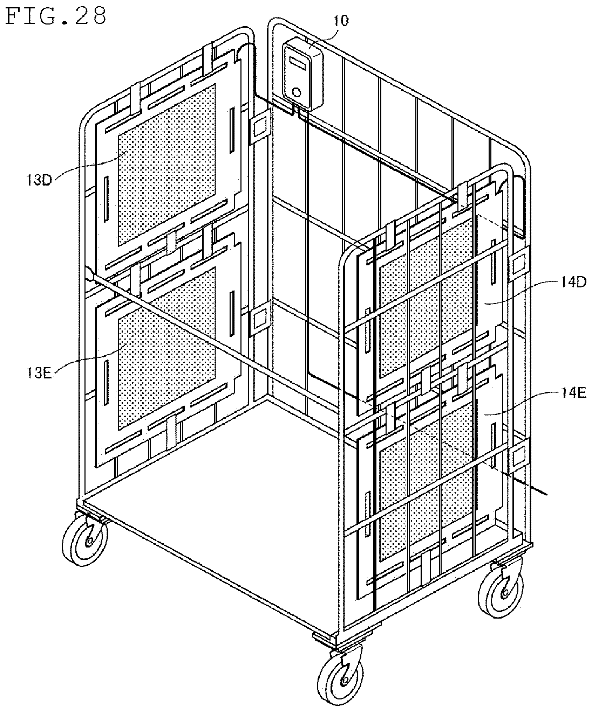

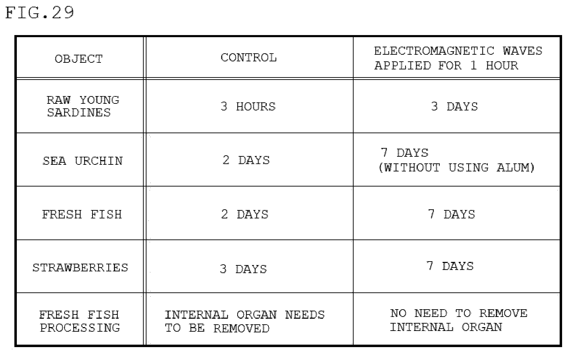

With reference to FIGS. 28 to 29, an example of applying the quality control apparatus 1 of an eighth embodiment of the present invention to a wagon will be described. FIG. 28 is a perspective view of an example where the quality control apparatus 1 is attached to a wagon. FIG. 29 shows the result of comparison between the case of applying electromagnetic waves using the quality control apparatus 1 of the present embodiment and the case of a comparative example (control).

[Ninth embodiment]

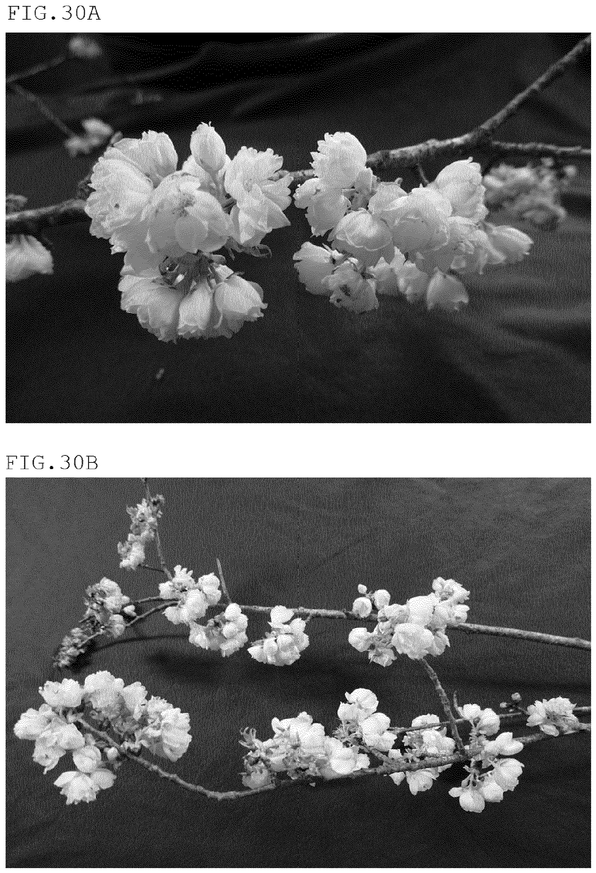

With reference to FIG. 30, an example of applying the quality control apparatus 1 of a ninth embodiment of the present invention to preservation of cherry blossoms. FIG. 30 shows photographs of double cherry blossoms bloomed at the end of March and stored in a refrigerator at 0°C for three and a half months. The quality control apparatus 1 of the present embodiment applied an electromagnetic field, and it was found that the freshness of the cherry blossoms was maintained in the blooming state even after the elapse of three and a half months.

[Tenth embodiment]

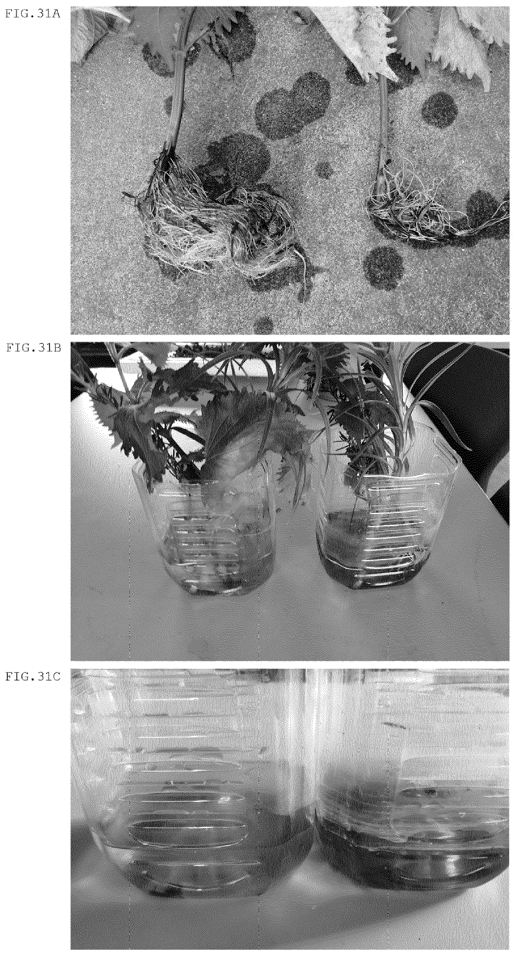

With reference to FIG. 31, an example of applying the quality control apparatus 1 of a tenth embodiment of the present invention to cultivation of perilla will be described. An experiment of hydroponic cultivation of perilla was performed by putting tap water into containers made by cutting off an upper portion of empty PET bottles. FIG. 31 shows the growth degree and the turbidity of water observed when the same size amounts of perilla were cultivated at normal temperature for two months. FIG. 31A is a photograph showing the growth of perilla roots after two months. FIG.31B is a photograph showing the cultivation state of perilla. FIG. 31C is a photograph showing the turbidity of water in the containers after two months of cultivation of perilla. In each photograph, the left photograph shows the case of applying an electromagnetic field by the quality control apparatus of the present embodiment, and the right photograph shows the case without application of an electromagnetic field. As the electromagnetic field application conditions, AC voltage of 100 V with a frequency of 50 kHz was applied to a pair of electrodes, and the containers were interposed between the pair of electrodes at all times to constantly apply an electromagnetic field to perilla during the cultivation period.

FIG. 31A indicates that when an electromagnetic field is applied by the quality control apparatus of the present embodiment, the perilla roots grow better than the case of the comparative example. FIG. 31B indicates that when an electromagnetic field is applied by the quality control apparatus of the present embodiment, the perilla leaves also grow better than the case of the comparative example. As shown in FIG. 31C, as for the water turbidity after cultivation, water is black and turbid in the comparative example, whereas when an electromagnetic field is applied by the quality control apparatus of the present embodiment, the turbidity of water is suppressed and the transparency of water is high. It was also found that when an electromagnetic field is applied by the quality control apparatus of the present embodiment, sliminess of water is also suppressed as compared with the comparative example. As the results of the above experiment, in the case of applying an electromagnetic field using the quality control apparatus of the present embodiment, the growth of the roots and leaves of perilla leaves can be improved and the effect of suppressing the turbidity or sliminess of water is provided. The present embodiment is not limited to the cultivation of perilla, but is applicable to the cultivation of other plants as well. As in the case of the experiment, the growth state of plants is improved, and the effect of suppressing turbidity and sliminess of water is provided. In addition, in the present embodiment, liquid is not limited to water, and it is possible to suppress turbidity and sliminess of liquids other than water. Accordingly, when the present embodiment is applied to, for example, water pipes, fire prevention water tanks, water reservoirs, various water tanks, pipelines and the like, it becomes possible to maintain the state of the liquids in each facility in a clean state, for example, in the state without turbidity or sliminess, and to save the time and effort taken for maintenance such as cleaning.

[Eleventh embodiment]

When the quality control apparatus 1 of the present embodiment applies an electromagnetic field to an object as described before, the electromagnetic field acts on the moisture present inside or on the surface of the object, and makes it possible to prevent, suppress, or control moisture being rotten, moisture being turbid, color being turbid, algae growth, sliminess, rusting, molding or the like. By using these effects, the quality control apparatus 1 is applicable to such purposes as rust proofing, mold proofing, and corrosion prevention for water pipes, fire prevention water tanks, water reservoirs, various water tanks and the like, rust proofing for pipelines (e.g. oil pipelines), rust proofing for storage materials (e.g. metal products such as molds) in storage of materials, mold prevention, rust prevention, corrosion prevention, algae prevention for steel, wood, furniture, textiles, fabrics, leather, and all other materials, and cracking prevention for art works, paintings and the like.

[Experimental example 1] Effect of preventing water in vase from becoming slimy

The effect of the quality control apparatus of the present embodiment was confirmed by comparing a vase applied with an electromagnetic field by the quality control apparatus of the present embodiment and a vase not applied with an electromagnetic field in terms of the state of water in each vase, sliminess, turbidity, or other factors. The effects, as seen in the tenth embodiment described above, are also true in water pipes, fire prevention water tanks, water reservoirs, and various water tanks.

[Example 2] Rust prevention effect for iron plate material

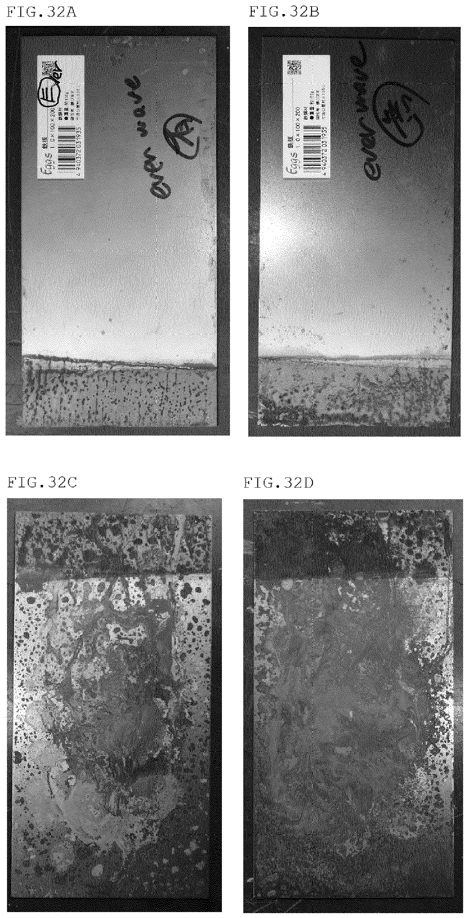

With reference to FIG. 32, an experimental example of rust prevention by the quality control apparatus 1 of the eleventh embodiment of the present invention will be described. FIG. 32 illustrates a rust prevention experiment according to the eleventh embodiment. Each iron plate used in the experiment is an identical magnetic iron plate material that is 100 mm wide, 200 mm long, and 1 mm thick. FIG. 32A shows an iron plate material that was soaked in bittern water of about 30 mm for 24 hours while being applied with an electromagnetic field by the quality control apparatus 1 of the eleventh embodiment of the present invention. The strength of the electromagnetic field is not particularly limited within the range of the above conditions. In FIG. 32A, AC voltage with a frequency of 50 kHz and a voltage of 100 V was applied between a pair of electrodes, and the iron plate material was disposed between the pair of electrodes. FIG. 32B shows an iron plate material identical in specifications to the iron plate material of FIG. 32A that was soaked in bittern water of about 30 mm for 24 hours. FIG. 32B is a comparative example that is not applied with an electromagnetic field. FIG. 32C shows the iron plate material of FIG. 31A that was removed from the bittern water and left for 7 days. FIG. 32D is a comparative example and shows the iron plate material of FIG. 32B that was removed from the bittern water and further left for 7 days.

It is clear that rust formation is suppressed more in the iron plate material shown in FIG. 32A than in the iron plate material shown in FIG. 32B. Similarly, it is clear that rust formation is suppressed more in the iron plate material shown in FIG. 32C than in the iron plate material shown in FIG. 32D. The experiment shows that the quality control apparatus 1 of the eleventh embodiment of the present invention can be used for rust prevention. The rust prevention effect of the quality control apparatus 1 of the eleventh embodiment of the present invention can be used to prevent rust in water pipes, pipelines (such as oil pipelines), storage materials (e.g., metal products such as molds) in storage of materials, and steel.

[Twelfth embodiment]

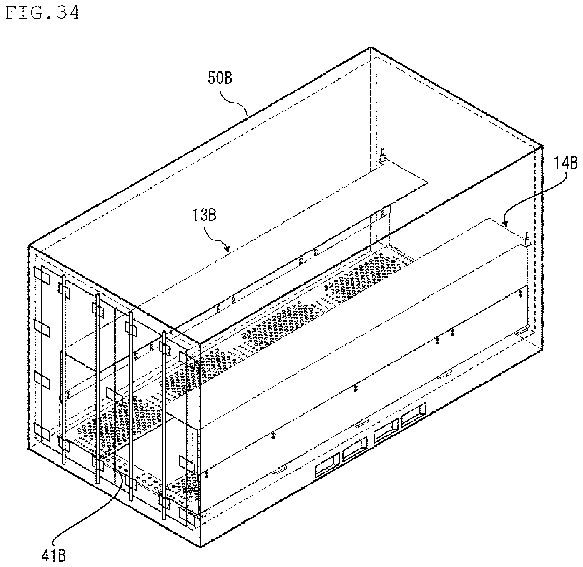

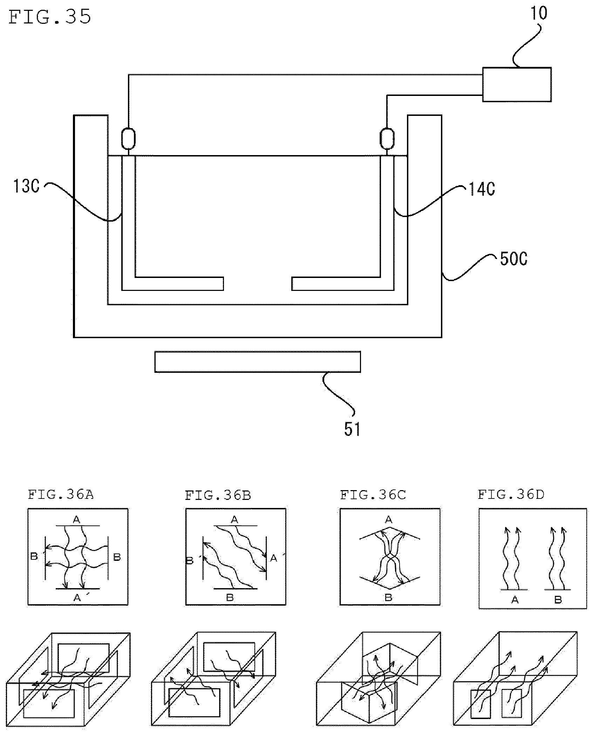

A quality control apparatus 1 according to a twelfth embodiment of the present invention will be described with reference to FIG. 33 to FIG. 41. FIG. 33 illustrates an example where electrodes 13A and 14A are provided to an existing refrigerator. FIG. 34 illustrates an example where the electrodes 13B and 14B are provided to an existing container. FIG. 35 illustrates an example where the electrodes 13C and 14C are provided to an existing fryer. For configurations that are the same as those in FIG. 1 to FIG. 24, the same reference numerals are used and the descriptions thereof are omitted. In the quality control apparatus according to the present embodiment, the electrodes 13 and 14 are specifically arranged by way of example. The configurations of the electrodes 13 and 14 are the same as those in the first to the sixth embodiments. The electrodes are disposed so as to adjust the direction of electromagnetic waves applied from the electrodes to an object, micronize the moisture inside or on the surface of the object while arranging the micronized moisture in a pearl-chain structure, and control the arrangement direction to a desired direction corresponding to the applied electromagnetic waves, so that the quality of the object can be controlled. For example, two pairs of electrodes can be disposed in the directions orthogonal to each other to generate an electromagnetic field of optional strength and direction in two-dimensional directions. For example, three pairs of electrodes can be disposed in the directions orthogonal to each other to generate an electromagnetic field of optional strength and direction in three-dimensional directions. In these cases, when an electromagnetic field of optional strength and direction is applied from the electrodes to the object in the two-dimensional or three-dimensional directions, the moisture inside or on the surface of the object is micronized in accordance with the shape of the object while the micronized moisture is arranged in a pearl-chain structure, and the arrangement direction is controlled to a desired direction, so that the quality of the object can be controlled.

In FIG. 33, the electrodes 13A and 14A are provided to an existing refrigerator. The electrodes 13A and 14A provided to the refrigerator serving as a housing 50A are formed of conductive plate members (for example, copper, iron, stainless steel, or aluminum) having a substantially L-shaped cross section, and have a plurality of holes (for example, polygonal such as hexagonal holes or circular holes) on bottom plates, although the electrodes are not limited to these. The electrodes 13A and 14A are connected to each other via a connector 41. For example, the connector 41 is a substantially rectangular thin plate made of an insulating material such as fluorine resin such as polytetrafluoroethylene (Teflon (registered trademark), for example). The refrigerator serving as the housing 50A includes various types of refrigerators such as a household refrigerator and a large commercial refrigerator.

The shape of the electrode is not limited to the substantially L shape, and may be a flat plate shape or a thin film shape, for example. In such a case, the electrodes 13A and 14A may be provided on inner walls of the refrigerator serving as the housing 50A to face each other. Alternatively, the electrodes 13A and 14A may be arranged to face the ceiling surface, the floor surface, or a tray of the refrigerator. Alternatively, the electrodes 13A and 14A may each be provided to the door-side surface and the back-side surface to face each other. The number of electrodes may be any number of at least 1, and may be 2, 4, or 6, for example.

When the electrodes 13A and 14A provided to the refrigerator serving as the housing 50A apply electromagnetic fields to food inside the refrigerator, the water particles as moisture such as free water contained in the food are attracted to each other to be in the pearl-chain structure. The water molecules thus regularly arranged do not bond with other components while being held in the object, whereby a food product can be maintained to be in a fresh and moist state.

In FIG. 34, electrodes 13B and 14B are provided to an existing container. The electrodes provided to the container serving as a housing 50B are formed of conductive plate members (for example, copper, iron, stainless steel, or aluminum) having a substantially L-shaped cross section or a substantially rectangular U-shaped cross section, and have a plurality of holes (for example, polygonal such as hexagonal holes or circular holes) on bottom plates, although the electrodes are not limited to these. The electrodes 13B and 14B are connected to each other via a connector 41B if necessary. For example, the connector 41B is a substantially rectangular thin plate made of an insulating material such as fluorine resin such as polytetrafluoroethylene (Teflon (registered trademark), for example). The container serving as the housing 50B, illustrated to be a relatively large container in FIG. 34, includes various types of container such as a small portable container and a large cargo container.

The shape of the electrode is not limited to the substantially L shape, and may be a flat plate shape or a thin film shape, for example. In such a case, the electrodes 13B and 14B may be provided on inner walls of the container serving as the housing 50B to face each other. Alternatively, the electrodes 13B and 14B may be arranged to face the ceiling surface and the floor surface of the container. Alternatively, the electrodes 13B and 14B may each be provided to the door-side surface and the back-side surface to face each other. The number of electrodes may be any number of at least 1, and may be 2, 4, or 6, for example.

When the electrodes 13B and 14B provided to the container serving as the housing 50B apply electromagnetic fields to food inside the container, the water particles as moisture such as free water contained in the food are attracted to each other to be in the pearl-chain structure. The water molecules thus regularly arranged do not bond with other components while being held in the object, whereby a food product can be maintained to be in a fresh and moist state. The container provided with the electrodes 13B and 14B may be provided in a refrigerating warehouse, a freezer warehouse, a freshness maintaining warehouse, or the like to be managed within a predetermined storage temperature range. Furthermore, the container provided with the electrodes 13B and 14B can maintain freshness of the food product, while being provided in a warehouse without a special freshness maintaining function.

In FIG. 35, electrodes 13C and 14C are provided in an oil tank of an existing fryer (housing 50C). The electrodes 13C and 14C provided to the fryer serving as the housing 50C are formed of conductive plate members (for example, copper, iron, stainless steel, or aluminum) having a substantially L-shaped cross section, and have a plurality of holes (for example, polygonal such as hexagonal holes or circular holes) on bottom plates, although the electrodes are not limited to these. The electrodes 13C and 14C have bottom surfaces provided along the bottom surface of the oil tank of the fryer. A heating unit 51 is provided on the outer side of the oil tank of the fryer, that is, on the outer side of the bottom surface of the oil tank in the example illustrated in FIG. 35. The electrodes 13C and 14C are each electrically connected to the controller 10, and the controller 10 applies the output voltage to the electrodes 13C and 14C.

When the electrodes 13C and 14C apply the electromagnetic field into the oil tank of the fryer, the interfacial tension of the oil/water interface is reduced, and the free water contained in the food is in the pearl-chain structure due to the electromagnetic field applied, so that the moisture is less likely to be separated from the food. With the moisture contained in the food thus controlled to suppress bumping, an effect of suppressing entrance of oil into the food can be obtained. Furthermore, with this effect, the food cooked can have superb mouthfeel and taste.

In the example described in the fourth embodiment, voltage and/or current is constantly applied to the electrodes 13 and 14. However, the present invention is not limited to this. The voltage and/or current may be applied only at a predetermined timing or only for a predetermined period of time, instead of being constantly applied, to the electrodes 13 and 14 in the housing 50 in which the object is placed. When the housing 50A is a refrigerator, for example, the freshness of food in the refrigerator can be constantly maintained with an electromagnetic field application pattern repeating applying the electromagnetic field to the food in the refrigerator from the electrodes 13A and 14A for an hour, applying no voltage and/or current to the electrodes 13A and 14A for 47 hours; and applying the electromagnetic field to the food in the refrigerator for another hour. Accordingly, the power consumption can be reduced. This is assumed to be the effect that application of the electromagnetic field to the food in the refrigerator by the electrodes 13A and 14A for about an hour results in water particles as moisture such as free water contained in the food being attracted to each other to be in the pearl-chain structure, which is to be maintained thereafter for a predetermined period of time without the electromagnetic field. The time during which the electromagnetic field is applied to food in the refrigerator by the electrodes 13A and 14A and the time during which no voltage and/or current is applied to the electrodes 13A and 14A thereafter can be set as appropriate based on the type and the state of the food in the refrigerator, storage temperature/humidity, and the like. A period during which the electromagnetic field is applied to food in the refrigerator may be set at a timing when a new food product is placed in the refrigerator. The placement of the new food product in the refrigerator can be detected by a camera inside the refrigerator or opening/closing of the door.

Also in the example where the housing 50B is a container, when the electrodes 13B and 14B apply the electromagnetic field to food in the container for about an hour, water particles as moisture such as free water contained in the food are attracted to each other to be in the pearl-chain structure. Once the pearl-chain structure of the water molecules is achieved, this state is maintained for a predetermined period of time even in a state where the electromagnetic field is no longer applied. Thus, by providing, after the period during which the electromagnetic field is applied to the food in the container by the electrodes 13B and 14B, a predetermined period during which no electromagnetic field is applied, and again the period during which the electromagnetic field is applied, the freshness can be maintained with a reduced power consumption. When the power supply is a battery in particular, this reduced power consumption results in a longer freshness maintained period per charging. The electromagnetic field application period is not limited to an hour, and the no electromagnetic field application period can also be set as appropriate. These periods can be adjusted as appropriate based on the type and the state of an object in the container, storage temperature/humidity of the container, and the like. A period during which the electromagnetic field is applied to an object in the container may be set at a timing when a new object is placed in the container. The placement of a new object in the container can be detected by, for example, a camera in the container, a signal from the man-machine interface 31, information in a management database of a warehouse storing the container, and the like, for example.

For example, also in a case where the housing 50C is a fryer, the electromagnetic field does not need to be constantly applied into the oil tank of the fryer from the electrodes 13C and 14C. After a period during which the electromagnetic field is applied into the oil tank of the fryer from the electrodes 13C and 14C, a predetermined period during which no electromagnetic field is applied may be provided, followed by the period during which the electromagnetic field is applied again. Also in this case, the effects that the moisture contained in the food is controlled to suppress bumping to suppressed penetration of oil into the food and that the cooked food thus can have superb mouthfeel and taste can be maintained. The period during which the electromagnetic field is applied to the oil tank of the fryer and the period during which no electromagnetic field is applied can be set as appropriate based on the food cooked, the type of the oil, the temperature of the oil, and the like.

FIG. 36 to FIG. 41 illustrate examples of electrodes with various shapes. The shape, the arrangement, and the voltage application pattern of the electrodes according to the present embodiment are not limited to those in FIG. 1 to FIG. 41, and include modifications other than these and combinations of various embodiments. FIG. 36 illustrates an alternative embodiment of the shape, arrangement, and voltage application pattern of two pairs of electrodes A, A', B, and B' or a pair of electrodes A and B. In FIG. 36A, voltage is applied to each of the pair of flat plate electrodes A and A' facing each other and the pair of flat plate electrodes B and B' facing each other. In FIG. 36B, voltage is applied to each of the pair of flat plate electrodes A and A' provided on adjacent surfaces and the pair of flat plate electrodes B and B' provided on adjacent surfaces. In FIG. 36C, voltage is applied to bent electrodes A and B facing each other. In FIG. 36D, a flat plate electrode A and a flat plate electrode B are provided side by side on one side, and voltage is applied to the flat plate electrode A and the flat plate electrode B.

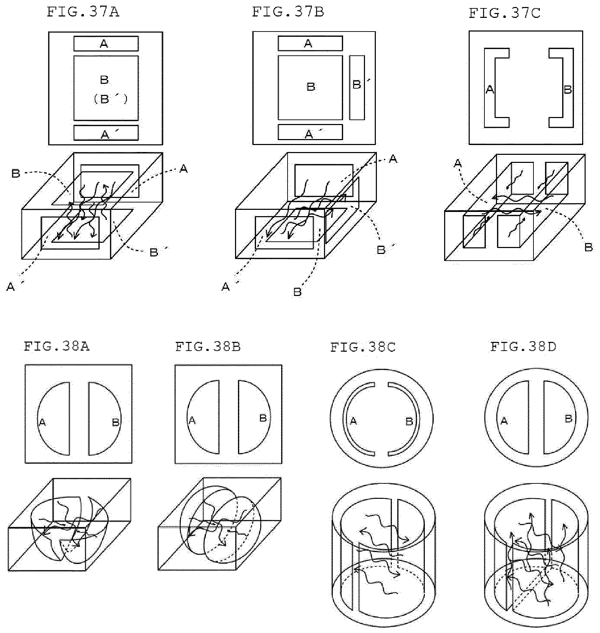

FIG. 37 illustrates yet another embodiment of the shape, arrangement, and voltage application pattern of two pairs of electrodes A, A', B, and B' or a pair of electrodes A and B. In FIG. 37A, voltage is applied to each of a pair of flat plate electrodes A and A' facing each other and flat plate electrodes B and B' facing each other. In FIG. 37B, voltage is applied to each of a pair of flat plate electrodes A and A' facing each other and a pair of flat plate electrodes B and B' provided on adjacent surfaces. In FIG. 37C, voltage is applied to square U-shaped electrodes A and B facing each other.

FIG. 38 illustrates yet still another embodiment of shapes, arrangements, and voltage application patterns of a pair of curved electrodes A and B. In FIG. 38A, voltage is applied to electrodes A and B with a shape obtained by cutting a hemisphere in half. In FIG. 38B, voltage is applied to hemispherical electrodes A and B facing each other. In FIG. 38C, voltage is applied to a pair of electrodes A and B with shapes obtained by cutting a cylinder in half along the height direction. In FIG. 38D, voltage is applied to a pair of electrodes A and B with shapes obtained by cutting a bottomed cylinder in half along the height direction.

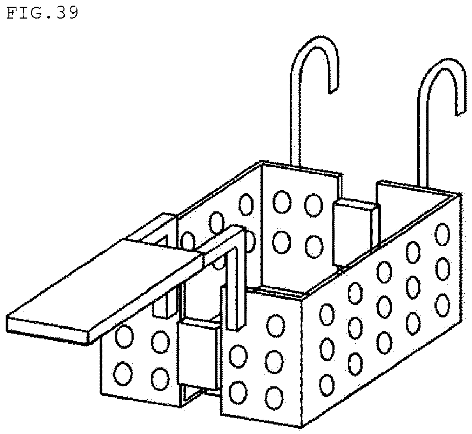

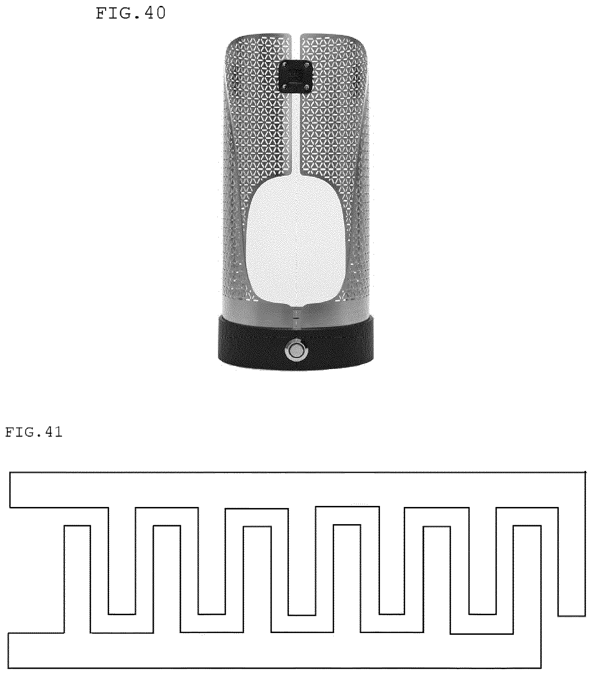

FIG. 39 illustrates an electrode used for a fryer. The electrode is divided in two in the width direction, and the electrodes divided are integrated while being electrically insulated from each other. Voltage is applied between this pair of electrodes. In FIG. 41, the pair of electrodes that have a shape along a cylindrical shape and have a plurality of notches forming a mesh are provided on a base member (a black portion on the bottom surface) while being insulated from each other. Voltage is applied between this pair of electrodes. FIG. 41 illustrates comb-shaped electrodes, in which a pair of comb-shaped electrodes are disposed so that the comb teeth are alternately arranged.

The respective embodiments described above are not intended to limit the present invention to these embodiments. The present invention is equally applicable to any other embodiments within the scope of the appended claims. The respective embodiments can be changed as appropriate and some of the respective embodiments can be used in combination as appropriate. For example, in an embodiment where a pair of electrodes are provided, the number of electrodes is not limited to one pair, but may be set as appropriate to be one as shown in FIG. 10A, or three or more as shown in FIG. 9 and FIG. 10B. As a specific example of each embodiment, AC voltage of 100 V with a frequency of 50 kHz is illustrated as an AC voltage component applied to the electrodes. However, this does not strictly mean 100 V or 50 kHz, but an error, which is assumed in consideration of setting error and measurement error, for example, an error of about 2 to 5%, is allowed. The value illustrated in each embodiment as the voltage applied to the electrodes is merely an example, and an AC component and/or DC component of the voltage can be set in accordance with a control target, control conditions or specifications, within the setting range described in the first embodiment.

Reference Signs List

| 1 | sound quality or quality control apparatus |
| 10 | controller |
| 11 | current voltage application unit |
| 13 to 29 | electrode |
| 30 | active oxygen |
| 31 | man-machine interface (PC) |
| 32 | object detection sensor |
| 33 | current voltage control unit |
| 35 | communication unit |
| 36 | control unit |
| 37 | storage unit |
| 38 | detection unit |
| 40 | management server |
| 41 | connector |
| 43 | database |
| 45 | communication network |
| 50 | housing |
| 51 | heating unit |

**Claims**

1. A sound quality or quality control apparatus comprising:

   at least one electrode; and
   a controller configured to control at least one of a voltage value, a current value, a frequency, or a phase of voltage or current applied to the electrode, wherein
   while an object is disposed to face the electrode, the object having liquid inside or on a surface and containing at least one of wood, leather, metal, an inorganic material, an organic material, an animal- or plant-derived material, or a composite material, at least one of a voltage value, a current value, a frequency, or a phase of the voltage or the current, having a DC component and/or an AC component to be applied to the electrode, is adjusted, and at least one of an electric field, a magnetic field, an electromagnetic field, electromagnetic waves, sound waves or ultrasonic waves generated by the electrode, is controlled to control a state of the liquid present inside or around the object that is disposed to face the electrode, so that a sound quality or quality of the object is controlled.

2. The sound quality or quality control apparatus according to claim 1, wherein
   at least one of controls is performed on the liquid present inside or on the surface of the object that is disposed to face the electrode, the controls including:

   (1) controlling in such a manner that the liquid turns into a state of reducing an interfacial tension of the liquid;
   (2) controlling in such a manner that the liquid turns into a bonding state with a pearl-chain structure;
   (3) controlling in such a manner that particles of the liquid are micronized; and
   (4) controlling arrangement of molecules of the liquid or particles of the liquid.

3. The sound quality or quality control apparatus according to claim 2, wherein the interfacial tension of the liquid in controlling in such a manner that the liquid turns into a state of reducing an interfacial tension of the liquid includes at least one of an interfacial tension between the liquid and another liquid, an interfacial tension between the liquid and a gas, or an interfacial tension between the liquid and a solid.

4. The sound quality or quality control apparatus according to any one of claims 1 to 3, wherein, with regard to the object that is disposed to face the electrode maintains, an effect of improving a property of the object is sustained for a predetermined period after the electric field, magnetic field, electromagnetic field, electromagnetic waves, sound waves, or ultrasonic waves generated by the electrode were removed.

5. The sound quality or quality control apparatus according to any one of claims 1 to 3, wherein the electrode is disposed in a storage container of the material.

6. The sound quality or quality control apparatus according to any one of claims 1 to 5, wherein, when the object is an animal- or plant-derived material, the controller applies at least one of voltage or current having at least one component of a DC component or an AC component to the electrode to control at least one sound quality or quality into a predetermined state, the sound quality or quality including a characteristic of frequency of the object, a distortion rate, an SN ratio, a noise, a dynamic range, sustain, sound vibration, attack sound, slipperiness of a string, a tone, a balance of sounds, a balance of masses, a speed, a flow, maneuver, a resistance with water, a mechanical resistance, a friction resistance, a fuel efficiency, durability, a range, accuracy, directional stability, hitting efficiency, impact transmission characteristics, a force and rotation given to a ball, a directivity of ball hitting, a hitting speed, a flying distance, hitting sensation, a throw distance, a mechanical resistance, contact with a snow surface, rigidity, strength, a vibration characteristic, softness, hardness, a cushioning property, feel against one's skin, aesthetic performance, a sugar content, an acidity, a hardness, an AGEs score, a sugar concentration, a cell concentration, smell, mouthfeel, freshness, a maturation degree, sliminess prevention, turbidity prevention, mold prevention, rust prevention, algae growth prevention, or cracking prevention, so as to control the sound quality or quality to be in a predetermined state.

7. The sound quality or quality control apparatus according to any one of claims 1 to 6, wherein at least one of voltage or current is controlled to increase or decrease continuously or stepwise, or to be at a predetermined value.

8. The sound quality or quality control apparatus according to any one of claims 1 to 7, wherein the controller is connected to at least any of a smartphone, a mobile phone, a tablet terminal, a mobile terminal, or a PC.

9. The sound quality or quality control apparatus according to any one of claims 1 to 8, wherein:

the controller is connected to a management server to be able to communicate therewith; and the management server performs at least one of updating or performing maintenance of a program of the controller, surveying or monitoring a use status of the controller, collecting or analyzing position information or environmental information on the controller, collecting or analyzing improvement request information from the controller, performing maintenance of the controller, collecting control information from the controller and/or information from a database, generating and providing learning model information for the controller, providing control information based on the learning model information, or providing control parameters of the controller.

10. A sound quality or quality control method comprising:

a step of disposing an object to face at least one electrode, the object having liquid inside or on a surface and containing at least one of wood, leather, metal, an inorganic material, an organic material, an animal- or plant-derived material, or a composite material; and
a controlling step of controlling, by a controller, at least one of a voltage value, a current value, a frequency, or a phase of voltage or current applied to the electrode, wherein
in the controlling step, at least one of a voltage value, a current value, a frequency, or a phase of the voltage or the current, having a DC component and/or an AC component to be applied to the at least one electrode, is controlled to cause at least one of an electric field, a magnetic field, an electromagnetic field, electromagnetic waves, sound waves or ultrasonic waves generated by the electrode to act, thereby controlling a state of the liquid present inside or around the object that is disposed to face the electrode, so that a sound quality or quality of the object is controlled.

11. A program wherein the controlling step in the sound quality or quality control method as set forth in claim 10 is executed by a computer.

FIG.1

40 — MANAGEMENT SERVER

DATABASE — 43

COMMUNICATION NETWORK

45

1a — QUALITY CONTROL APPARATUS

PC — 31a

1n — QUALITY CONTROL APPARATUS

PC — 31n

PC — 31

1

QUALITY CONTROL APPARATUS

CONTROLLER

COMMUNICATION UNIT — 35

10

37

STORAGE UNIT

CONTROL UNIT — 36

CURRENT VOLTAGE CONTROL UNIT — 33

CURRENT VOLTAGE APPLICATION UNIT — 11

38

DETECTION UNIT

OBJECT DETECTION UNIT — 32

13

14

FIG.2A

30

$H_2O$

H

O

FIG.2B

O

$H_2O$

H

FIG.3A

100μm

FIG.3B

100μm

FIG.4A

FIG.4B

EP 4 428 850 A1

FIG.5

FIG.6

FIG.7A

FIG.7B

FIG.7C

FIG.8A

FIG.8B

FIG.8C

FIG.9

10A

1A

16

13

15

14

10B

FIG.10A

17

10C

FIG.10B

18

19    20

10D

FIG.11A

21A    P        Q    21B

FIG.11B —— 50kHz(P)
        ---- 47kHz(Q)

FIG.11C

P+Q

FIG.12A

FIG.12B

FIG.12C

FIG.12D

FIG.13

FIG.14A

FIG.14B

FIG.14C

FIG.15A

FIG.15B

FIG.15C

FIG.15D

FIG.16

| ACOUSTIC GUITAR, 15 PERSONS | SUSTAIN IS BETTER BEFORE IRRADIATION | SUSTAIN IS BETTER AFTER IRRADIATION | VIBRATION OF SOUND IS BETTER BEFORE IRRADIATION | VIBRATION OF SOUND IS BETTER AFTER IRRADIATION | ATTACK SOUND OF NECK IS BETTER BEFORE IRRADIATION | ATTACH SOUND OF NECK IS BETTER AFTER IRRADIATION | STRING IS MORE SLIPPERY AND EASILY PLAYED BEFORE IRRADIATION | STRING IS MORE SLIPPERY AND EASILY PLAYED AFTER IRRADIATION |
|---|---|---|---|---|---|---|---|---|
| MUSICIAN 1 | — | ○ | — | ○ | — | ○ | — | ○ |
| MUSICIAN 2 | — | ○ | — | ○ | — | ○ | — | ○ |
| MUSICIAN 3 | — | ○ | — | ○ | — | ○ | — | ○ |
| MUSICIAN 4 | — | ○ | — | ○ | — | ○ | — | ○ |
| MUSICIAN 5 | — | ○ | — | ○ | — | ○ | — | ○ |
| MUSICIAN 6 | — | ○ | — | ○ | — | ○ | — | ○ |
| MUSICIAN 7 | — | ○ | — | ○ | — | ○ | — | ○ |
| MUSICIAN 8 | — | ○ | — | ○ | — | ○ | — | ○ |
| MUSICIAN 9 | — | ○ | — | ○ | — | ○ | — | ○ |
| MUSICIAN 10 | △ | △ | ○ | — | — | ○ | — | ○ |
| MUSICIAN 11 | — | ○ | — | ○ | — | ○ | — | ○ |
| MUSICIAN 12 | — | ○ | — | ○ | — | ○ | — | ○ |
| MUSICIAN 13 | — | ○ | — | ○ | — | ○ | — | ○ |
| MUSICIAN 14 | — | ○ | — | ○ | — | ○ | — | ○ |
| MUSICIAN 15 | — | ○ | — | ○ | — | ○ | — | ○ |
| HIGH EVALUATION | 0 | 14 | 1 | 14 | 0 | 15 | 0 | 15 |
| NOT SURE | 1 | 1 | — | — | — | — | — | — |
| HIGH EVALUATION RATE | — | 14/15 (93%) | — | 14/15 (93%) | — | 15/15 (100%) | — | 15/15 (100%) |

FIG.17

| ELECTRIC GUITAR, 15 PERSONS | SUSTAIN IS BETTER BEFORE IRRADIATION | SUSTAIN IS BETTER AFTER IRRADIATION | VIBRATION OF SOUND IS BETTER BEFORE IRRADIATION | VIBRATION OF SOUND IS BETTER AFTER IRRADIATION | ATTACK SOUND OF NECK IS BETTER BEFORE IRRADIATION | ATTACH SOUND OF NECK IS BETTER AFTER IRRADIATION | STRING IS MORE SLIPPERY AND EASILY PLAYED BEFORE IRRADIATION | STRING IS MORE SLIPPERY AND EASILY PLAYED AFTER IRRADIATION |
|---|---|---|---|---|---|---|---|---|
| MUSICIAN 16 | — | ◯ | — | ◯ | — | ◯ | — | ◯ |
| MUSICIAN 17 | — | ◯ | — | ◯ | — | ◯ | — | ◯ |
| MUSICIAN 18 | — | ◯ | — | ◯ | — | ◯ | — | ◯ |
| MUSICIAN 19 | ◯ | — | △ | △ | ◯ | — | — | ◯ |
| MUSICIAN 20 | — | ◯ | ◯ | — | — | ◯ | — | ◯ |
| MUSICIAN 21 | — | ◯ | — | ◯ | — | ◯ | — | ◯ |
| MUSICIAN 22 | — | ◯ | — | ◯ | — | ◯ | — | ◯ |
| MUSICIAN 23 | △ | △ | — | ◯ | — | ◯ | — | ◯ |
| MUSICIAN 24 | △ | △ | — | ◯ | — | ◯ | — | ◯ |
| MUSICIAN 25 | ◯ | — | △ | △ | ◯ | — | — | ◯ |
| MUSICIAN 26 | — | ◯ | — | ◯ | — | ◯ | — | ◯ |
| MUSICIAN 27 | — | ◯ | — | ◯ | — | ◯ | — | ◯ |
| MUSICIAN 28 | ◯ | — | — | ◯ | ◯ | — | — | ◯ |
| MUSICIAN 29 | △ | ◯ | — | ◯ | △ | △ | — | ◯ |
| MUSICIAN 30 | — | ◯ | — | ◯ | — | ◯ | — | ◯ |
| HIGH EVALUATION | 3 | 9 | 1 | 12 | 3 | 11 | 0 | 15 |
| NOT SURE | 3 | 3 | 2 | 2 | 1 | 1 | — | — |
| HIGH EVALUATION RATE | — | 9/15 (60%) | — | 12/15 (80%) | — | 11/15 (73%) | — | 15/15 (100%) |

FIG.18

EP 4 428 850 A1

| WOOD BASS, THREE PERSONS | SUSTAIN IS BETTER BEFORE IRRADIATION | SUSTAIN IS BETTER AFTER IRRADIATION | VIBRATION OF SOUND IS BETTER BEFORE IRRADIATION | VIBRATION OF SOUND IS BETTER AFTER IRRADIATION | ATTACK SOUND OF NECK IS BETTER BEFORE IRRADIATION | ATTACK SOUND OF NECK IS BETTER AFTER IRRADIATION | STRING IS MORE SLIPPERY AND EASILY PLAYED BEFORE IRRADIATION | STRING IS MORE SLIPPERY AND EASILY PLAYED AFTER IRRADIATION |
|---|---|---|---|---|---|---|---|---|
| MUSICIAN 31 | — | ○ | — | ○ | — | ○ | — | ○ |
| MUSICIAN 32 | — | ○ | — | ○ | — | ○ | — | ○ |
| MUSICIAN 33 | △ | △ | — | ○ | — | ○ | — | ○ |
| HIGH EVALUATION | 0 | 2 | 0 | 3 | 0 | 3 | 0 | 3 |
| NOT SURE | 1 | 1 | — | — | — | — | — | — |
| HIGH EVALUATION RATE | — | 2/3 (67%) | — | 3/3 (100%) | — | 3/3 (100%) | — | 3/3 (100%) |

FIG.19

| UKULELE, 8 PERSONS | SUSTAIN IS BETTER BEFORE IRRADIATION | SUSTAIN IS BETTER AFTER IRRADIATION | VIBRATION OF SOUND IS BETTER BEFORE IRRADIATION | VIBRATION OF SOUND IS BETTER AFTER IRRADIATION | ATTACK SOUND OF NECK IS BETTER BEFORE IRRADIATION | ATTACK SOUND OF NECK IS BETTER AFTER IRRADIATION | STRING IS MORE SLIPPERY AND EASILY PLAYED BEFORE IRRADIATION | STRING IS MORE SLIPPERY AND EASILY PLAYED AFTER IRRADIATION |
|---|---|---|---|---|---|---|---|---|
| MUSICIAN 34 | — | ○ | △ | △ | ○ | — | △ | △ |
| MUSICIAN 35 | — | ○ | — | ○ | — | ○ | — | ○ |
| MUSICIAN 36 | — | ○ | △ | △ | ○ | — | — | ○ |
| MUSICIAN 37 | △ | △ | ○ | — | ○ | — | — | ○ |
| MUSICIAN 38 | — | ○ | ○ | — | — | ○ | — | ○ |
| MUSICIAN 39 | ○ | — | — | ○ | — | ○ | — | ○ |
| MUSICIAN 40 | ○ | — | — | ○ | — | ○ | — | ○ |
| MUSICIAN 41 | — | ○ | — | ○ | — | ○ | — | ○ |
| HIGH EVALUATION | 2 | 5 | 2 | 4 | 3 | 5 | 0 | 7 |
| NOT SURE | 1 | 1 | 2 | 2 | 0 | 0 | 1 | 1 |
| HIGH EVALUATION RATE | — | 5/8 (63%) | — | 4/8 (50%) | — | 5/8 (63%) | — | 7/8 (88%) |

FIG.20

FIG.21

FIG.22

FIG.23

(A)

VARIETY NAME

TOBACCO LEAVES ▽

HARVEST DATE

MAY 1 ▽

DELIVERY DATE

MAY 17 ▽

CONFIRM

31

(B)

SETTING 1

SELL
CONCENTRATION ▽

13g-dry cell/L

SETTING 2

— ▽

MANUAL SETTING

OFF SUPPRESS

PROMOTE

CONFIRM

31

(C)

APPLIED
ELECTRIC FIELD

"30V／m"

APPLICATION
TIME

"ALL TIMES"

VARIATION

"SUPPRESSED"

TRANSMIT

31

FIG.24A

FIG.24B

FIG.24C
CULTURE ON GLUCOSE
RATIO OF INFLECTION POINTS (H/C)
700V/m
◆ CELL CONCENTRATION
◇ SUGAR CONCENTRATION
30V/m
● CELL CONCENTRATION
○ SUGAR CONCENTRATION

FIG.24D

FIG.24E

FIG.25

FIG.26

| QUALITY | CONTROL | APPLICATION WITH ELECTROMAGNETIC WAVES |
|---|---|---|
| THAWING TIME | 5 HOURS | 2 HOURS |
| DRIP | SPILLED | NOT PRESENT |
| ODOR | STRONG | CONSIDERABLY REDUCED |
| COLOR | FADED | NO CHANGE |
| DEFORMATION | WARPED | NO CHANGE |

FIG.27A

FIG.27B

FIG.28

FIG.29

| OBJECT | CONTROL | ELECTROMAGNETIC WAVES APPLIED FOR 1 HOUR |
|---|---|---|
| RAW YOUNG SARDINES | 3 HOURS | 3 DAYS |
| SEA URCHIN | 2 DAYS | 7 DAYS (WITHOUT USING ALUM) |
| FRESH FISH | 2 DAYS | 7 DAYS |
| STRAWBERRIES | 3 DAYS | 7 DAYS |
| FRESH FISH PROCESSING | INTERNAL ORGAN NEEDS TO BE REMOVED | NO NEED TO REMOVE INTERNAL ORGAN |

FIG.30A

FIG.30B

FIG.31A

FIG.31B

FIG.31C

FIG.32A

FIG.32B

FIG.32C

FIG.32D

FIG.33

FIG.34

FIG.35

FIG.36A

FIG.36B

FIG.36C

FIG.36D

EP 4 428 850 A1

FIG.37A

FIG.37B

FIG.37C

FIG.38A

FIG.38B

FIG.38C

FIG.38D

77

FIG.39

FIG.40

FIG.41

## INTERNATIONAL SEARCH REPORT

| International application No. |
|---|
| **PCT/JP2022/041430** |

**A.     CLASSIFICATION OF SUBJECT MATTER**

*G10G 7/00*(2006.01)i
FI:   G10G7/00

According to International Patent Classification (IPC) or to both national classification and IPC

**B.     FIELDS SEARCHED**

Minimum documentation searched (classification system followed by classification symbols)

G10G7/00; A23B9/00; A23F5/00; A23L3/00; A63B49/00-60/00; C02F1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | WO 2019/132046 A1 (EVERTRON HOLDINGS PTE LTD) 04 July 2019 (2019-07-04) paragraphs [0012]-[0189] | 1-11 |
| Y | | 1-11 |
| Y | JP 2020-204567 A (OTOMO, Yoshitaka) 24 December 2020 (2020-12-24) paragraphs [0001]-[0045] | 1-11 |
| A | WO 2019/097591 A1 (GOTO, Kanetaka) 23 May 2019 (2019-05-23) entire text | 1-11 |
| A | JP 1-160472 A (MATSUI, Zenichi) 23 June 1989 (1989-06-23) entire text | 1-11 |
| A | WO 2018/212068 A1 (EVERTRON HOLDINGS PTE LTD) 22 November 2018 (2018-11-22) entire text | 1-11 |
| A | JP 2019-24487 A (EVERTRON HOLDINGS PTE LTD) 21 February 2019 (2019-02-21) entire text | 1-11 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 January 2023** | **07 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/041430**

| Patent document cited in search report | | | Publication date (day/month/year) | Patent family member(s) | | | Publication date (day/month/year) |
|---|---|---|---|---|---|---|---|
| WO | 2019/132046 | A1 | 04 July 2019 | US | 2020/0329742 | A1 | |
| | | | | paragraphs [0061]-[0253] | | | |
| | | | | EP | 3733278 | A1 | |
| | | | | CN | 111526940 | A | |
| | | | | KR | 10-2021-0003714 | A | |
| JP | 2020-204567 | A | 24 December 2020 | WO | 2020/170505 | A1 | |
| WO | 2019/097591 | A1 | 23 May 2019 | CN | 110741519 | A | |
| JP | 1-160472 | A | 23 June 1989 | WO | 1989/005690 | A1 | |
| WO | 2018/212068 | A1 | 22 November 2018 | EP | 3627967 | A1 | |
| | | | | entire text | | | |
| | | | | CN | 111357391 | A | |
| | | | | CA | 3064170 | A1 | |
| JP | 2019-24487 | A | 21 February 2019 | US | 2019/0038077 | A1 | |
| | | | | entire text | | | |
| | | | | KR | 10-2019-0015071 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014142409 A
- JP 2005208659 A
- WO 2019132046 A
- JP 2002291949 A
- JP S64042069 A

**Non-patent literature cited in the description**

- **YASUYOSHI KODAMA.** Velocity and Damping of Ultrasonic Waves in Wood with Various Moisture Con- tents. *Materials (J. Soc. Mat. Sci., Japan),* February 1992, vol. 41 (461), 144-147